(19) Europäisches Patentamt / European Patent Office / Office européen des brevets

(11) **EP 2 164 712 B1**

(12) **EUROPÄISCHE PATENTSCHRIFT**

(45) Veröffentlichungstag und Bekanntmachung des Hinweises auf die Patenterteilung:
**10.08.2016  Patentblatt 2016/32**

(21) Anmeldenummer: **08784547.5**

(22) Anmeldetag: **25.06.2008**

(51) Int Cl.:
**B42D 25/324** *(2014.01)*      **B42D 25/342** *(2014.01)*

(86) Internationale Anmeldenummer:
**PCT/EP2008/005172**

(87) Internationale Veröffentlichungsnummer:
**WO 2009/000528 (31.12.2008 Gazette 2009/01)**

(54) **DARSTELLUNGSANORDNUNG**

REPRESENTATION SYSTEM

SYSTÈME DE REPRÉSENTATION

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **25.06.2007  DE 102007029203**

(43) Veröffentlichungstag der Anmeldung:
**24.03.2010  Patentblatt 2010/12**

(73) Patentinhaber: **Giesecke & Devrient GmbH 81677 München (DE)**

(72) Erfinder:
• **KAULE, Wittich**
  **82275 Emmering (DE)**
• **RAHM, Michael**
  **93155 Hemau (DE)**
• **RAUSCHER, Wolfgang**
  **81677 München (DE)**

(74) Vertreter: **Zeuner Summerer Stütz Patent- und Rechtsanwälte Partnerschaft Nußbaumstraße 8 80336 München (DE)**

(56) Entgegenhaltungen:
**WO-A-2006/029745      WO-A-2006/087138
GB-A- 2 362 493      US-A- 5 712 731**

Bemerkungen:
Die Akte enthält technische Angaben, die nach dem Eingang der Anmeldung eingereicht wurden und die nicht in dieser Patentschrift enthalten sind.

EP 2 164 712 B1

**Beschreibung**

Die Erfindung betrifft eine Darstellungsanordnung für Sicherheitspapiere, Wertdokumente, elektronische Anzeigeeinrichtungen oder andere Datenträger zur Darstellung eines oder mehrerer ebener Sollbilder.

Datenträger, wie Wert- oder Ausweisdokumente, aber auch andere Wertgegenstände, wie etwa Markenartikel, werden zur Absicherung oft mit Sicherheitselementen versehen, die eine Überprüfung der Echtheit des Datenträgers gestatten und die zugleich als Schutz vor unerlaubter Reproduktion dienen. Datenträger im Sinne der vorliegenden Erfindung sind insbesondere Banknoten, Aktien, Anleihen, Urkunden, Gutscheine, Schecks, hochwertige Eintrittskarten, aber auch andere fälschungsgefährdete Papiere, wie Pässe und sonstige Ausweisdokumente, Kreditkarten, Gesundheitskarten sowie Produktsicherungselemente, wie Etiketten, Siegel, Verpackungen und dergleichen. Der Begriff "Datenträger" schließt im Folgenden alle derartigen Gegenstände, Dokumente und Produktsicherungsmittel ein.

Die Sicherheitselemente können beispielsweise in Form eines in eine Banknote eingebetteten Sicherheitsfadens, eines Aufreißfadens für Produktverpackungen, eines aufgebrachten Sicherheitsstreifens, einer Abdeckfolie für eine Banknote mit einer durchgehenden Öffnung oder eines selbsttragenden Transferelements ausgebildet sein, wie etwa einem Patch oder einem Etikett, das nach seiner Herstellung auf ein Wertdokument aufgebracht wird.

Eine besondere Rolle spielen Sicherheitselemente mit optisch variablen Elementen, die dem Betrachter unter unterschiedlichen Betrachtungswinkeln einen unterschiedlichen Bildeindruck vermitteln, da diese selbst mit hochwertigen Farbkopiergeräten nicht reproduziert werden können. Die Sicherheitselemente können dazu mit Sicherheitsmerkmalen in Form beugungsoptisch wirksamer Mikro- oder Nanostrukturen ausgestattet werden, wie etwa mit konventionellen Prägehologrammen oder anderen hologrammähnlichen Beugungsstrukturen, wie sie beispielsweise in den Druckschriften

EP 0 330 733 A1 oder EP 0 064 067 A1 beschrieben sind.

Aus der Druckschrift US 5 712 731 A ist die Verwendung einer Moiré-Vergrößerungsanordnung als Sicherheitsmerkmal bekannt. Die dort beschriebene Sicherheitsvorrichtung weist eine regelmäßige Anordnung von im Wesentlichen identischen gedruckten Mikrobildern mit einer Größe bis zu 250 µm auf sowie eine regelmäßige zweidimensionale Anordnung von im Wesentlichen identischen sphärischen Mikrolinsen. Die Mikrolinsenanordnung weist dabei im Wesentlichen dieselbe Teilung wie die Mikrobildanordnung auf. Wird die Mikrobildanordnung durch die Mikrolinsenanordnung betrachtet, so werden in den Bereichen, in denen die beiden Anordnungen im Wesentlichen im Register stehen, für den Betrachter eine oder mehrere vergrößerte Versionen der Mikrobilder erzeugt.

Die prinzipielle Funktionsweise derartiger Moiré-Vergrößerungsanordnungen ist in dem Artikel "The moiré magnifier", M.C. Hutley, R. Hunt, R.F. Stevens and P. Savander, Pure Appl. Opt. 3 (1994), pp. 133-142, beschrieben. Kurz gesagt, bezeichnet Moiré-Vergrößerung danach ein Phänomen, das bei der Betrachtung eines Rasters aus identischen Bildobjekten durch ein Linsenraster mit annähernd demselben Rastermaß auftritt. Wie bei jedem Paar ähnlicher Raster ergibt sich dabei ein Moirémuster, das in diesem Fall als vergrößertes und gegebenenfalls gedrehtes Bild der wiederholten Elemente des Bildrasters erscheint.

Davon ausgehend liegt der Erfindung die Aufgabe zugrunde, die Nachteile des Standes der Technik zu vermeiden und insbesondere, eine Darstellungsanordnung anzugeben, die einen großen Spielraum bei der Gestaltung der zu betrachtenden Motivbilder bietet.

Diese Aufgabe wird durch die Darstellungsanordnung mit den Merkmalen der unabhängigen Ansprüche gelöst. Verfahren zum Herstellen solcher Darstellungsanordnungen, ein Sicherheitspapier sowie ein Datenträger mit solchen Darstellungsanordnungen sind in den nebengeordneten Ansprüchen angegeben. Weiterbildungen der Erfindung sind Gegenstand der Unteransprüche.

Nach einem ersten Aspekt der Erfindung enthält eine gattungsgemäße Darstellungsanordnung eine Rasterbildanordnung zur Darstellung eines ebenen Sollbildes, welches durch eine Bildfunktion f(x,y) gegeben ist, mit

- einem Motivbild, das in eine Mehrzahl von Zellen eingeteilt ist, in denen jeweils abgebildete Bereiche des Sollbilds angeordnet sind,

- einem Betrachtungsraster aus einer Mehrzahl von Betrachtungselementen zur Rekonstruktion des Sollbildes bei der Betrachtung des Motivbilds mithilfe des Betrachtungsrasters,

- wobei das Motivbild mit seiner Einteilung in eine Mehrzahl von Zellen eine Bildfunktion m(x,y) aufweist, die gegeben ist durch

$$m(x,y) = f\left(\begin{pmatrix} x \\ y \end{pmatrix}\right) + (A(x,y) - I) \cdot \left(\left(\left(\begin{pmatrix} x \\ y \end{pmatrix} + w_d(x,y)\right) \bmod W\right) - w_d(x,y) - w_c(x,y)\right) \cdot g(x,y)$$

$$\text{mit } w_d(x,y) = W \cdot \begin{pmatrix} d_1(x,y) \\ d_2(x,y) \end{pmatrix} \text{ und } w_c(x,y) = W \cdot \begin{pmatrix} c_1(x,y) \\ c_2(x,y) \end{pmatrix}$$

- wobei die Einheitszelle des Betrachtungsrasters durch Gitterzellenvektoren $w_1 = \begin{pmatrix} w_{11} \\ w_{21} \end{pmatrix}$ und $w_2 = \begin{pmatrix} w_{12} \\ w_{22} \end{pmatrix}$ beschrieben und in der Matrix $W = \begin{pmatrix} w_{11} & w_{12} \\ w_{21} & w_{22} \end{pmatrix}$ zusammengefasst ist,

- die Matrix $A(x,y) = \begin{pmatrix} a_{11}(x,y) & a_{12}(x,y) \\ a_{21}(x,y) & a_{22}(x,y) \end{pmatrix}$ ein gewünschtes Vergrößerungs- und Bewegungsverhalten des dargestellten Sollbilds beschreibt,

- der Vektor ($c_1(x,y)$, $c_2(x,y)$) mit $0 \le c_1(x,y)$, $c_2(x,y) < 1$ die relative Position des Zentrums der Betrachtungselemente innerhalb der Zellen des Motivbilds angibt,

- der Vektor ($d_1(x,y)$, $d_2(x,y)$) mit $0 \le d_1(x,y)$, $d_2(x,y) < 1$ eine ortsabhängige Verschiebung der Zellengrenzen im Motivbild darstellt, und

- $g(x,y)$ eine Maskenfunktion zur Einstellung der Sichtbarkeit des Sollbilds ist.

Im Rahmen dieser Beschreibung werden, soweit möglich, Skalare und Vektoren mit Kleinbuchstaben, Matrizen mit Großbuchstaben bezeichnet. Auf Pfeilsymbole zur Kennzeichnung von Vektoren wurde der übersichtlicheren Darstellung halber verzichtet.

Die erfindungsgemäße Darstellungsanordnung enthält eine Rasterbildanordnung, bei der ein Motiv (das Sollbild) einzeln und nicht notwendig als Array vor oder hinter der Bildebene zu schweben scheint. Das Sollbild bewegt sich beim Kippen des durch das übereinander angeordnete Motivbild und Betrachtungsraster gebildeten Sicherheitselements in durch die Vergrößerungs- und Bewegungsmatrix A vorgegebene Richtungen. Das Motivbild wird nicht photographisch, auch nicht durch Belichtung durch ein Belichtungsraster erzeugt, sondern mathematisch mit einem Modulo-Algorithmus konstruiert, wobei eine Vielzahl verschiedener Vergrößerungs- und Bewegungseffekte erzeugt werden können, die nachfolgend genauer beschrieben werden.

Bei dem oben genannten bekannten Moiré-Magnifier besteht das darzustellende Bild aus Einzelmotiven, die in einem Gitter periodisch angeordnet sind. Das durch die Linsen zu betrachtende Motivbild stellt eine stark verkleinerte Version des darzustellenden Bildes dar, wobei die jedem Einzelmotiv zugeordnete Fläche maximal etwa einer Linsenzelle entspricht. Aufgrund der Kleinheit der Linsenzellen kommen als Einzelmotive nur relativ einfache Gebilde infrage. Im Gegensatz dazu ist das Sollbild beim hier beschriebenen "Modulo-Mapping" im Allgemeinen ein Einzelbild, es muss sich nicht zwangsläufig aus einem Gitter periodisch wiederholter Einzelmotive zusammensetzen. Das Sollbild kann ein komplexes Einzelbild mit hoher Auflösung darstellen.

Nachfolgend wird der Namensbestandteil "Moiré" für Ausgestaltungen verwendet, in denen der Moiré-Effekt beteiligt ist, bei der Verwendung des Namensbestandteil "Modulo" ist ein Moiré-Effekt nicht notwendig beteiligt. Der Namensbestandteil "Mapping" weist auf beliebige Abbildungen hin, während der Namensbestandteil "Magnifier" darauf hinweist, dass nicht beliebige Abbildungen, sondern nur Vergrößerungen beteiligt sind.

Alle nachfolgend beschriebenen Varianten können mit zweidimensionalen Linsenrastern in Gitteranordnungen beliebiger niederer oder höherer Symmetrie oder in Zylinderlinsen-Anordnungen ausgeführt werden. Alle Anordnungen können auch für gekrümmte Flächen berechnet werden, wie grundsätzlich in der Druckschrift WO 2007/076952 A2 beschrieben, deren Offenbarungsgehalt insoweit in die vorliegende Anmeldung aufgenommen wird.

In einer bevorzugten Ausgestaltung sind die Betrachtungselemente des Betrachtungsrasters periodisch oder lokal periodisch angeordnet, wobei sich im letzteren Fall die lokalen Periodenparameter im Verhältnis zur Periodizitätslänge vorzugsweise nur langsam ändern. Die Periodizitätslänge bzw. die lokale Periodizitätslänge liegt vorzugsweise zwischen 3 $\mu$m und 50 $\mu$m, bevorzugt zwischen 5 $\mu$m und 30 $\mu$m, besonders bevorzugt zwischen etwa 10 $\mu$m und etwa 20 $\mu$m. Möglich ist auch eine abrupte Änderung der Periodizitätslänge, wenn diese zuvor über eine im Vergleich zur Periodizitätslänge große Strecke, beispielsweise für mehr als 20, 50 oder 100 Periodizitätslängen, konstant oder nahezu konstant gehalten wurde.

Die Betrachtungselemente können durch nicht-zylindrische Mikrolinsen oder Mikrohohlspiegel, insbesondere durch Mikrolinsen oder Mikrohohlspiegel mit einer kreisförmigen oder polygonal begrenzten Basisfläche gebildet sein, oder auch durch lang gestreckte Zylinderlinsen oder Zylinderhohlspiegel, deren Ausdehnung in Längsrichtung mehr als

250 μm, bevorzugt mehr als 300 μm, besonders bevorzugt mehr als 500 μm und insbesondere mehr als 1 mm beträgt. In weiteren bevorzugten Erfindungsvarianten sind die Betrachtungselemente durch Lochblenden, Schlitzblenden, mit Spiegeln versehene Loch- oder Schlitzblenden, asphärische Linsen, Fresnellinsen, GRIN-Linsen (Gradient Refraction Index), Zonenplatten, holographische Linsen, Hohlspiegel, Fresnelspiegel, Zonenspiegel oder andere Elemente mit fokussierender oder auch ausblendender Wirkung gebildet.

In einer bevorzugten Ausgestaltung ist vorgesehen, dass der Träger der Bildfunktion

$$f\left((A - I)\cdot\begin{pmatrix} x \\ y \end{pmatrix}\right)$$

größer ist als die Einheitszelle des Betrachtungsrasters W. Der Träger einer Funktion bezeichnet dabei in üblicher Weise die abgeschlossene Hülle des Bereichs, in dem die Funktion nicht Null ist.

Das dargestellte Sollbild weist in vorteilhaften Ausgestaltungen keine Periodizität auf, ist also eine Darstellung eines Einzelmotivs. Ist das Sollbild in anderen Ausgestaltungen periodisch, so weist es vorzugsweise eine Periodizität auf, die durch eine 2x2-Matrix P beschrieben wird, wobei die Periodizitäts-Einheitszelle ungleich (A-I) W ist.

In einer vorteilhaften Erfindungsvariante sind das Betrachtungsraster und das Motivbild der Darstellungsanordnung fest miteinander verbunden und bilden so ein Sicherheitselement mit beabstandet übereinander angeordnetem Betrachtungsraster und Motivbild. Das Motivbild und das Betrachtungsraster sind dabei mit Vorteil an gegenüberliegenden Flächen einer optischen Abstandsschicht angeordnet. Das Sicherheitselement kann insbesondere ein Sicherheitsfaden, ein Aufreißfaden, ein Sicherheitsband, ein Sicherheitsstreifen, ein Patch oder ein Etikett zum Aufbringen auf ein Sicherheitspapier, Wertdokument oder dergleichen sein. Die Gesamtdicke des Sicherheitselements liegt vorzugsweise unterhalb von 50 μm, bevorzugt unterhalb von 30 μm und besonders bevorzugt unterhalb von 20 μm.

Nach einer anderen, ebenfalls vorteilhaften Erfindungsvariante sind das Betrachtungsraster und das Motivbild der Darstellungsanordnung so an verschiedenen Stellen eines Datenträgers angeordnet, dass das Betrachtungsraster und das Motivbild zur Selbstauthentifizierung übereinanderlegbar sind und im übereinander gelegten Zustand ein Sicherheitselement bilden. Das Betrachtungsraster und das Motivbild sind insbesondere durch Biegen, Falten, Knicken oder Klappen des Datenträgers übereinanderlegbar.

Gemäß einer weiteren, ebenfalls vorteilhaften Erfindungsvariante ist das Motivbild von einer elektronischen Anzeigeeinrichtung angezeigt und ist das Betrachtungsraster zur Betrachtung des angezeigten Motivbilds fest mit der elektronischen Anzeigeeinrichtung verbunden. Statt mit der elektronischen Anzeigeeinrichtung fest verbunden zu sein, kann das Betrachtungsraster auch ein separates Betrachtungsraster sein, das zur Betrachtung des angezeigten Motivbilds auf oder vor die elektronische Anzeigeeinrichtung bringbar ist.

Im Rahmen dieser Beschreibung kann das Sicherheitselement also sowohl als permanentes Sicherheitselement durch ein fest miteinander verbundenes Betrachtungsraster und Motivbild gebildet sein, als auch durch ein räumlich getrennt vorliegendes Betrachtungsraster und ein zugehöriges Motivbild, wobei die beiden Elemente bei Übereinanderlegen ein temporär vorliegendes Sicherheitselement bilden. Nachfolgend beziehen sich Aussagen über das Bewegungsverhalten oder den visuellen Eindruck des Sicherheitselements sowohl auf fest verbundene permanente Sicherheitselemente als auch auf durch Übereinanderlegen gebildete temporäre Sicherheitselemente.

In einer vorteilhaften Erfindungsvariante ist vorgesehen, dass die Vergrößerungs- und Bewegungsmatrix A durch

$$A = \begin{pmatrix} a_{11} & a_{12} \\ a_{21} & a_{22} \end{pmatrix} = \begin{pmatrix} v_1\cdot\cos\phi_1 & v_2\cdot\cos\phi_2 \\ v_1\cdot\sin\phi_1 & v_2\cdot\sin\phi_2 \end{pmatrix}$$

gegeben ist, so dass sich das dargestellte Sollbild beim waagrechten Kippen des Sicherheitselements um eine vertikale Achse mit einer Geschwindigkeit $v_1$ in Richtung $\phi_1$ bezogen auf die x-Achse bewegt und beim senkrechten Kippen um eine horizontale Achse mit der Geschwindigkeit $v_2$ in Richtung $\phi_2$ bezogen auf die x-Achse bewegt. Dabei ist mit Vorteil $\phi_1$ ungleich 0° und ungleich 180° und/oder $\phi_2$ ist ungleich 90° und ungleich -90° und/oder $v_1$ ist ungleich $v_2$.

In einer vorteilhaften Ausgestaltung dieser Erfindungsvariante bewegt sich das Sollbild beim Kippen des Sicherheitselements unabhängig von der Kipprichtung stets in dieselbe Richtung.

Bei einer weiteren vorteilhaften Erfindungsvariante ist vorgesehen, dass in der Vergrößerungs- und Bewegungsmatrix $a_{11} = z_1/e$ und $a_{22} = z_2/e$ ist, wobei e den effektiven Abstand des Betrachtungsrasters vom Motivbild bezeichnet, so dass das Sollbild bei Betrachtung mit Augenabstand in x-Richtung in einer Tiefe bzw. Höhe $z_1$ zu sehen ist und bei Betrachtung der um 90° gedrehten Anordnung mit Augenabstand in y-Richtung in einer Tiefe bzw. Höhe $z_2$

zu sehen ist. In dem effektiven Abstand e des Betrachtungsrasters vom Motivbild sind die Linsendaten und die Brechzahl des Mediums zwischen Linsenraster und Motivraster berücksichtigt.

Insbesondere kann sogar vorgesehen sein, dass die Vergrößerungs- und Bewegungsmatrix A gegeben ist durch

$$A = \begin{pmatrix} \dfrac{z_1}{e} & \dfrac{z_2}{e} \cdot \cot\phi_2 \\ \dfrac{z_1}{e} \cdot \tan\phi_1 & \dfrac{z_2}{e} \end{pmatrix}$$

so dass

- das Sollbild bei Betrachtung mit Augenabstand in x-Richtung in einer Tiefe bzw. Höhe $z_1$ zu sehen ist und sich beim waagrechten Kippen der Anordnung bzw. bei waagrechter Änderung der Betrachtungs-richtung in Richtung $\phi_1$ bezogen auf die x-Achse bewegt, und

- das Sollbild bei Betrachtung der um 90° gedrehten Anordnung mit Augenabstand in y-Richtung in einer Tiefe bzw. Höhe $z_2$ zu sehen ist und sich beim senkrechten Kippen der Anordnung bzw. bei senkrechter Änderung der Be-trachtungsrichtung in Richtung $\phi_2$ bezogen auf die x-Achse bewegt.

In vorteilhaften Ausgestaltungen ist die Vergrößerungs- und Bewegungsmatrix A ortsunabhängig. Sie beschreibt in diesem Fall eine lineare Abbildung, so dass die Mehrzahl von Zellen des Motivbilds jeweils linear abgebildete Bereiche des Sollbilds enthalten. Insbesondere bei den eben beschriebenen Erfindungsvarianten kann jedoch auch vorgesehen sein, dass eine oder mehrere der Vergrößerungen $z_1$, $z_2$ und der Bewegungsrichtungen $\phi_1$, $\phi_2$ ortsabhängig sind, sich also in der Form $z_1(x, y)$, $z_2(x, y)$, $\phi_1(x, y)$ oder $\phi_2(x,y)$ darstellen. In diesem Fall ist auch die Vergrößerungs- und Bewegungsmatrix A ortsabhängig.

In einer vorteilhaften Ausgestaltung ist das Betrachtungsraster ein Spaltraster oder Zylinderlinsenraster, dessen Einheitszelle beispielsweise durch

$$W = \begin{pmatrix} d & 0 \\ 0 & \infty \end{pmatrix}$$

mit dem Spalt- bzw. Zylinderachsenabstand d gegeben ist. Die Vergrößerungs- und Bewegungsmatrix A ist in diesem Fall durch

$$A = \begin{pmatrix} a_{11} & 0 \\ a_{21} & 1 \end{pmatrix} = \begin{pmatrix} v_1 \cdot \cos\phi_1 & 0 \\ v_1 \cdot \sin\phi_1 & 1 \end{pmatrix} = \begin{pmatrix} \dfrac{z_1}{e} & 0 \\ \dfrac{z_1}{e} \cdot \tan\phi_1 & 1 \end{pmatrix}$$

mit einer vorgewählten Bewegungsrichtung $\phi_1$ gegeben.

Das hiermit für das hinter einem Linsenraster W anzulegende Druck- oder Prägebild erzeugte Muster lässt sich nicht nur mit dem Spaltblenden-Array bzw. Zylinderlinsen-Array $W = \begin{pmatrix} d & 0 \\ 0 & \infty \end{pmatrix}$ betrachten, sondern auch mit einem Lochblenden- bzw. Linsenarray mit $W = \begin{pmatrix} d & 0 \\ d \cdot \tan\beta & d_2 \end{pmatrix}$ mit $d_2$, $\beta$ beliebig.

Bei einer Zylinderlinsen-Achse in beliebige Richtung $\gamma$ und mit Achsenabstand d, also einem Linsenraster

$$W = \begin{pmatrix} \cos\gamma & -\sin\gamma \\ \sin\gamma & \cos\gamma \end{pmatrix} \cdot \begin{pmatrix} d & 0 \\ 0 & \infty \end{pmatrix}$$

ist die passende Matrix A, bei der in Richtung $\gamma$ keine Vergrößerung oder Verzerrung vorliegt:

$$A = \begin{pmatrix} \cos\gamma & -\sin\gamma \\ \sin\gamma & \cos\gamma \end{pmatrix} \cdot \begin{pmatrix} a_{11} & 0 \\ a_{21} & 1 \end{pmatrix} \cdot \begin{pmatrix} \cos\gamma & \sin\gamma \\ -\sin\gamma & \cos\gamma \end{pmatrix}$$

Das hiermit für das hinter einem Linsenraster W anzulegende Druck- oder Prägebild erzeugte Muster lässt sich nicht nur mit dem Spaltblenden- bzw. Zylinderlinsen-Array mit Achse in Richtung $\gamma$ betrachten, sondern auch mit einem Lochblenden- bzw. Linsenarray mit $W = \begin{pmatrix} \cos\gamma & -\sin\gamma \\ \sin\gamma & \cos\gamma \end{pmatrix} \cdot \begin{pmatrix} d & 0 \\ d\cdot\tan\beta & d_2 \end{pmatrix}$ wobei $d_2$, $\beta$ beliebig sein können.

Weiter sind die Zellengrenzen im Motivbild bei vorteilhaften Ausgestaltungen ortsunabhängig verschoben, so dass der in der Bildfunktion m(x,y) auftretende Vektor $(d_1(x,y), d_2(x,y))$ konstant ist. Alternativ können die Zellengrenzen im Motivbild ortsabhängig verschoben sein. Insbesondere kann das Motivbild zwei oder mehr Teilbereiche mit unterschiedlichem, jeweils konstantem Zellenraster aufweisen.

Ein ortsabhängiger Vektor $(d_1(x,y), d_2(x,y))$ kann auch genutzt werden, um die Umrissform der Zellen im Motivbild zu definieren. Beispielsweise können anstelle parallelogrammförmiger Zellen auch Zellen mit einer anderen einheitlichen Form verwendet werden, die so zueinander passen, dass die Fläche des Motivbilds lückenlos aufgefüllt wird (Parkettierung der Fläche des Motivbilds). Durch die Wahl des ortsabhängigen Vektors $(d_1(x,y), d_2(x,y))$ lässt sich die Zellenform nach Wunsch festlegen. Dadurch hat der Designer insbesondere Einfluss darauf, unter welchen Betrachtungswinkeln Motivsprünge auftreten.

Das Motivbild kann auch in verschiedene Bereiche unterteilt sein, in denen die Zellen jeweils identische Form aufweisen, während sich die Zellenformen in den unterschiedlichen Bereichen unterscheiden. Dies bewirkt, dass beim Kippen des Sicherheitselements Teile des Motivs, die verschiedenen Bereichen zugeordnet sind, bei unterschiedlichen Kippwinkeln springen. Sind die Bereiche mit unterschiedlichen Zellen groß genug, dass sie mit bloßem Auge erkennbar sind, so kann auf diese Weise eine zusätzliche, sichtbare Information in dem Sicherheitselement untergebracht werden. Sind die Bereiche dagegen mikroskopisch, also nur mit vergrößernden Hilfsmitteln erkennbar, so kann auf diese Weise eine zusätzliche, versteckte Information in dem Sicherheitselement untergebracht werden, die als Sicherheitsmerkmal höherer Stufe dienen kann.

Weiter kann ein ortsabhängiger Vektor $(d_1(x,y), d_2(x,y))$ auch zur Erzeugung von Zellen genutzt werden, die sich alle hinsichtlich ihrer Form voneinander unterscheiden. Dadurch lässt sich ein ganz individuelles Sicherheitsmerkmal erzeugen, das beispielsweise mittels eines Mikroskops geprüft werden kann.

Die in der Bildfunktion m(x,y) auftretende Maskenfunktion g ist in vielen Fällen mit Vorteil identisch 1. In anderen, ebenfalls vorteilhaften Gestaltungen ist die Maskenfunktion g in Teilbereichen, insbesondere in Randbereichen der Zellen des Motivbilds Null und beschränkt dann den Raumwinkelbereich, unter dem das Sollbild zu sehen ist. Neben einer Winkelbeschränkung kann die Maskenfunktion als Bildfeldbeschränkung auch Bereiche definieren, in denen das Sollbild nicht sichtbar wird. Die Bereiche in denen g=0 ist, können sich in diesem Fall über eine Vielzahl von Zellen erstrecken. Beispielsweise können die in Beispiel 16 genannten Ausgestaltungen mit nebeneinandergelegten Bildern durch solche makroskopischen Maskenfunktionen beschrieben werden. Allgemein ist eine Maskenfunktion zur Bildfeldbeschränkung gegeben durch

$$g\begin{pmatrix} x \\ y \end{pmatrix} = \begin{cases} 1 & \text{in Bereichen in denen das Sollbild sichtbar sein soll} \\ 0 & \text{in Bereichen in denen das Sollbild nicht sichtbar sein soll} \end{cases}$$

In vorteilhaften Ausgestaltungen ist vorgesehen, dass die relative Position des Zentrums der Betrachtungselemente innerhalb der Zellen des Motivbilds ortsunabhängig ist, der Vektor $(c_1(x,y), c_2(x,y))$ also konstant ist. In manchen Gestaltungen kann es sich allerdings auch anbieten, die relative Position des Zentrums der Betrachtungselemente innerhalb der Zellen des Motivbilds ortsabhängig zu gestalten, wie weiter unten genauer ausgeführt.

Beim ersten Erfindungsaspekt stellt die Rasterbildanordnung der Darstellungsanordnung stets ein einzelnes Sollbild dar. In ihrem zweiten Aspekt umfasst die Erfindung Gestaltungen, in denen mehrere Sollbilder gleichzeitig oder im Wechsel dargestellt werden. Eine solche Darstellungsanordnung umfasst dann eine Rasterbildanordnung zur Darstellung einer Mehrzahl ebener Sollbilder, die durch Bildfunktionen $f_i(x,y)$, i=1,2,...n mit n≥1 gegeben sind, mit

- einem Motivbild, das in eine Mehrzahl von Zellen eingeteilt ist, in denen jeweils abgebildete Bereiche der Sollbilder angeordnet sind,

- einem Betrachtungsraster aus einer Mehrzahl von Betrachtungselementen zur Rekonstruktion der Sollbilder bei der Betrachtung des Motivbilds mithilfe des Betrachtungsrasters,

- wobei das Motivbild mit seiner Einteilung in einer Mehrzahl von Zellen eine Bildfunktion $m(x,y)$ aufweist, die gegeben ist durch $m(x, y) = F(h_1, h_2, ... h_n)$, mit den beschreibenden Funktionen

$$h_i(x,y) = f_i\left(\begin{pmatrix} x \\ y \end{pmatrix} + (A_i(x,y) - I) \cdot \left(\left(\left(\begin{pmatrix} x \\ y \end{pmatrix} + w_{di}(x,y)\right) \bmod W\right) - w_{di}(x,y) - w_{ci}(x,y)\right)\right) \cdot g_i(x,y)$$

$$\text{mit } w_{di}(x,y) = W \cdot \begin{pmatrix} d_{i1}(x,y) \\ d_{i2}(x,y) \end{pmatrix} \text{ und } w_{ci}(x,y) = W \cdot \begin{pmatrix} c_{i1}(x,y) \\ c_{i2}(x,y) \end{pmatrix},$$

- wobei $F(h_1, h_2, ... h_n)$ eine Masterfunktion ist, die eine Verknüpfung der n beschreibenden Funktionen $h_i(x,y)$ angibt,

- die Einheitszelle des Betrachtungsrasters durch Gitterzellenvektoren $w_1 = \begin{pmatrix} w_{11} \\ w_{21} \end{pmatrix}$ und $w_2 = \begin{pmatrix} w_{12} \\ w_{22} \end{pmatrix}$ beschrieben und in der Matrix $W = \begin{pmatrix} w_{11} & w_{12} \\ w_{21} & w_{22} \end{pmatrix}$ zusammengefasst ist,

- die Matrizen $A_i(x,y) = \begin{pmatrix} a_{i11}(x,y) & a_{i12}(x,y) \\ a_{i21}(x,y) & a_{i22}(x,y) \end{pmatrix}$ jeweils ein gewünschtes Vergrößerungs- und Bewegungsverhalten für das Sollbild $f_i$ beschreiben,

- die Vektoren $(c_{i1}(x,y), c_{i2}(x,y))$ mit $0 \le c_{i2}(x,y)$, $c_{i2}(x,y) < 1$ für das Soll-bild $f_i$ jeweils die relative Position des Zentrums der Betrachtungselemente innerhalb der Zellen i des Motivbilds angeben,

- die Vektoren $(d_{i1}(x,y), d_{i2}(x,y))$ mit $0 \le d_{i1}(x,y)$, $d_{i2}(x,y) < 1$ jeweils eine ortsabhängige Verschiebung der Zellengrenzen im Motivbild darstellen, und

- gi(x,y) Maskenfunktionen zur Einstellung der Sichtbarkeit des Sollbilds $f_i$ sind.

Alle beim ersten Erfindungsaspekt für Einzel-Sollbilder f(x,y) gemachten Ausführungen gelten auch für die Sollbilder $f_i(x,y)$ der allgemeineren Rasterbildanordnungen des zweiten Erfindungsaspekts. Insbesondere kann zumindest eine (oder auch alle) der beschreibenden Funktionen $h_i(x,y)$ des zweiten Erfindungsaspektes wie oben für die Bildfunktion m(x,y) des ersten Erfindungsaspekts angegeben, gestaltet sein.

Mit Vorteil stellt die Rasterbildanordnung ein Wechselbild, ein Bewegungsbild oder ein Morphbild dar. Die Maskenfunktionen $g_i$ können dabei insbesondere ein streifenartiges oder schachbrettartiges Wechseln der Sichtbarkeit der Sollbilder $f_i$ festlegen. Eine Bilderfolge kann mit Vorteil beim Kippen entlang einer vorgegebenen Richtung ablaufen; in diesem Fall werden zweckmäßig streifenartige Maskenfunktionen $g_i$ verwendet, also Maskenfunktionen, die für jedes i nur in einem innerhalb der Einheitszelle wandernden Streifen ungleich Null sind. Im allgemeinen Fall können allerdings auch Maskenfunktionen gewählt werden, die eine Bilderfolge durch gekrümmte, mäanderförmige oder spiralförmige Kippbewegungen ablaufen lassen.

In vielen Fällen bietet es sich an, dass die Masterfunktion F die Summen-funktion darstellt, so dass

$$m(x,y) = F(h_1, h_2, ... h_n) = \sum_{i=1}^{n} (h_i(x,y)) \text{ ist.}$$

Während bei Wechselbildern (Kippbildern) oder anderen Bewegungsbildern idealerweise jeweils nur ein Sollbild gleichzeitig sichtbar ist, enthält die Erfindung auch Gestaltungen, bei denen für den Betrachter gleichzeitig zwei oder mehr Sollbilder $f_i$ sichtbar sind. Dabei stellt die Masterfunktion F mit Vorteil die Summenfunktion, die Maximumsfunktion, eine ODER-Verknüpfung, eine XOR-Verknüpfung oder eine andere logische Verknüpfung dar.

In einer vorteilhaften Weiterbildung sind n Sollobjekte $f_j(x,y)$, $j = 1,...n$ vorgegeben, die jeweils in einer scheinbaren Tiefe $z_j$ mit $z_j > z_{j-1}$ liegen, und als Masterfunktion F ist eine modifizierte Minimumsfunktion gewählt, durch die im Fall, dass die beschreibenden Funktionen $h_j$ an einer Stelle $(x,y)$ für mehrere j ungleich Null sind, das kleinste j ausgewählt wird.

Auch bei dem zweiten Erfindungsaspekt können das Betrachtungsraster und das Motivbild der Darstellungsanordnung fest miteinander verbunden sein, um ein permanentes Sicherheitselement zu bilden, oder das Betrachtungsraster und das Motivbild können an verschiedenen Stellen eines Datenträgers angeordnet sein, um durch Übereinanderlegen ein temporäres Sicherheitselement zu bilden. Die bei der Beschreibung des ersten Erfindungsaspekts gemachten Aussagen zu permanenten oder temporären Sicherheitselementen gelten in gleicher Weise auch beim zweiten Erfindungsaspekt.

Das Motivbild liegt insbesondere in einer geprägten oder gedruckten Schicht vor. Nach einer vorteilhaften Weiterbildung der Erfindung weist das Sicherheitselement in beiden Aspekten eine opake Abdeckschicht zur bereichsweisen Abdeckung der Rasterbildanordnung auf. Innerhalb des abgedeckten Bereichs tritt somit kein Modulo-Vergrößerungseffekt auf, so dass der optisch variable Effekt mit herkömmlichen Informationen oder mit anderen Effekten kombiniert werden kann. Diese Abdeckschicht liegt mit Vorteil in Form von Mustern, Zeichen oder Codierungen vor und/oder weist Aussparungen in Form von Mustern, Zeichen oder Codierungen auf.

Sind das Motivbild und das Betrachtungsraster an gegenüberliegenden Flächen einer optischen Abstandsschicht angeordnet, kann die Abstandsschicht beispielsweise eine Kunststofffolie und/oder eine Lackschicht umfassen.

Das permanente Sicherheitselement selbst stellt in allen Erfindungsaspekten bevorzugt einen Sicherheitsfaden, einen Aufreißfaden, ein Sicherheitsband, einen Sicherheitsstreifen, einen Patch oder ein Etikett zum Aufbringen auf ein Sicherheitspapier, Wertdokument oder dergleichen dar. In einer vorteilhaften Ausgestaltung kann das Sicherheitselement einen transparenten oder ausgesparten Bereich eines Datenträgers überspannen. Dabei können auf unterschiedlichen Seiten des Datenträgers unterschiedliche Erscheinungsbilder realisiert werden. Auch beidseitige Gestaltungen kommen infrage, bei denen beiderseits eines Motivbilds Betrachtungsraster angeordnet sind.

Weiter kann das Motivbild wie bei dem ersten Erfindungsaspekt mit Vorteil von einer elektronischen Anzeigeeinrichtung angezeigt sein. Das Betrachtungsraster kann dabei zur Betrachtung des angezeigten Motivbilds fest mit der elektronischen Anzeigeeinrichtung verbunden sein, oder kann ein separates Betrachtungsraster sein, das auf oder vor die elektronische Anzeigeeinrichtung bringbar ist.

Die erfindungsgemäßen Rasterbildanordnungen können mit anderen Sicherheitsmerkmalen kombiniert werden, beispielsweise mit diffraktiven Strukturen, mit Hologrammstrukturen in allen Ausführungsvarianten, metallisiert oder nicht metallisiert, mit Subwellenlängenstrukturen, metallisiert oder nicht metallisiert, mit Subwellenlängengittern, mit Schichtsystemen, die beim Kippen einen Farbwechsel zeigen, semitransparent oder opak, mit diffraktiven optischen Elementen, mit refraktiven optischen Elementen, wie etwa Prismenstrahlformern, mit speziellen Lochformen, mit Sicherheitsmerkmalen mit gezielt eingestellter elektrischer Leitfähigkeit, mit eingearbeiteten Stoffen mit magnetischer Codierung, mit Stoffen mit phosphoreszierender, fluoreszierender oder lumineszierender Wirkung, mit Sicherheitsmerkmalen auf Grundlage von Flüssigkristallen, mit Mattstrukturen, mit Mikrospiegeln, mit Elementen mit Jalousie-Effekt oder mit Sägezahnstrukturen. Weitere Sicherheitsmerkmale, mit denen die erfindungsgemäßen Rasterbildanordnungen kombiniert werden können, sind in der Druckschrift WO 2005/052650 A2 auf Seiten 71 bis 73 angegeben; diese werden insoweit in die vorliegende Beschreibung aufgenommen.

In beiden Erfindungsaspekten können die Bildinhalte einzelner Zellen des Motivbilds nach der Bestimmung der Bildfunktion $m(x,y)$ miteinander vertauscht sein.

Die Erfindung enthält auch ein Verfahren zur Herstellung einer Darstellungsanordnung nach dem ersten Erfindungsaspekt, bei dem aus einem ebenen Sollbild, welches durch eine Bildfunktion $f(x,y)$ gegeben ist, ein Motivbild berechnet wird, das in eine Mehrzahl von Zellen eingeteilt ist, in denen jeweils abgebildete Bereiche des Sollbilds angeordnet werden. Das Motivbild mit seiner Einteilung in eine Mehrzahl von Zellen weist eine Bildfunktion $m(x,y)$ auf, die berechnet wird durch

$$m(x, y) = f\left(\begin{pmatrix} x \\ y \end{pmatrix}\right) + (A(x,y) - I) \cdot \left(\left(\left(\begin{pmatrix} x \\ y \end{pmatrix} + w_d(x,y)\right) \bmod W\right) - w_d(x,y) - w_c(x,y)\right) \cdot g(x,y)$$

$$\text{mit } w_d(x,y) = W \cdot \begin{pmatrix} d_1(x,y) \\ d_2(x,y) \end{pmatrix} \text{ und } w_c(x,y) = W \cdot \begin{pmatrix} c_1(x,y) \\ c_2(x,y) \end{pmatrix}, \text{ so dass das Sollbild bei der Betrachtung des}$$

Motivbilds mithilfe des Betrachtungsrasters rekonstruiert wird. Die in der Fornel für m(x,y) auftretenden Größen sind weiter oben bereits definiert bzw. näher erläutert.

Weiter stellt die Erfindung ein Verfahren zur Herstellung einer Darstellungsanordnung nach dem zweiten Erfindungsaspekt bereit, bei dem aus einer Mehrzahl ebener Sollbilder, die durch Bildfunktionen $f_i(x,y)$, i=1,2,...n mit n≥1 gegeben sind, ein Motivbild berechnet wird, das in eine Mehrzahl von Zellen eingeteilt ist, in denen jeweils abgebildete Bereiche des Sollbilds angeordnet werden. Das Motivbild weist mit seiner Einteilung in eine Mehrzahl von Zellen eine Bildfunktion m(x,y) auf, die berechnet wird durch $m(x,y) = F(h_1, h_2, ... h_n)$, mit den beschreibenden Funktionen

$$h_i(x,y) = f_i\left(\begin{pmatrix} x \\ y \end{pmatrix} + (A_i(x,y) - I) \cdot \left(\left(\left(\begin{pmatrix} x \\ y \end{pmatrix} + w_{di}(x,y)\right) \bmod W\right) - w_{di}(x,y) - w_{ci}(x,y)\right)\right) \cdot g_i(x,y)$$

$$\text{mit } w_{di}(x,y) = W \cdot \begin{pmatrix} d_{i1}(x,y) \\ d_{i2}(x,y) \end{pmatrix} \text{ und } w_{ci}(x,y) = W \cdot \begin{pmatrix} c_{i1}(x,y) \\ c_{i2}(x,y) \end{pmatrix}, \text{ so dass die Sollbilder bei der Betrachtung des}$$

Motivbilds durch das Betrachtungsraster rekonstruiert werden. Auch hier wird zur Definition bzw. näheren Erläuterung der in m(x,y) auftretenden Größen auf die oben gegebene Erläuterung verwiesen.

Die Größe der Motivbildelemente und der Betrachtungselemente liegt im Rahmen der Erfindung typischerweise bei etwa 5 bis 50 μm, so dass auch der Einfluss der Modulo-Vergrößerungsanordnung auf die Dicke der Sicherheitselemente gering gehalten werden kann. Die Herstellung derart kleiner Linsenarrays und derart kleiner Bilder ist beispielsweise in der Druckschrift DE 10 2005 028162 A1 beschrieben, deren Offenbarung insoweit in die vorliegende Anmeldung aufgenommen wird.

Eine typische Vorgehensweise ist dabei Folgende: Zur Herstellung von Mikrostrukturen (Mikrolinsen, Mikrobildelemente) können Techniken der Halbleiterstrukturierung verwendet werden, beispielsweise Photolithographie oder Elektronenstrahllithographie. Ein besonders geeignetes Verfahren besteht darin, die Strukturen mithilfe eines fokussierten Laserstrahls in Photolack zu belichten. Anschließend werden die Strukturen, die binäre oder komplexere dreidimensionale Querschnittsprofile aufweisen können, mit einem Entwickler freigelegt. Als alternatives Verfahren kann Laserablation eingesetzt werden.

Das auf einem dieser Wege erhaltene Original kann zu einem Prägewerkzeug weiterverarbeitet werden, mit dessen Hilfe die Strukturen beispielsweise durch Prägen in UV-Lack, thermoplastisches Prägen oder durch die in der Druckschrift WO 2008/00350 A1 beschriebene Mikrotiefdrucktechnik vervielfältigt werden können. Bei der letztgenannten Technik handelt es sich um eine Mikrotiefdrucktechnik, die die Vorteile von Druck- und Prägetechnologien vereint. Details dieses Mikrotiefdruckverfahrens und der damit verbundenen Vorteile können der Druckschrift WO 2008/00350 A1 entnommen werden, deren Offenbarungsgehalt insoweit in die vorliegende Anmeldung aufgenommen wird.

Für das Endprodukt kommen eine Reihe verschiedener Ausführungsvarianten infrage: mit Metall bedampfte Prägestrukturen, Farbgebung durch metallische Nanostrukturen, Prägen in farbigen UV-Lack, Mikrotiefdruck nach der Druckschrift WO 2008/00350 A1, das Einfärben der Prägestrukturen und anschließendes Abrakeln der geprägten Folie, oder auch das in der deutschen Patentanmeldung 10 2007 062 089.8 beschriebene Verfahren zum selektiven Übertragen eines Aufdruckstoffs auf Erhebungen oder Vertiefungen einer Prägestruktur. Alternativ kann das Motivbild mit einem fokussierten Laserstrahl direkt in eine lichtempfindliche Schicht geschrieben werden.

Das Mikrolinsenarray kann ebenfalls mittels Laserablation oder Graustufen-Lithographie hergestellt werden. Alternativ kann eine Binärbelichtung erfolgen, wobei die Linsenform erst nachträglich durch Aufschmelzen von Photolack entsteht ("thermal reflow"). Aus dem Original kann - wie im Falle des Mikrostruktur-Arrays - ein Prägewerkzeug gefertigt werden, mit dessen Hilfe die Massenproduktion erfolgen kann, beispielsweise durch Prägen in UV-Lack oder thermoplastisches Prägen.

Wird bei dekorativen Artikeln (z.B. Glückwunschkarten, Bilder als Wandschmuck, Vorhänge, Tischauflagen, Schlüsselanhänger, usw.) oder der Dekoration von Produkten das Modulo-Magnifierprinzip bzw. Modulo-Mappingprinzip angewandt, liegt die Größe der einzubringenden Bilder und Linsen bei etwa 50 bis 1000 μm. Hierbei können die einzubringenden Motivbilder mit konventionellen Druckverfahren, wie etwa Offsetdruck, Tiefdruck, Hochdruck, Siebdruck, oder digitalen Druckverfahren, wie etwa Tintenstrahldruck oder Laserdruck farbig gedruckt werden.

Das erfindungsgemäße Modulo-Magnifierprinzip bzw. Modulo-Mappingprinzip kann auch bei dreidimensional wirkenden Computer- und Fernseh-Bildern angewandt werden, die allgemein auf einer elektronischen Anzeigeeinrichtung gezeigt werden. Die Größe der einzubringenden Bilder und die Größe der Linsen in dem vor dem Bildschirm anzubringenden Linsenarray liegt in diesem Fall bei etwa 50 bis 500 μm. Die Bildschirmauflösung soll mindestens eine Größenordnung besser sein, so dass für diese Anwendung hochauflösende Bildschirme erforderlich sind.

Schließlich enthält die Erfindung auch ein Sicherheitspapier für die Herstellung von Sicherheits- oder Wertdokumenten, wie Banknoten, Schecks, Ausweiskarten, Urkunden oder dergleichen, mit einer Darstellungsanordnung der oben beschriebenen Art. Die Erfindung enthält weiter einen Datenträger, insbesondere einen Markenartikel, ein Wertdokument, einen dekorativen Artikel, wie eine Verpackung, Postkarten oder dergleichen, mit einer Darstellungsanordnung der oben beschriebenen Art. Das Betrachtungsraster und/oder das Motivbild der Darstellungsanordnung können dabei vollflächig, auf Teilflächen oder in einem Fensterbereich des Datenträgers angeordnet sein.

Die Erfindung betrifft auch eine elektronische Anzeigeanordnung mit einer elektronischen Anzeigeeinrichtung, insbesondere einem Computer- oder Fernsehbildschirm, einer Steuereinrichtung und einer Darstellungsanordnung der oben beschriebenen Art. Die Steuereinrichtung ist dabei ausgelegt und eingerichtet, das Motivbild der Darstellungsanordnung auf der elektronischen Anzeigeeinrichtung anzuzeigen. Das Betrachtungsraster zur Betrachtung des angezeigten Motivbilds kann dabei fest mit der elektronischen Anzeigeeinrichtung verbunden sein oder kann ein separates Betrachtungsraster sein, das zur Betrachtung des angezeigten Motivbilds auf oder vor die elektronische Anzeigeeinrichtung bringbar ist.

Weitere Ausführungsbeispiele sowie Vorteile der Erfindung werden nachfolgend anhand der Figuren erläutert. Zur besseren Anschaulichkeit wird in den Figuren auf eine maßstabs- und proportionsgetreue Darstellung verzichtet.

Es zeigen:

Fig. 1      eine schematische Darstellung einer Banknote mit einem eingebetteten Sicherheitsfaden und einem aufgeklebten Transferelement,

Fig. 2      schematisch den Schichtaufbau eines erfindungsgemäßen Sicherheitselements im Querschnitt,

Fig. 3      stark schematisch eine Modulo-Vergrößerungsanordnung zur Erläuterung der Funktionsweise erfindungsgemäßer Anordnungen,

Fig. 4      für ein Ausführungsbeispiel der Erfindung in (a) ein vorgegebenes Sollmotiv in Form des Buchstabens "P", in (b) einen Ausschnitt der Gitterstruktur des für die Betrachtung vorgesehenen Linsenrasters und in (c) die berechnete Bildfunktion des zugehörigen Motivbilds,

Fig. 5      für ein anderes Ausführungsbeispiel der Erfindung in (a) ein vorgegebenes Sollmotiv in Form des Buchstabens "P", und in (b) die berechnete Bildfunktion des zugehörigen Motivbilds,

Fig. 6      eine Darstellung wie in Fig. 5 für ein weiteres Ausführungsbeispiel der Erfindung,

Fig. 7      ein Ausführungsbeispiel mit einem bereichsweise konstanten Zellenraster,

Fig. 8      für ein Kippbild nach einem Ausführungsbeispiel der Erfindung in (a) und (b) vorgegebene Sollmotive in Form der Buchstaben "P" bzw. "L", und in (c) die berechnete Bildfunktion des zugehörigen Motivbilds, und

Fig. 9 und 10      jeweils eine Darstellung wie in Fig. 5 für weitere Ausführungsbeispiele der Erfindung.

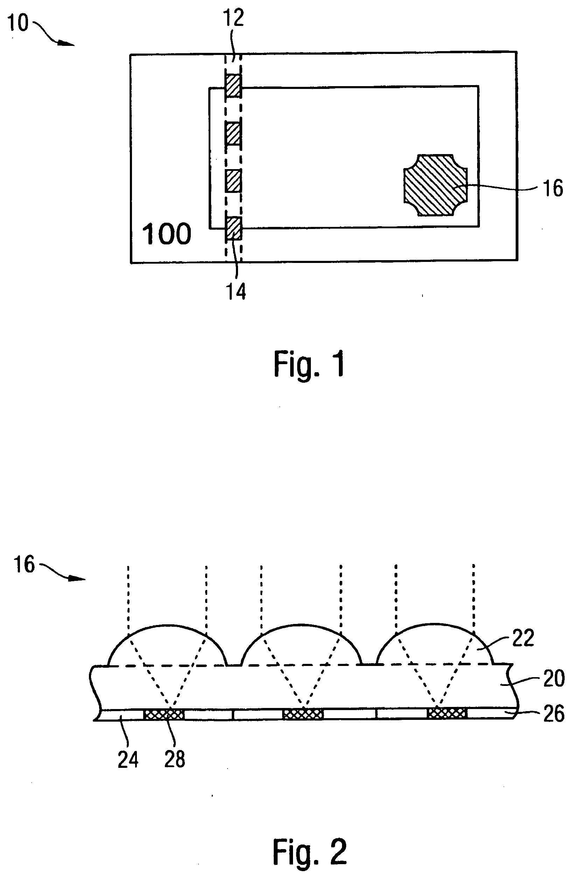

Die Erfindung wird nun am Beispiel von Sicherheitselementen für Banknoten erläutert. Fig. 1 zeigt dazu eine schematische Darstellung einer Banknote 10, die mit zwei Sicherheitselementen 12 und 16 nach Ausführungsbeispielen der Erfindung versehen ist. Das erste Sicherheitselement stellt einen Sicherheitsfaden 12 dar, der in bestimmten Fensterbereichen 14 an der Oberfläche der Banknote 10 hervortritt, während er in den dazwischen liegenden Bereichen im Inneren der Banknote 10 eingebettet ist. Das zweite Sicherheitselement ist durch ein aufgeklebtes Transferelement 16 beliebiger Form gebildet. Das Sicherheitselement 16 kann auch in Form einer Abdeckfolie ausgebildet sein, die über einem Fensterbereich oder einer durchgehenden Öffnung der Banknote angeordnet ist. Das Sicherheitselement kann für Betrachtung in Aufsicht, Durchsicht oder für Betrachtung sowohl in Aufsicht als auch in Durchsicht ausgelegt sein. Auch beidseitige Gestaltungen kommen infrage, bei denen beiderseits eines Motivbilds Linsenraster angeordnet sind.

Sowohl der Sicherheitsfaden 12 als auch das Transferelement 16 können eine Modulo-Vergrößerungsanordnung nach einem Ausführungsbeispiel der Erfindung enthalten. Die Funktionsweise und das erfindungsgemäße Herstellungsverfahren für derartige Anordnungen werden im Folgenden anhand des Transferelements 16 näher beschrieben.

Fig. 2 zeigt dazu schematisch den Schichtaufbau des Transferelements 16 im Querschnitt, wobei nur die für die Erläuterung des Funktionsprinzips erforderlichen Teile des Schichtaufbaus dargestellt sind. Das Transferelement 16 enthält einen Träger 20 in Form einer transparenten Kunststofffolie, im Ausführungsbeispiel einer etwa 20 $\mu$m dicken Polyethylenterephthalat(PET)-Folie.

Die Oberseite der Trägerfolie 20 ist mit einer rasterförmigen Anordnung von Mikrolinsen 22 versehen, die auf der Oberfläche der Trägerfolie ein zweidimensionales Bravais-Gitter mit einer vorgewählten Symmetrie bilden. Das Bravais-Gitter kann beispielsweise eine hexagonale Gittersymmetrie aufweisen. Möglich sind jedoch auch andere, insbesondere niedrigere Symmetrien und damit allgemeinere Formen, wie etwa die Symmetrie eines Parallelo-gramm-Gitters.

Der Abstand benachbarter Mikrolinsen 22 ist vorzugsweise so gering wie möglich gewählt, um eine möglichst hohe Flächendeckung und damit eine kontrastreiche Darstellung zu gewährleisten. Die sphärisch oder asphärisch ausgestalteten Mikrolinsen 22 weisen vorzugsweise einen Durchmesser zwischen 5 $\mu$m und 50 $\mu$m und insbesondere einen Durchmesser zwischen lediglich 10 $\mu$m und 35 $\mu$m auf und sind daher mit bloßem Auge nicht zu erkennen. Es versteht sich, dass bei anderen Gestaltungen auch größere oder kleinere Abmessungen infrage kommen. Beispielsweise können die Mikrolinsen bei Modulo-Vergrößerungsanordnungen für Dekorationszwecke einen Durchmesser zwischen 50 $\mu$m und 5 mm aufweisen, während bei Modulo-Vergrößerungsanordnungen, die nur mit einer Lupe oder einem Mikroskop entschlüsselbar sein sollen, auch Abmessung unterhalb von 5 $\mu$m zum Einsatz kommen können.

Auf der Unterseite der Trägerfolie 20 ist eine Motivschicht 26 angeordnet, die ein in eine Mehrzahl von Zellen 24 eingeteiltes Motivbild mit Motivbildelementen 28 enthält.

Die optische Dicke der Trägerfolie 20 und die Brennweite der Mikrolinsen 22 sind so aufeinander abgestimmt, dass sich die Motivschicht 26 etwa im Abstand der Linsenbrennweite befindet. Die Trägerfolie 20 bildet somit eine optische Abstandsschicht, die einen gewünschten, konstanten Abstand der Mikrolinsen 22 und der Motivschicht 26 mit dem Motivbild gewährleistet.

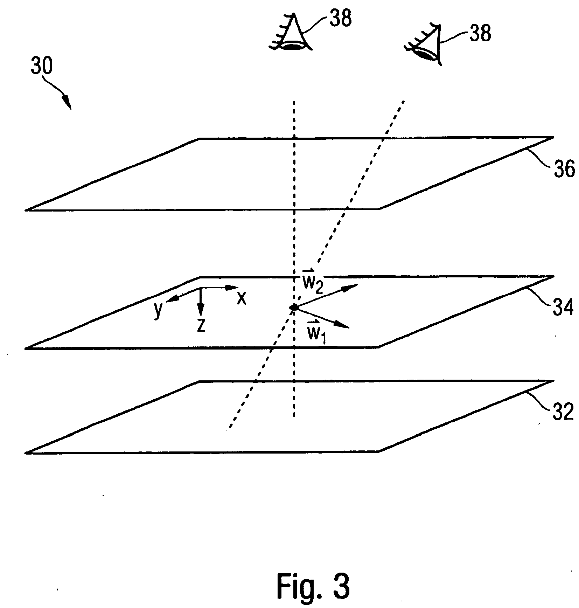

Zur Erläuterung der Funktionsweise der erfindungsgemäßen Modulo-Vergrößerungsanordnungen zeigt Fig. 3 stark schematisch eine nicht maßstäblich dargestellte Modulo-Vergrößerungsanordnung 30 mit einer Motivebene 32, in der sich das Motivbild mit seinen in Zellen angeordneten Motivbildelementen befindet, und mit einer Linsenebene 34, in der ein Mikrolinsenraster vorgesehen ist. Die Modulo-Vergrößerungsanordnung 30 erzeugt eine Bildebene 36, in der das vom Betrachter 38 wahrgenommene Sollbild erscheint.

Das darzustellende Sollbild (Objekt) wird ganz allgemein durch eine Bildfunktion f(x,y,z) beschrieben, wobei die z-Achse senkrecht zu der durch die x- und y-Achse aufgespannten Motivebene 32 und der Linsenebene 34 steht. Bezeichnet e die Brennweite (im Allgemeinen sind in dem effektiven Abstand e die Linsendaten und die Brechzahl des Mediums zwischen Linsenraster und Motivraster berücksichtigt), so wird mit der Vergrößerung v bzw. 1/v der Abbildungsmaßstab zwischen Objekten in der Tiefe z und deren Bild in der Zeichenebene (x, y, e) beschrieben. v wird positiv genommen, wenn das Objekt bei beidäugiger Betrachtung in der Tiefe hinter der Rasterbildanordnung liegen soll, und v ist negativ, wenn das Objekt bei beidäugiger Betrachtung vor der Rasterbildanordnung schweben soll.

In der vorliegenden Anmeldung werden nur ebene Sollbilder betrachtet, also Sollbilder mit einer Bildfunktion f(x, y, z=const), die durch eine Funktion f(x,y) nur der Variablen x und y beschrieben werden können. Die Verwendung solcher ebener Sollbilder mit konstanter z-Koordinate hat den Vorteil, dass das perspektivische Bild solcher Sollbilder nicht perspektivisch verzerrt, sondern lediglich verkleinert ist. Die Tiefe, in der ein ebenes Sollbild bei Betrachtung zu liegen scheint, ist durch die Beziehung z = v e gegeben, ist also eine Funktion der Vergrößerung und der Brennweite. Wenngleich die konstante Koordinate z im Folgenden nicht mehr explizit genannt wird, ist stets zu berücksichtigen, dass bei gegebener Brennweite die scheinbare Tiefe von der Vergrößerung der Mikromotivelemente abhängt.

Die Bildfunktion f(x,y) kann eine Helligkeitsverteilung des Sollbildes (Graustufenbild), eine Farbverteilung (Farbbild), eine Binärverteilung (Strichzeichnung) oder auch andere Bildeigenschaften, wie Transparenz, Reflektivität, Dichte oder dergleichen angeben, kann also im Allgemeinen nicht nur eine skalare, sondern auch eine vektorwertige Funktion der Ortskoordinaten x und y darstellen.

Die Anordnung der Mikrolinsen in der Linsenebene 34 wird durch ein zweidimensionales Bravais-Gitter beschrieben, dessen Einheitszelle durch Vektoren $w_1$ und $w_2$ (mit den Komponenten $w_{11}$, $w_{21}$ bzw. $w_{12}$, $w_{22}$) angegeben wird. In kompakter Schreibweise kann die Einheitszelle in Matrixform durch eine Linsenrastermatrix W angegeben werden:

$$W = (w_1, w_2) = \begin{pmatrix} w_{11} & w_{12} \\ w_{21} & w_{22} \end{pmatrix}$$

Die Linsenrastermatrix W wird nachfolgend oft auch einfach Linsenmatrix oder Linsenraster genannt. In der Linsenebene 34 können anstelle von Linsen 22 beispielsweise auch Lochblenden nach dem Prinzip der Lochkamera eingesetzt werden. Auch alle anderen Arten von Linsen und abbildenden Systemen, wie asphärische Linsen, Zylinderlinsen, Schlitzblenden, mit Spiegeln versehene Loch- oder Schlitzblenden, Fresnellinsen, GRIN-Linsen (Gradient Refraction Index), Zonenplatten (Beugungslinsen), holographische Linsen, Hohlspiegel, Fresnelspiegel, Zonenspiegel und andere Elemente mit fokussierender oder auch ausblendender Wirkung können als Betrachtungselemente im Betrachtungsraster eingesetzt werden.

Grundsätzlich können neben Elementen mit fokussierender Wirkung auch Elemente mit ausblendender Wirkung (Loch- oder Spaltblenden, auch Spiegelflächen hinter Loch- oder Spaltblenden) als Betrachtungselemente im Betrachtungsraster eingesetzt werden.

Bei Anwendung eines Hohlspiegelarray und bei anderen erfindungsgemäß eingesetzten spiegelnden Betrachtungsrastern blickt der Betrachter durch das in diesem Fall teildurchlässige Motivbild auf das dahinterliegende Spiegelarray und sieht die einzelnen kleinen Spiegel als helle oder dunkle Punkte, aus denen sich das darzustellende Bild aufbaut. Das Motivbild ist dabei im Allgemeinen so fein strukturiert, dass es nur als Schleier zu sehen ist. Die beschriebenen Formeln für die Zusammenhänge zwischen dem darzustellenden Bild und dem Motivbild gelten, auch wenn dies im Einzelnen nicht erwähnt wird, nicht nur für Linsenraster, sondern auch für Spiegelraster. Es versteht sich, dass bei erfindungsgemäßem Einsatz von Hohlspiegeln an die Stelle der Linsenbrennweite die Spiegelbrennweite tritt.

Bei erfindungsgemäßer Anwendung eines Spiegelarray anstelle eines Linsenarray ist in Fig. 2 die Betrachtungs-Richtung von unten zu denken, und in Fig. 3 sind bei der Spiegelarray-Anordnung die Ebenen 32 und 34 miteinander vertauscht. Die Beschreibung der Erfindung erfolgt anhand von Linsenrastern, welche stellvertretend für alle anderen erfindungsgemäß eingesetzten Betrachtungsraster stehen.

Das Motivbild in der Motivebene 32, das bei Betrachtung durch das in der Linsenebene 34 angeordnete Linsenraster W in der Bildebene 36 das gewünschte Sollbild $f(x,y)$ erzeugt, wird durch eine Bildfunktion $m(x,y)$ beschrieben, die erfindungsgemäß gegeben ist durch (E1):

$$m(x,y) = f\left(\begin{pmatrix} x \\ y \end{pmatrix} + (A(x,y) - I) \cdot \left(\left(\left(\begin{pmatrix} x \\ y \end{pmatrix} + w_d(x,y)\right) \bmod W\right) - w_d(x,y) - w_c(x,y)\right)\right) \cdot g(x,y)$$

mit

$$w_d(x,y) = W \cdot \begin{pmatrix} d_1(x,y) \\ d_2(x,y) \end{pmatrix} \text{ und } w_c(x,y) = W \cdot \begin{pmatrix} c_1(x,y) \\ c_2(x,y) \end{pmatrix} \qquad (E2)$$

In den Formeln (E1) und (E2) beschreibt die Matrix $A(x,y) = \begin{pmatrix} a_{11}(x,y) & a_{12}(x,y) \\ a_{21}(x,y) & a_{22}(x,y) \end{pmatrix}$ ein gewünschtes Vergrößerungs- und Bewegungsverhalten des dargestellten Sollbilds beim seitlichen und senkrechten Kippen des Sicherheitselements. I ist die $2\times2$-Einheitsmatrix, der Vektor $(c_1(x,y), c_2(x,y))$ mit $0 \le c_1(x,y), c_2(x,y) < 1$ gibt die relative Position des Zentrums der Linsen 22 innerhalb der Zellen des Motivbilds an, der Vektor $(d_1(x,y), d_2(x,y))$ mit $0 \le d_1(x, y), d_2(x, y) < 1$ stellt eine ortsabhängige Verschiebung der Zellengrenzen im Motivbild dar und $g(x,y)$ ist eine Maskenfunktion zur Einstellung der Sichtbarkeit des Sollbilds.

Die genauere Bedeutung und Reichweite der einzelnen Terme der Formeln (E1) und (E2) werden nachfolgend anhand einer Reihe konkreter Ausführungsbeispiele zunehmender Komplexität näher erläutert.

Zuvor sei noch kurz auf die Modulo-Operation der Formel (E2) eingegangen, von der die Modulo-Vergrößerungsanordnung ihren Namen herleitet. Für einen Vektor s und eine invertierbare 2x2-Matrix W stellt der Ausdruck s mod W als natürliche Erweiterung der üblichen skalaren Modulo-Operation eine Reduktion des Vektors s in die Grundmasche des durch die Matrix W beschriebenen Gitters dar (die "Phase" des Vektors s innerhalb des Gitters W).

Formal kann der Ausdruck s mod W wie folgt definiert werden:

$$\text{Sei } q = \begin{pmatrix} q_1 \\ q_2 \end{pmatrix} = W^{-1}s \text{ und } q_i = n_i + p_i \text{ mit ganzzahligem } n_i \in Z \text{ und } 0 \le p_i < 1$$

(i=1,2), oder sei mit anderen Worten $n_i = \text{floor}(q_i)$ und $p_i = q_i \bmod 1$. Dann ist $s = Wq = (n_1 w_1 + n_2 w_2) + (p_1 w_1 + p_2 w_2)$, wobei $(n_1 w_1 + n_2 w_2)$ ein Punkt auf dem Gitter $WZ^2$ ist und

$$s \bmod W = p_1 w_1 + p_2 w_2$$

in der Grundmasche des Gitters liegt und die Phase von s bezüglich des Gitters W angibt.

Während bei dem in der Beschreibungseinleitung genannten Moire-Magnifier das verkleinerte Einzelmotiv, das im Array angeordnet ist, vollständig in eine Zelle des Motivbilds passen muss, ist dies bei der erfindungsgemäßen Modulo-Vergrößerungsanordnung nicht erforderlich. Selbst wenn, was in bevorzugten Gestaltungen der Fall ist, der Träger von $f\left((A-I)\cdot\begin{pmatrix} x \\ y \end{pmatrix}\right)$ nicht in eine Zelle W passt, also so groß ist, dass er immer an den Zellengrenzen abgeschnitten wird, ist das Sollbild trotzdem vollständig zu sehen.

**Beispiel 1:**

Das einfachste Beispiel beschreibt eine bloße Vergrößerung v ohne besondere Bewegungseffekte beim Kippen der Modulo-Vergrößerungsanordnung. Die Vergrößerungs- und Bewegungsmatrix A ist dann durch

$$A = \begin{pmatrix} v & 0 \\ 0 & v \end{pmatrix}$$

gegeben. Weiter seien die Zellengrenzen im Motivbild ortsunabhängig $((d_1(x,y), d_2(x,y)) \equiv 0)$ und die Maskenfunktion g sei die Einheitsfunktion $(g \equiv 1)$. Die oben angegebenen Formeln (E1) und (E2) vereinfachen sich dann zu

$$m(x,y) = f\left(\begin{pmatrix} x \\ y \end{pmatrix} + (v-1)\cdot\left(\left(\begin{pmatrix} x \\ y \end{pmatrix} \bmod W\right) - W\cdot\begin{pmatrix} c_1 \\ c_2 \end{pmatrix}\right)\right) \qquad (E3)$$

Liegen die Linsen 22 in der Mitte einer Zelle, so ist weiter $c_1 = c_2 = 0{,}5$.

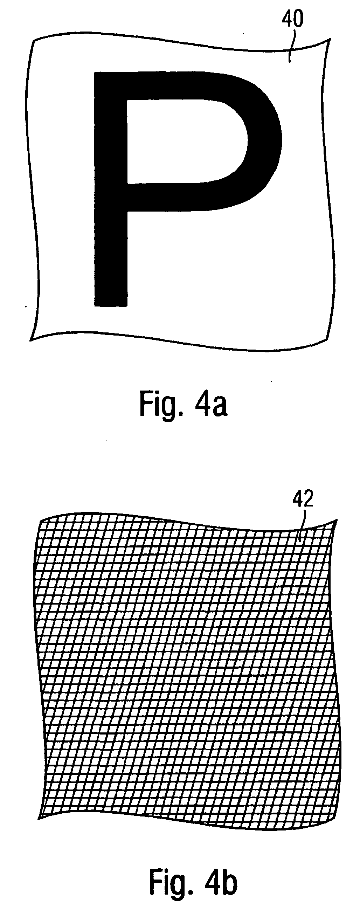

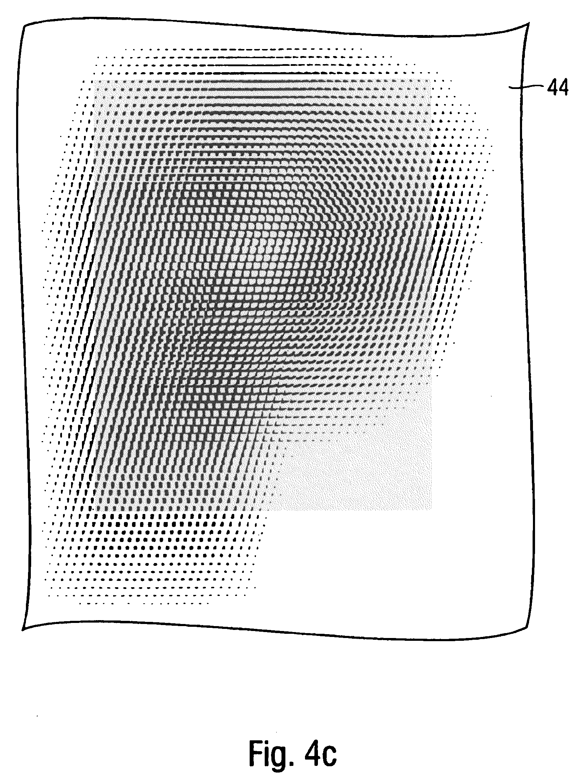

Für das Ausführungsbeispiel der Fig. 4 sei das Linsenraster W durch die Gittervektoren $w_1$ = (2.0 mm, 0 mm) und $w_2$ = (0.54 mm, 2.03 mm) gegeben. Die Schwebetiefe des Sollbilds soll z = 20e betragen, so dass sich die Vergrößerung zu v = z/e = 20 ergibt.

Zur Illustration zeigt Fig. 4(a) ein vorgegebenes Sollbild 40 in Form des Buchstabens "P", Fig. 4(b) zeigt einen Ausschnitt der Gitterstruktur 42 des Linsenrasters W und Fig. 4(c) zeigt die mittels Formel (E3) berechnete Bildfunktion m(x,y) des Motivbilds 44, das bei passender Skalierung bei Betrachtung mit dem Linsenraster W gerade das Sollbild der Fig. 4(a) rekonstruiert.

Wie insbesondere aus Fig. 4(c) deutlich zu erkennen, besteht ein wesentliches Charakteristikum des erfindungsgemäßen "Modulo-Mapping"-Verfahrens darin, dass das Motivbild 44 in Zellen eingeteilt ist, die den Zellen des Linsenrasters W entsprechen. In diesen Zellen befinden sich die abgebildeten Teilbereiche des Sollbilds 40. Bei der Betrachtung des Motivbilds 44 mithilfe eines geeigneten Mikrolinsenarrays, wie etwa des Linsenrasters W, wird für den Betrachter das gewünschte Sollbild 40 rekonstruiert.

Verändert man den Betrachtungswinkel derart, dass die Linsenbrennpunkte über die Zellengrenze hinweg laufen, so beobachtet man in diesem Augenblick einen Motivsprung. Der Motivsprung muss keineswegs negativ beurteilt werden: er ist vielmehr ein optisch variabler Effekt, der einen deutlichen Unterschied beispielsweise zu gedruckten Bildern darstellt und somit der Authentifizierung dienen kann.

Das Motivbild kann auch in unterschiedlichen Richtungen unterschiedlich stark vergrößert werden. Bei unterschiedlichen Vergrößerungen $v_x$, $v_y$ in x-und y-Richtung stellt sich die Vergrößerungs- und Bewegungsmatrix in der Form $A = \begin{pmatrix} v_x & 0 \\ 0 & v_y \end{pmatrix}$ dar.

Liegen die Augen in x-Richtung nebeneinander (was durch geeignete Drehung des Sicherheitselements bzw. durch eine entsprechende Standardausrichtung des Sicherheitselements, beispielsweise auf eine Banknote, leicht erreicht werden kann), so ist es oft sinnvoll, nur in x-Richtung zu vergrößern, $v_x = z/e$, und in y-Richtung ohne Vergrößerung, also mit $v_y = 1$ zu arbeiten, da für das dreidimensionale Sehen nur das Verhalten in x-Richtung ausschlaggebend ist. In diesem Fall gilt:

$$m(x,y) = f\left(\begin{pmatrix} x \\ y \end{pmatrix} + \begin{pmatrix} \frac{z}{e}-1 & 0 \\ 0 & 0 \end{pmatrix} \cdot \left(\left(\begin{pmatrix} x \\ y \end{pmatrix} \bmod W\right) - W \cdot \begin{pmatrix} c_1 \\ c_2 \end{pmatrix}\right)\right).$$

Legt man nun eine Richtung des Linsengitters in y-Richtung, so kann in dieser Richtung die Gitterkonstante des Linsenarrays beliebig gewählt werden. Das Linsengitter kann also in einer Richtung beliebig gestaltet werden, beispielsweise auch in Form von Zylinderlinsen. Das weiter unten beschriebene Beispiel 7 enthält ein allgemeineres Ausführungsbeispiel für die Betrachtung des Motivbilds mit Zylinderlinsen.

**Beispiel 2:**

Durch eine geeignete Wahl der Vergrößerungs- und Bewegungsmatrix A lässt sich erreichen, dass sich das Sollbild bei einer Änderung der Betrachtungsrichtung bzw. beim Kippen der Modulo-Vergrößerungsanordnung in eine beliebig vorgegebene Richtung bewegt.
Für eine allgemeine lineare Bewegung ist

$$A = \begin{pmatrix} a_{11} & a_{12} \\ a_{21} & a_{22} \end{pmatrix} = \begin{pmatrix} v_1 \cdot \cos\phi_1 & v_2 \cdot \cos\phi_2 \\ v_1 \cdot \sin\phi_1 & v_2 \cdot \sin\phi_2 \end{pmatrix}.$$

Sei der Einfachheit halber wie bei Beispiel 1 $D \equiv 0$ und $g \equiv 1$, so reduzieren sich die Formeln (E1) und (E2) auf

$$m(x,y) = f\left(\begin{pmatrix} x \\ y \end{pmatrix} + (A-I) \cdot \left(\left(\begin{pmatrix} x \\ y \end{pmatrix} \bmod W\right) - W \cdot \begin{pmatrix} c_1 \\ c_2 \end{pmatrix}\right)\right). \qquad (E4)$$

Bestimmt man das Motivbild für ein vorgegebenes Sollbild f(x,y) mit der Beziehung (E4), so wird bei Betrachtung des Motivbilds durch das Linsenraster W das Sollbild f(x,y) mit dem durch die Matrix A beschriebenen Bewegungsverhalten rekonstruiert.
Wird die Modulo-Vergrößerungsanordnung um eine vertikale Achse waagrecht gekippt, so bewegt sich das Sollbild in Richtung des Vektors $(a_{11}, a_{21})$, also in Richtung $\phi_1$ mit einer Geschwindigkeit $v_1$. Wird die Anordnung um eine horizontale Achse senkrecht gekippt, so bewegt sich das Sollbild in Richtung des Vektors $(a_{12}, a_{22})$, also in Richtung $\phi_2$ mit der Geschwindigkeit $v_2$.
Besonders bevorzugt sind dabei Gestaltungen, bei denen $\phi_1$ ungleich Null und ungleich 180° und/oder $\phi_2$ ungleich 90° und ungleich -90° und/oder $v_1$ ungleich $v_2$ ist.
Eine exakt orthoparallaktische Bewegung ergibt sich, wenn $\phi_1$ = 90° , $\phi_2$ = 0°, wenn $\phi_1$ = 90° , $\phi_2$ = 180°, wenn $\phi_1$ = -90° , $\phi_2$ = 0° oder wenn $\phi_1$ = -90°, $\phi_2$ = 180°.
Die Geschwindigkeit, mit der sich statische Objekte oder Objektteile bei Änderung der Betrachtungsrichtung relativ zueinander bewegen, ist ein Maß für ihre Tiefe im Raum auch bei einäugiger Betrachtung. Bei beidäugiger Betrachtung ist die Tiefe im Raum gegeben durch das Bewegungsverhalten in Augenabstandsrichtung. Liegen die Augen in x-Richtung nebeneinander, so ergibt sich für den

$$\textit{Tiefeneindruck} = e \cdot a_{11} = e \cdot v_1 \cdot \cos\phi_1 .$$

Liegen die Augen im Winkel $\psi$ zur x-Achse, so ist der

$$\textit{Tiefeneindruck} = e \cdot \left(a_{11} \cdot \cos^2\psi + (a_{12} + a_{21}) \cdot \cos\psi \sin\psi + a_{22} \cdot \sin^2\psi\right).$$

Je nach Augenabstandsrichtung oder Kipprichtung kann der Tiefeneindruck unterschiedlich ausfallen. Ein gemäß Beziehung (E4) angelegtes Motivbild erzeugt also einen Tiefeneindruck, wobei sich das dargestellte Objekt in ungewöhnlicher Weise bewegen kann.

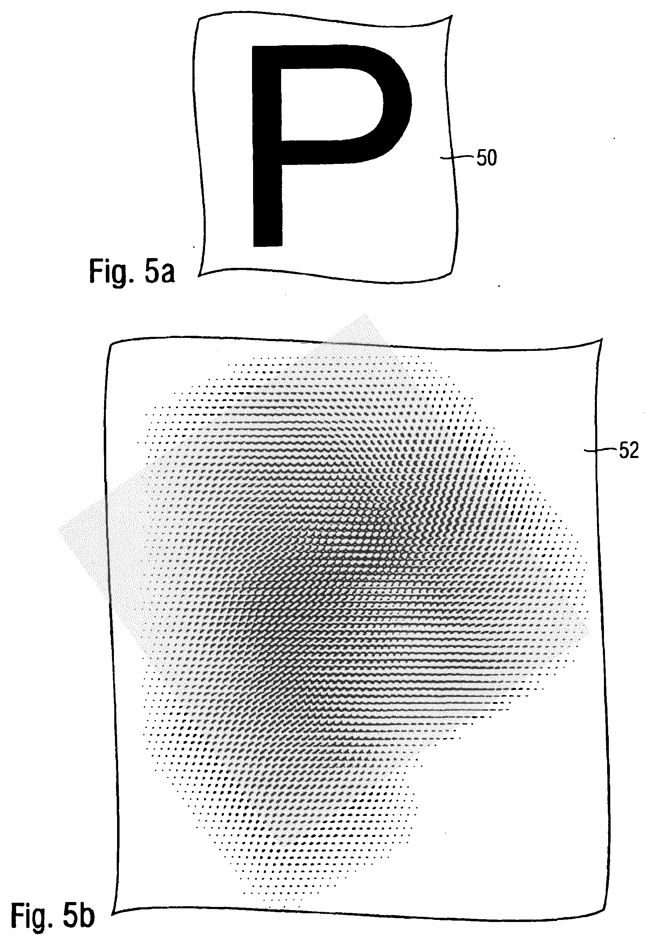

Zur Illustration zeigt das Ausführungsbeispiel der Fig. 5 in (a) als das gewünschte Sollbild 50 den Buchstaben "P", der bei Betrachtung durch ein Linsenraster W vor der Bildebene schweben soll. Beim Kippen in horizontaler Richtung soll sich das Bild entlang einer Geraden bewegen, welche mit der x-Achse einen Winkel von $\phi_1 = 32°$ einschließt. Kippen in vertikaler Richtung soll hingegen dazu führen, dass sich das Bild mit höherer Geschwindigkeit in einem Winkel von $\phi_2 = -43°$ relativ zur x-Achse bewegt.

Als Linsenraster W soll das in Fig. 4(b) dargestellte Linsenraster zum Einsatz kommen. Nimmt man als Schwebetiefe $z = -19 \cdot \cos(32°) \cdot e = -16.1 \cdot e$, so ergibt sich mithilfe der Formel (E4) das in Fig. 5(b) gezeigte Motivbild 52.

**Beispiel 3:**

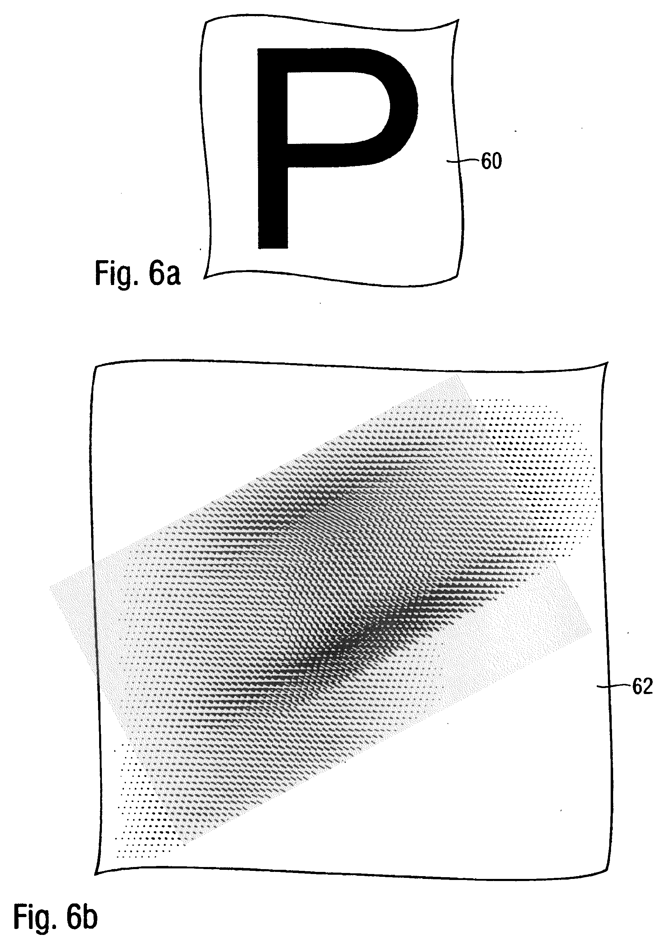

Bei dem weiteren Ausführungsbeispiel der Fig. 6 zeigt (a) als Sollbild 60 einen Buchstaben P, der bei Betrachtung durch ein Linsenraster W hinter der Bildebene schweben soll. Dieses Ausführungsbeispiel illustriert ein besonders interessantes Bewegungsverhalten, bei dem sich das Sollbild unabhängig von der Kipprichtung immer in der gleichen Richtung bewegt.

In diesem Fall ist die zugehörige Vergrößerungs- und Bewegungsmatrix A nicht invertierbar, so dass ein solches Verhalten mit dem weiter unten beschriebenen Spezialfall eines Moiré-Magnifiers bzw. beim Moiré-Mapping nicht erzeugt werden kann.

Wird als Linsenraster wieder das Linsenraster W des Beispiels 1 (Fig. 4(b)) gewählt, als Vergrößerungs- und Bewegungsmatrix

$$A = \begin{pmatrix} 20\cos(30°) & 30\cos(30°) \\ 20\sin(30°) & 30\sin(30°) \end{pmatrix}$$

und für die Schwebetiefe $z = 20\cos(30°) \cdot e = 17.3 \cdot e$, so ergibt sich bei Berechnung mithilfe der Formel (E4) das in Fig. 6(b) dargestellt Motivbild 62, das bei Betrachtung durch das Linsenraster W hindurch in einer Tiefe z zu schweben scheint, und das sich unabhängig von der Kipprichtung beim Kippen entlang einer Geraden bewegt, die mit der x-Richtung einen Winkel von 30° einschließt. Aufgrund der gewählten Vorfaktoren $v_1 = 20$ und $v_2 = 30$ bewegt sich das Sollbild beim Kippen in vertikaler Richtung um eine horizontale Kippachse schneller als beim Kippen in horizontaler Richtung.

**Beispiel 4:**

Ausgehend von der Formel (E4) des Beispiels 2 soll das Sollbild f(x,y) bei Beispiel 4 bei üblicher Betrachtung, also mit Augenabstand in x-Richtung, in einer Tiefe $z_1$ ($z_1$ positiv) zu sehen sein oder in einer Höhe $z_1$ ($z_1$ negativ) über der Anordnung zu schweben scheinen.

Bei Betrachtung der um 90° gedrehten Anordnung (Augenabstand in y-Rich-tung) soll das Sollbild f(x,y) in einer Tiefe $z_2$ ($z_2$ positiv) zu sehen sein oder in einer Höhe $z_2$ ($z_2$ negativ) über der Anordnung zu schweben scheinen.

Bezeichnet e wieder den effektiven Abstand des Linsenrasters vom anzulegenden Motivbild, so wird

$$a_{11} = z_1/e, \quad a_{21} \text{ beliebig,}$$

$$a_{22} = z_2/e, \quad a_{12} \text{ beliebig,}$$

gewählt, um die gewünschte Wirkung zu erreichen.

**Beispiel 5:**

Ausgehend von der Formel (E4) des Beispiels 2 soll bei üblicher Betrachtung (Augenabstand in x-Richtung) das Sollbild f(x,y) in einer Tiefe $z_1$ ($z_1$ positiv) zu sehen sein oder in einer Höhe $z_1$ ($z_1$ negativ) über der Anordnung zu schweben scheinen und beim waagrechten Kippen der Anordnung bzw. bei waagrechter Änderung der Betrachtungsrichtung soll sich das Bild in Richtung $\phi_1$ bewegen.

Bei Betrachtung der um 90° gedrehten Anordnung (Augenabstand in y-Rich-tung) soll das Sollbild f(x,y) in einer Tiefe $z_2$ ($z_2$ positiv) zu sehen sein oder in einer Höhe $z_2$ ($z_2$ negativ) über der Anordnung zu schweben scheinen und beim senkrechten Kippen der Anordnung bzw. bei senkrechter Änderung der Betrachtungsrichtung soll sich das Bild in Richtung $\phi_2$ bzgl. der x-Achse bewegen.

Um diese Wirkung zu erzielen, wird

$$A = \begin{pmatrix} \dfrac{z_1}{e} & \dfrac{z_2}{e} \cdot \cot \phi_2 \\ \dfrac{z_1}{e} \cdot \tan \phi_1 & \dfrac{z_2}{e} \end{pmatrix}$$

gewählt, wobei e wieder den effektiven Abstand des Linsenrasters vom anzulegenden Motivbild bezeichnet.

**Beispiel 6:**

In Erweiterung des Beispiels 5 können die gewünschte Tiefe der Sollbildpunkte und/oder das Bewegungsverhalten auch ortsabhängig sein, also im allgemeinsten Fall durch ortsabhängige Größen
$z_1(x, y), z_2(x, y), \phi_1(x, y),$ und $\phi_2(x,y)$
gegeben sein.

Auch dieser Fall ist durch die Formel (E4) beschrieben, allerdings mit einer ortsabhängigen Vergrößerungs- und Bewegungsmatrix A:

$$A = \begin{pmatrix} a_{11}(x,y) & a_{12}(x,y) \\ a_{21}(x,y) & a_{22}(x,y) \end{pmatrix} = \begin{pmatrix} \dfrac{z_1(x,y)}{e} & \dfrac{z_2(x,y)}{e} \cdot \cot \phi_2(x,y) \\ \dfrac{z_1(x,y)}{e} \cdot \tan \phi_1(x,y) & \dfrac{z_2(x,y)}{e} \end{pmatrix}.$$

**Beispiel 7:**

In einem weiteren Ausführungsbeispiel soll das Sollbild f(x,y) nicht nur bei Betrachtung durch ein normales Loch/Linsenraster, sondern auch bei Betrachtung durch ein Spaltraster oder Zylinderlinsenraster sichtbar sein, wobei als Sollbild insbesondere ein sich nicht periodisch wiederholendes Einzelbild vorgegeben sein kann.

Auch dieser Fall kann durch die Formel (E4) beschrieben werden, wobei man, wenn das anzulegende Motivbild in Spalt/Zylinderrichtung nicht gegenüber dem Sollbild transformiert ist, eine spezielle Matrix A benötigt, die folgendermaßen ermittelt werden kann:

Liegt die Zylinderachsenrichtung in y-Richtung und ist der Zylinderachsenabstand d, so wird das Spalt- oder Zylinderlinsenraster beschrieben durch:

$$W = \begin{pmatrix} d & 0 \\ 0 & \infty \end{pmatrix}.$$

Die passende Matrix A, bei der in y-Richtung keine Vergrößerung oder Verzerrung vorliegt, ist dann:

$$A = \begin{pmatrix} a_{11} & 0 \\ a_{21} & 1 \end{pmatrix} = \begin{pmatrix} v_1 \cdot \cos \phi_1 & 0 \\ v_1 \cdot \sin \phi_1 & 1 \end{pmatrix} = \begin{pmatrix} \dfrac{z_1}{e} & 0 \\ \dfrac{z_1}{e} \cdot \tan \phi_1 & 1 \end{pmatrix}.$$

Dabei wirkt die Matrix (A-I) in der Beziehung (A-I)W nur auf die erste Zeile von W, so dass W einen unendlich langen Zylinder darstellen kann.

Das anzulegende Motivbild mit der Zylinderachse in y-Richtung ergibt sich dann zu:

$$f\left(\begin{pmatrix} x \\ y \end{pmatrix} + \begin{pmatrix} a_{11}-1 & 0 \\ a_{21} & 0 \end{pmatrix} \cdot \left(\left(\begin{pmatrix} x \\ y \end{pmatrix} \bmod W\right) - W \cdot \begin{pmatrix} c_1 \\ c_2 \end{pmatrix}\right)\right) = f\left(\begin{pmatrix} x + (a_{11}-1) \cdot ((x \bmod d) - d \cdot c_1) \\ y + \quad a_{21} \cdot ((x \bmod d) - d \cdot c_1) \end{pmatrix}\right)$$

wobei auch möglich ist, dass der Träger von $f\left(\begin{pmatrix} a_{11}-1 & 0 \\ a_{21} & 0 \end{pmatrix} \cdot \begin{pmatrix} x \\ y \end{pmatrix}\right)$ nicht in eine Zelle W passt, und dabei so groß ist, dass das anzulegende Muster in den Zellen keine kompletten zusammenhängenden Bilder zeigt. Das so erzeugte Muster lässt sich nicht nur mit dem Spaltblenden- bzw. Zylinderlinsen-Array $W = \begin{pmatrix} d & 0 \\ 0 & \infty \end{pmatrix}$ betrachten, sondern auch

mit einem Lochblenden- bzw.

Linsenarray mit $W = \begin{pmatrix} d & 0 \\ d \cdot \tan\beta & d_2 \end{pmatrix}$, wobei $d_2$ und $\beta$ beliebig sind.


**Beispiel 8:**

Beispiel 8 dient der Illustration des Spezialfalls, dass sich die Motivbildelemente in den Zellen des Motivbilds nur durch eine Verschiebung unterscheiden. In diesem Fall lässt sich die Modulo-Vergrößerungsanordnung auch als Moiré-Vergrößerungsanordnung beschreiben:

Unter den genannten Voraussetzungen kann man ein Motivbildarray mit lauter gleichartigen Motivbildelementen konstruieren, wobei diese Bildelemente in einem Gitterarray mit der Einheitszelle $U = \begin{pmatrix} u_{11} & u_{12} \\ u_{21} & u_{22} \end{pmatrix}$ angeordnet werden. Bei der Rückprojektion und Betrachtung sieht man dann nicht nur ein einziges Objekt, sondern ein Objektarray mit

einer Einheitszelle $T = \begin{pmatrix} t_{11} & t_{12} \\ t_{21} & t_{22} \end{pmatrix}$. Die Betrachtung soll mit einem Linsenarray mit Einheitszelle

$W = \begin{pmatrix} w_{11} & w_{12} \\ w_{21} & w_{22} \end{pmatrix}$ erfolgen, der Vergrößerungsfaktor $v = z/e$ betragen.

Das Sollbild ist durch ein Objekt $f(x,y)$ gebildet, welches im betrachteten Spezialfall so gewählt werden muss, dass es in die Zelle $T = (v-1) \cdot W$ passt. Dann gilt für das periodisch anzulegende Motivbild

$$f\left(v \cdot \left(\begin{pmatrix} x \\ y \end{pmatrix} \bmod U\right)\right), \quad U = (1 - 1/v) \cdot W \tag{E5}$$

und für das periodisch erscheinende in der Höhe z schwebende Sollbild

$$f\left(\begin{pmatrix} x \\ y \end{pmatrix} \bmod T\right), \quad T = (v-1) \cdot W.$$

Wenn man nicht nur im Raum stehende Objekte darstellen will, sich die Objekte bei Änderung der Betrachtungsrichtung also beliebig bewegen sollen, wird anstelle der Vergrößerung v eine beliebige Abbildung A angewandt, die neben der Vergrößerung auch Drehungen und Scherungen umfasst. Wie in der Druckschrift WO 2007/076952 A2, deren Offenbarung insoweit in die vorliegende Beschreibung aufgenommen wird, genauer beschrieben, gilt dann:

Es liegt ein Linsenarray mit der Einheitszelle $W = \begin{pmatrix} w_{11} & w_{12} \\ w_{21} & w_{22} \end{pmatrix}$ vor, sowie eine Vergrößerungs- und Be-

wegungsmatrix $A = \begin{pmatrix} a_{11} & a_{12} \\ a_{21} & a_{22} \end{pmatrix}$. Ein Sollbild ist durch ein Objekt f(x,y) gegeben, das so gewählt wird, dass es in die Zelle T = (A - I) ·W passt. Dann gilt für das periodisch anzulegende Motivbild:

$$f\left( A \cdot \left( \begin{pmatrix} x \\ y \end{pmatrix} \bmod U \right) \right), \quad U = (I - A^{-1}) \cdot W \qquad (E6)$$

und für das periodisch erscheinende Sollbild

$$f\left( \begin{pmatrix} x \\ y \end{pmatrix} \bmod T \right), \quad T = (A - I) \cdot W = A \cdot U.$$

Da die Formel (E5) nur mit Vergrößerung arbeitet, wird sie dem Moiré-Magnifier zugeordnet. Bei Formel (E6) tritt anstelle der Vergrößerung die allgemeine Abbildung A auf, so dass das hierdurch eingeführte Prinzip im Rahmen dieser Beschreibung als "Moiré-Mapping" bezeichnet wird.

**Beispiel 9:**

Bei den Beispielen 1 bis 8 war der Vektor (d₁(x,y), d₂(x,y)) identisch Null, die Zellengrenzen waren über die ganze Fläche gleichförmig verteilt. In manchen Ausgestaltungen kann es jedoch auch von Vorteil sein, das Raster der Zellen in der Motivebene ortsabhängig zu verschieben (($d_1(x,y)$, $d_2(x,y)$) ≠ 0), weil sich dadurch beim Ändern der Betrachtungsrichtung spezielle optische Effekte erzielen lassen. Mit g ≡ 1 stellen sich die Formeln (E1) und (E2) dann in der Form

$$m(x,y) = \qquad (E7)$$

$$f\left( \begin{pmatrix} x \\ y \end{pmatrix} + (A - I) \cdot \left( \left( \left( \begin{pmatrix} x \\ y \end{pmatrix} + W \cdot \begin{pmatrix} d_1(x,y) \\ d_2(x,y) \end{pmatrix} \right) \bmod W \right) - W \cdot \begin{pmatrix} d_1(x,y) \\ d_2(x,y) \end{pmatrix} - W \cdot \begin{pmatrix} c_1 \\ c_2 \end{pmatrix} \right) \right)$$

mit 0 ≤ $d_1(x, y)$, $d_2(x, y)$ < 1 dar. Wie aus der Formel (E7) ersichtlich, werden durch Werte $d_1$ und/oder $d_2$ ungleich Null nur die Zellengrenzen verschoben, das Raster und die Phase der Motivelemente verändern sich nicht.

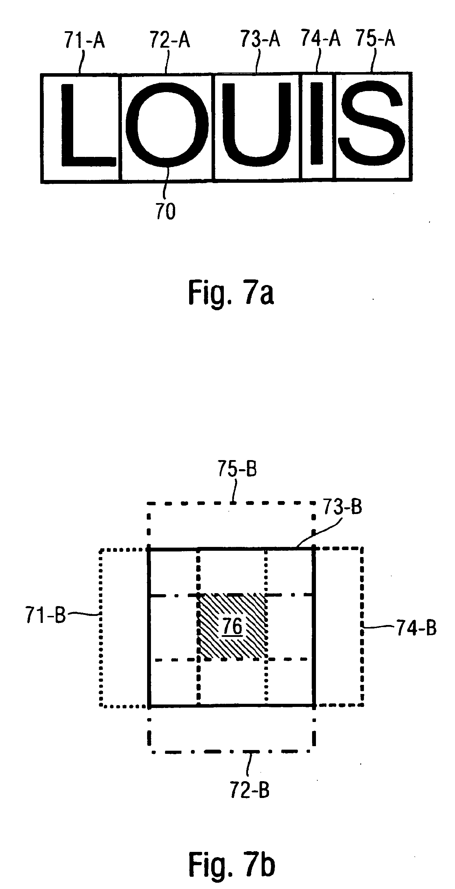

Zur Illustration zeigt Fig. 7 ein Ausführungsbeispiel mit einem bereichsweise konstanten Zellenraster. Dabei wird als Sollbild 70 der in der Fig. 7(a) dargestellte Schriftzug "LOUIS" vorgegeben, der in Sollbildbereiche 71-A, 72-A, 73-A, 74-A und 75-A unterteilt ist, in denen das Zellenraster jeweils konstant ist. An den Bereichsgrenzen treten Phasensprünge zwischen den Zellenrastern der aneinandergrenzenden Bereiche auf.

Fig. 7(b) zeigt schematisch, wie die Zellenraster der fünf Teilbereiche 71-B, 72-B, 73-B, 74-B und 75-B im Motivbild gegeneinander verschoben sind. Vereinfachend ist dabei jedes Raster durch den Umriss einer einzigen Zelle dargestellt.

Ist das Linsenraster nun so angeordnet, dass die Mittelpunkte der Linsen genau in der Mitte der Zellen 73-B liegen, so zielen bei senkrechter Betrachtung die Brennpunkte in den zentralen Bereich 76 aller Teilbereiche 71-B bis 75-B, der Betrachter erkennt also das gesamte Wort "LOUIS". Wird das Sicherheitselement nach rechts gekippt, so überqueren die Brennpunkte der Linsen im Bereich 71-B des Motivbilds die Zellengrenzen und führen dort zu einem Motivsprung. Im dargestellten Sollbild verlässt der Buchstabe "L" des Bereichs 71-A dadurch seinen Platz im Wort "LOUIS" und springt je nach Art der Abbildung an einen anderen Ort.

Wird das Sicherheitselement nach links gekippt, so überqueren entsprechend die Brennpunkte der Linsen im Bereich 74-B des Motivbilds die Zellengrenzen und führen zu einem Motivsprung im Sollbild, bei dem der Buchstabe "I" des Bereichs 74-A seinen Platz im Wort "LOUIS" verlässt. Ein analoges Verhalten zeigen die Buchstaben "O" und "S" der Bereiche 72-B bzw. 75-B beim Kippen des Sicherheitselements in vertikaler Richtung.

Eine weitere Möglichkeit, ortsabhängige Zellengrenzen einzusetzen, besteht in einer zufälligen Verschiebung aller Linsenzellen außerhalb eines gemeinsamen Bereichs. Solange das Sicherheitselement aus einem Raumwinkelbereich betrachtet wird, von dem aus der den Zellen gemeinsame Bereich sondiert wird, ist das entsprechende Sollbild zu erkennen. Verlässt man diesen Bereich durch Kippen des Elements in eine beliebige Richtung, so überlagern sich die von den einzelnen Zellen erzeugten Bildpunkte in zufälliger Art, so dass das dargestellte Sollbild verschwindet und durch eine Mischfarbe ersetzt wird.

**Beispiel 10:**

Für manche Anwendungen kann eine Winkelbeschränkung bei der Betrachtung der Motivbilder erwünscht sein, d.h. das dargestellte Sollbild soll nicht aus allen Richtungen sichtbar oder sogar nur in einem kleinen Raumwinkelbereich zu erkennen sein.

Eine solche Winkelbeschränkung kann insbesondere in Kombination mit den weiter unten beschriebenen Wechselbildern von Vorteil sein, da das Umschalten von einem Motiv zum anderen im Allgemeinen nicht von beiden Augen gleichzeitig wahrgenommen wird. Dies kann dazu führen, dass während des Umschaltens ein unerwünschtes Doppelbild als Überlagerung benachbarter Bildmotive zu sehen ist. Werden die Einzelbilder jedoch durch einen Rand geeigneter Breite gesäumt, kann eine solche visuell unerwünschte Überlagerung unterdrückt werden.

Weiter hat sich gezeigt, dass die Abbildungsqualität bei schräger Aufsicht auf das Linsenarray unter Umständen deutlich nachlassen kann: Während bei senkrechter Betrachtung der Anordnung ein scharfes Bild zu erkennen ist, wird das Bild in diesem Fall bei zunehmendem Kippwinkel unschärfer und wirkt verschwommen. Aus diesem Grund kann eine Winkelbeschränkung auch bei der Darstellung einzelner Sollbilder vorteilhaft sein, wenn sie insbesondere die Flächenbereiche zwischen den Linsen, die erst bei relativ hohen Kippwinkeln durch die Linsen sondiert werden, ausblendet. Dadurch verschwindet das Sollbild für den Betrachter beim Kippen, ehe es verschwommen wahrgenommen werden kann.

Eine solche Winkelbeschränkung kann durch eine Maskenfunktion $g \neq 1$ in Formel (E1) erreicht werden. Ein einfaches Beispiel für eine solche Maskenfunktion ist

$$g\begin{pmatrix} x \\ y \end{pmatrix} = \begin{cases} 1 & \textit{für} \quad (x,y)\bmod W = t_1(w_{11}, w_{21}) + t_2(w_{12}, w_{22}) \\ & \textit{mit } k_{11} \leq t_1 \leq k_{12} \textit{ und } k_{21} \leq t_2 \leq k_{22} \\ 0 & \textit{sonst} \end{cases}$$

mit $0 \leq k_{ij} < 1$. Dadurch wird von der Gitterzelle $(w_{11}, w_{21})$, $(w_{12}, w_{22})$ nur ein Ausschnitt genutzt, und zwar der Bereich $k_{11} \cdot (w_{11}, w_{21})$ bis $k_{12} \cdot (w_{11}, w_{21})$ in Richtung des ersten Gittervektors und der Bereich $k_{21} \cdot (w_{12}, w_{22})$ bis $k_{22} \cdot (w_{12}, w_{22})$ in Richtung des zweiten Gittervektors. Als Summe der beiden Randbereiche beträgt die Breite der ausgeblendeten Streifen $(k_{11}+(1-k_{12})) \cdot (w_{11}, w_{21})$ bzw. $(k_{21}+(1-k_{22})) \cdot (w_{12}, w_{22})$.

Es versteht sich, dass die Funktion $g(x,y)$ im Allgemeinen die Verteilung belegter und freier Flächen innerhalb einer Zelle beliebig vorgeben kann. Maskenfunktionen können neben der Winkelbeschränkung auch der Bildfeldeinschränkung dienen, d.h., das Sollbild wird bereichsweise abgedeckt. In diesem Fall ist die Maskenfunktion gegeben durch

$$g\begin{pmatrix} x \\ y \end{pmatrix} = \begin{cases} 1 & \text{in Bereichen in denen das Sollbild sichtbar sein soll} \\ 0 & \text{in Bereichen in denen das Sollbild nicht sichtbar sein soll} \end{cases}$$

Bei der Verwendung einer Maskenfunktion $g \neq 1$ erhält man für den Fall von ortsunabhängigen Zellengrenzen im Motivbild aus den Formeln (E1) und (E2) für die Bildfunktion $m(x,y)$:

$$m(x,y) = f\left(\begin{pmatrix} x \\ y \end{pmatrix} + (A - I) \cdot \left(\left(\begin{pmatrix} x \\ y \end{pmatrix}\bmod W\right) - W \cdot \begin{pmatrix} c_1 \\ c_2 \end{pmatrix}\right)\right) \cdot g(x,y)$$

**Beispiel 11:**

Während, wie in Beispiel 8 ausführlich erläutert, das darzustellende Objekt bei Gestaltungen, die den Moiré-Effekt nutzen, zwangsläufig in Form einer periodischen Arrayanordnung wiederholt auftritt, erscheint beim erfindungsgemäßen Modulo-Magnifier und beim allgemeineren Modulo-Mapping das darzustellende Objekt als Einzelbild. In bevorzugten Ausgestaltungen der Erfindung ist das Sollbild nicht periodisch.

Ist jedoch eine Wiederholung des Objekts erwünscht, so kann der periodischen Anordnung eines Objekts im darzustellenden Sollbild einerseits dadurch Rechnung getragen werden, dass das Sollbild mit einer Mehrzahl periodisch angeordneter Objekte vorgegeben wird. Alternativ kann das Objekt mit seiner Periodizität nur einmal vorgegeben, und die Periodizität in den Formeln zur Berechnung des Motivbilds berücksichtigt werden.

Bei letzterem Ansatz wird das Objekt f(x,y) mit einer durch eine 2x2 Matrix P beschriebene Einheitszelle vorgegeben, die die gewünschte Periodizität beschreibt. Um die periodische Anordnung zu berücksichtigen, genügt es, in den jeweiligen Formeln $\begin{pmatrix} x \\ y \end{pmatrix}$ durch $\begin{pmatrix} x \\ y \end{pmatrix}$ mod $P$ zu ersetzen. Beispielsweise stellt sich die Formel (E4) dann in folgender Form dar:

$$m(x,y) = f\left(\begin{pmatrix} x \\ y \end{pmatrix} \bmod P + (A - I) \cdot \left(\left(\begin{pmatrix} x \\ y \end{pmatrix} \bmod P\right) \bmod W - W \cdot \begin{pmatrix} c_1 \\ c_2 \end{pmatrix}\right)\right)$$

mit $A = \begin{pmatrix} a_{11} & a_{12} \\ a_{21} & a_{22} \end{pmatrix}$ , $W = \begin{pmatrix} w_{11} & w_{12} \\ w_{21} & w_{22} \end{pmatrix}$ , $P = \begin{pmatrix} p_{11} & p_{12} \\ p_{21} & p_{22} \end{pmatrix}$.

Bei einer periodischen Gestaltung wird die Periodizität P vorzugsweise so gewählt, dass die Einheitszelle P $\neq$ (A - I) W ist.

**Ende Beispiel 11**

Bei den bisherigen Ausführungen stellt die Modulo-Vergrößerungs-anordnung bei der Betrachtung meist ein einzelnes Sollbild dar. Die Erfindung umfasst jedoch auch Gestaltungen, bei denen die Modulo-Vergrößerungsanordnung mehrere Sollbilder gleichzeitig oder im Wechsel darstellt. Bei der gleichzeitigen Darstellung können die Sollbilder insbesondere in verschiedenen scheinbaren Schwebehöhen bzw. -tiefen erscheinen. Bei im Wechsel dargestellten Sollbildern können die Sollbilder insbesondere beim Kippen der Anordnung ineinander übergehen. Die verschiedenen Sollbilder können voneinander unabhängig sein oder inhaltlich aufeinander bezogen sein und beispielsweise einen Bewegungsablauf darstellen.

Nachfolgend wird zunächst die allgemeine formelmäßige Beschreibung der Motivbilder solcher Modulo-Vergrößerungsanordnungen zur Darstellung mehrerer Sollbilder angegeben und dann werden zur Illustration einige konkrete Ausführungsbeispiele näher beschrieben.

Im allgemeinen Fall dient die Modulo-Vergrößerungsanordnung der Darstellung von n Sollbildern (n$\geq$1), die jeweils durch eine Bildfunktion $f_i(x,y)$ (i=1,2,...n) gegeben sind. Für jedes Sollbild kann eine eigene Vergrößerungs-und Bewegungsmatrix $A_i$ und eine eigene Maskenfunktion $g_i$ vorgegeben sein, so dass sich für jedes Sollbild eine beschreibende Funktion hi(x,y) angeben lässt, die analog zu den Einzelbildformeln (E1) und (E2) gegeben ist durch (M1):

$$h_i(x,y) = f_i\left(\begin{pmatrix} x \\ y \end{pmatrix} + (A_i(x,y) - I) \cdot \left(\left(\begin{pmatrix} x \\ y \end{pmatrix} + w_{di}(x,y)\right) \bmod W - w_{di}(x,y) - w_{ci}(x,y)\right)\right) \cdot g_i(x,y)$$

$$w_{di}(x,y) = W \cdot \begin{pmatrix} d_{i1}(x,y) \\ d_{i2}(x,y) \end{pmatrix} \text{ und } w_{ci}(x,y) = W \cdot \begin{pmatrix} c_{i1}(x,y) \\ c_{i2}(x,y) \end{pmatrix}. \qquad (M2)$$

Die Verknüpfung der n beschreibenden Funktionen $h_i$ zur Berechnung der Bildfunktion des Motivbilds wird durch eine Masterfunktion F beschrieben:

$$m(x,y) = F(h_1, h_2, \ldots h_n).\tag{M3}$$

Die Masterfunktion F kann insbesondere die Summenfunktion darstellen, so dass

$$m(x,y) = F(h_1, h_2, \ldots h_n) = \sum_{i=1}^{n} (h_i(x,y))\tag{M4}$$

gilt. Weitere Beispiele für mögliche Masterfunktionen F sind weiter unten insbesondere in Beispiel 14 angegeben.

**Beispiel 12:**

Als erstes Beispiel für Gestaltungen mit mehreren Sollbildern dient ein einfaches Kippbild, bei dem sich zwei Sollbilder $f_1(x,y)$ und $f_2(x,y)$ abwechseln, sobald das Sicherheitselement in entsprechender Weise gekippt wird. Unter welchen Betrachtungswinkeln der Wechsel zwischen den beiden Sollbildern stattfindet, wird durch die Maskenfunktionen $g_1$ und $g_2$ festgelegt. Um zu verhindern, dass - selbst bei Betrachtung mit nur einem Auge - beide Bilder gleichzeitig zu sehen sind, werden die Träger der Funktionen $g_1$ und $g_2$ disjunkt gewählt.

Als Masterfunktion F wird die Summenfunktion gewählt. Damit ergibt sich für die Bildfunktion des Motivbilds als Formel (M5)

$$m(x,y) = \left( f_1\left( \binom{x}{y} + (A_1 - I) \cdot \left( \left( \binom{x}{y} \bmod W \right) - W \cdot \binom{c_{11}}{c_{12}} \right) \right) \right) \cdot g_1\binom{x}{y} +$$

$$+ \left( f_2\left( \binom{x}{y} + (A_2 - I) \cdot \left( \left( \binom{x}{y} \bmod W \right) - W \cdot \binom{c_{21}}{c_{22}} \right) \right) \right) \cdot g_2\binom{x}{y}$$

Für ein schachbrettartiges Wechseln der Sichtbarkeit der beiden Sollbilder können die Funktionen $g_1$ und $g_2$ beispielsweise gemäß den folgenden Formeln definiert werden. In diesem Beispiel wurden die Grenzen zwischen den Bildbereichen im Motivbild bei 0,5 gewählt, so dass die zu den beiden Bildern $f_1$ und $f_2$ gehörigen Flächenabschnitte gleich groß sind. Natürlich können die Grenzen im allgemeinen Fall beliebig gewählt werden. Die Lage der Grenzen bestimmt die Raumwinkelbereiche, von denen aus die beiden Sollbilder zu sehen sind.

$$g_1\binom{x}{y} = \begin{cases} 1 & \textit{für} \quad (x,y) \bmod W = t_1(w_{11}, w_{21}) + t_2(w_{12}, w_{22}) \\ & \qquad \textit{mit } 0 \le t_1, t_2 < 0.5 \textit{ oder } 0.5 \le t_1, t_2 < 1 \\ \\ 0 & \textit{sonst} \end{cases}$$

$$g_2\binom{x}{y} = \begin{cases} 0 & \textit{für} \quad (x,y) \bmod W = t_1(w_{11}, w_{21}) + t_2(w_{12}, w_{22}) \\ & \qquad \textit{mit } 0 \le t_1, t_2 < 0.5 \textit{ oder } 0.5 \le t_1, t_2 < 1 \\ \\ 1 & \textit{sonst} \end{cases}$$

Statt schachbrettartig können sich die Sollbilder auch streifenweise abwechseln, beispielsweise durch Verwendung der folgenden Maskenfunktionen als Formel (M6):

$$g_1\begin{pmatrix} x \\ y \end{pmatrix} = \begin{cases} 1 & \textit{für} \quad (x,y) \bmod W = t_1(w_{11},w_{21}) + t_2(w_{12},w_{22}) \\ & \qquad\qquad \textit{mit } 0 \le t_1 < 0.5 \textit{ und } t_2 \textit{ beliebig} \\ 0 & \textit{sonst} \end{cases}$$

$$g_2\begin{pmatrix} x \\ y \end{pmatrix} = \begin{cases} 0 & \textit{für} \quad (x,y) \bmod W = t_1(w_{11},w_{21}) + t_2(w_{12},w_{22}) \\ & \qquad\qquad \textit{mit } 0 \le t_1 < 0.5 \textit{ und } t_2 \textit{ beliebig} \\ 1 & \textit{sonst} \end{cases}$$

In diesem Fall tritt ein Wechsel der Bildinformation auf, wenn das Sicherheitselement entlang der durch den Vektor ($w_{11}$, $w_{21}$) angegebenen Richtung gekippt wird, wohingegen Kippen entlang des zweiten Vektors ($w_{12}$, $w_{22}$) zu keinem Bildwechsel führt. Auch hier wurde die Grenze bei 0,5 gewählt, d.h. die Fläche des Motivbilds wurde in Streifen gleicher Breite aufgeteilt, die abwechselnd die Informationen der beiden Sollbilder enthalten.

Liegen die Streifengrenzen exakt unter den Linsenmittelpunkten bzw. den Linsengrenzen, so sind die Raumwinkelbereiche, unter denen die beiden Bilder zu sehen sind, gleich verteilt: beginnend bei senkrechtem Aufblick sieht man von der rechten Hälfte der Hemisphäre aus betrachtet zunächst das eine der beiden Sollbilder, von der linken Hälfte der Hemisphäre zunächst das andere Sollbild. Im Allgemeinen kann die Grenze zwischen den Streifen natürlich beliebig gelegt werden.

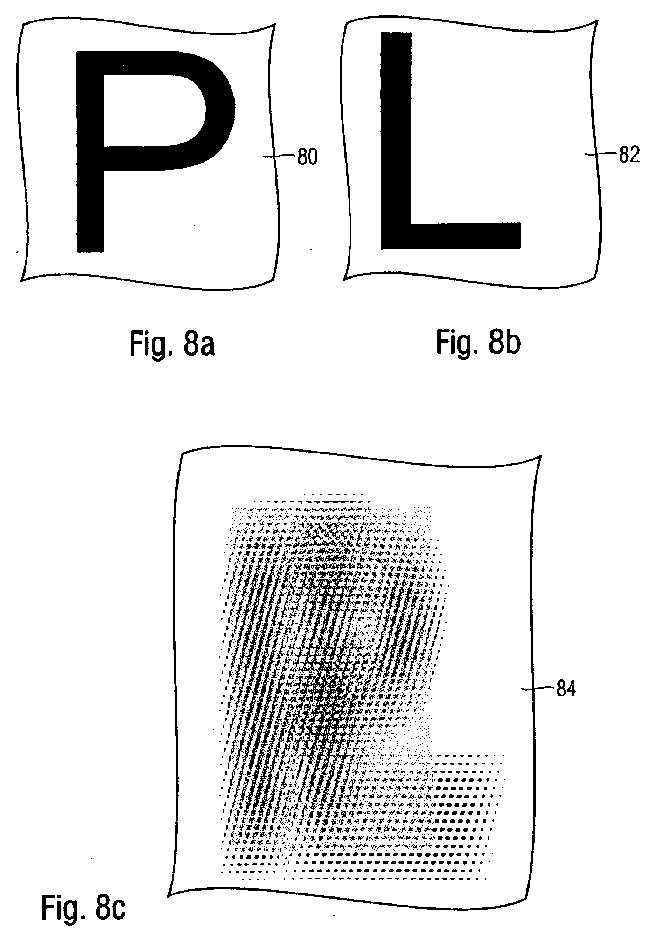

Zur Illustration zeigt Fig. 8 ein Beispiel eines Kippbilds, das als erstes Sollbild 80 den Buchstaben "P" (Fig. 8(a)) und als zweites Sollbild 82 den Buchstaben "L" (Fig. 8(b)) darstellt. Aus ersten Betrachtungsrichtungen soll dabei nur der Buchstabe "P" sichtbar sein, während aus zweiten Betrachtungsrichtungen nur der Buchstabe "L" sichtbar sein soll. Der Bildwechsel soll beim Kippen des Elements um eine vertikale Achse erfolgen. Um dies zu erreichen, wird die Bildfunktion des Motivbilds mithilfe der Formeln (M5) und (M6) berechnet. Das resultierende Motivbild 84 ist in Fig. 8(c) dargestellt.

Es versteht sich, dass die geschilderten Fälle für schachbrettartiges und streifenweises Wechseln der Bildinformation lediglich Beispiele darstellen. Im Allgemeinen kann die unter einer Linse befindliche Fläche beliebig in Teilbereiche untergliedert und periodisch fortgesetzt werden, so dass eine beliebige Parkettierung entsteht. Dabei ist es nicht erforderlich, dass die gesamte Fläche des Motivbilds mit Bildelementen gefüllt wird: freigelassene Flächen führen dazu, dass aus den zugehörigen Raumwinkelbereichen kein Bild zu sehen ist, was unerwünschte Doppelbilder vermeiden kann, wie oben in Zusammenhang mit Beispiel 10 bereits ausgeführt.

Im Allgemeinen sind Wechselbilder dadurch charakterisiert, dass die für den Betrachter sichtbare Bildinformation vom Betrachtungswinkel abhängt: Von einem definierten ersten Raumwinkelbereich aus sieht der Betrachter ein erstes Sollbild, während er aus einem zweiten Raumwinkelbereich ein anderes, zweites Sollbild erkennen kann.

Grundsätzlich ist die Zahl der dargestellten Sollbilder nicht begrenzt, wenngleich herstellungsbedingte Toleranzen durchaus zu einer praktischen Einschränkung der Bilderzahl führen können. Wichtige Einflussgrößen sind das Auflösungsvermögen der Apparatur, mit der die Bilder erzeugt werden, und die Qualität der Linsen, mit deren Hilfe die Bildinformation ausgelesen wird. Im Idealfall tastet die Linse den gesamten unter ihr liegenden Flächenbereich der Motivebene mit einem möglichst kleinen Brennpunkt ab. In der Praxis ist dies oft nur schwer zu erreichen, da die Brennweite der Linsen im Allgemeinen nicht völlig richtungsunabhängig ist. Die endliche Größe des Brennpunkts führt zu Unschärfe, sobald dieser die Grenzlinie zwischen zwei Bildbereichen auf der Motivebene überstreicht.

Eine weitere Einschränkung kann sich daraus ergeben, dass die beiden Augen des Betrachters das Sicherheitselement unter leicht unterschiedlichen Winkeln sehen, so dass während des Umschaltens von einem Bild zum anderen ein Doppelbild wahrgenommen werden kann, wie bereits oben bei Beispiel 10 beschrieben. Dennoch haben sich Kippbilder bzw. Wechselbilder der beschriebenen Art als visuell sehr attraktiv erwiesen. Neben der Bildinformation können auch Tiefen- und Bewegungseffekte von Bild zu Bild völlig unabhängig voneinander gewählt werden. Beispielsweise kann ein Bild scheinbar unterhalb der Papierebene liegen, während ein anderes deutlich darüber liegt.

**Beispiel 13:**

Bei Beispiel 12 wurden Wechselbilder beschrieben, bei denen je nach Betrachtungswinkel unterschiedliche Bilder zu sehen sind. Die Einzelmotive in einem solchen Wechselbild sind völlig unabhängig voneinander, ebenso deren scheinbare Lage und Bewegung im Raum. Im Gegensatz dazu stehen beim nunmehr beschriebenen Modulo-Morphing oder Modulo-Cinema die verschiedenen Bilder in direktem Sinnzusammenhang.

Im Falle des Modulo-Morphing verwandelt sich ein Startbild $f_1$ über eine definierte Anzahl von Zwischenstadien $f_i$ in ein anderes Bild, ein Endbild $f_n$. Beispielsweise könnte man die Verwandlung einer Kugel (Startbild) in einen Würfel (Endbild) oder eines menschlichen Gesichts (Startbild) in ein Tiergesicht (Endbild) darstellen. Beim Modulo-Cinema wiederum werden bevorzugt einfache Bewegungsabläufe gezeigt, beispielsweise eine Figur, die mit der Hand winkt. Dem Startbild $f_1$ entspricht eine Ausgangsposition, die über eine definierte Anzahl von Zwischenbildern $f_i$ in eine Endposition übergeht, welche im Endbild $f_n$ festgehalten ist.

Beispielsweise sollen die Sollbilder $f_1 \begin{pmatrix} x \\ y \end{pmatrix}, f_2 \begin{pmatrix} x \\ y \end{pmatrix} ...... \quad f_n \begin{pmatrix} x \\ y \end{pmatrix}$ beim Kippen entlang der durch den

Vektor $(w_{11}, w_{21})$ vorgegebenen Richtung nacheinander erscheinen. Um dies zu erreichen, wird mithilfe der Maskenfunktionen $g_i$ eine Einteilung in Streifen gleicher Breite vorgenommen. Auch hier gilt $w_{di} = 0$ für i=1...n, und als Masterfunktion F wird die Summenfunktion gewählt. Damit ergibt sich für die Bildfunktion des Motivbilds

$$m(x,y) = \sum_{i=1}^{n} \left( \left( f_i \left( \begin{pmatrix} x \\ y \end{pmatrix} \right) + (A_i - I) \cdot \left( \begin{pmatrix} x \\ y \end{pmatrix} \bmod W - W \cdot \begin{pmatrix} c_1 \\ c_2 \end{pmatrix} \right) \right) \cdot g_i \begin{pmatrix} x \\ y \end{pmatrix} \right)$$

$$g_i \begin{pmatrix} x \\ y \end{pmatrix} = \begin{cases} 1 & \textit{für} \quad (x,y) \bmod W = t_1(w_{11}, w_{21}) + t_2(w_{12}, w_{22}) \\ & \qquad\qquad \textit{mit } \dfrac{i-1}{n} \le t_1 < \dfrac{i}{n} \textit{ und } t_2 \textit{ beliebig} \\ \\ 0 & \textit{sonst} \end{cases}$$

Verallgemeinernd kann auch hier die Streifenbreite unregelmäßig gewählt werden, anstelle der in der Formel ausgedrückten regelmäßigen Aufteilung. Es ist zwar zweckmäßig, die Bilderfolge durch Kippen entlang einer Richtung (lineare Kippbewegung) abzurufen, zwingend erforderlich ist dies allerdings nicht. Stattdessen können die Morph- bzw. Bewegungseffekte beispielsweise auch durch mäanderförmige oder spiralenförmige Kippbewegungen abgespielt werden.

**Beispiel 14:**

Bei den Beispielen 12 und 13 wurde die Bildinformation jeweils so in dem Motivbild untergebracht, dass verschiedene, voneinander unabhängige oder auch motivmäßig miteinander in Verbindung stehende Sollbilder aus verschiedenen Blickwinkeln sichtbar werden. Dabei ist es grundsätzlich das Ziel, aus einer bestimmten Betrachtungsrichtung immer nur ein einziges Sollbild erkennen zu können, nicht jedoch zwei oder mehrere gleichzeitig.

Die gleichzeitige Sichtbarkeit mehrerer Sollbilder ist im Rahmen der Erfindung jedoch ebenfalls möglich und kann zu attraktiven optischen Effekten führen. Beispielsweise hat sich herausgestellt, dass die Wahrnehmung von Objekten in scheinbar unterschiedlichen Tiefen erleichtert wird, wenn diese Objekte gleichzeitig sichtbar sind.

Die verschiedenen Sollbilder $f_i(x,y)$ können dabei völlig unabhängig voneinander behandelt werden. Dies gilt sowohl für die jeweiligen Bildinhalte, als auch für die scheinbare Lage der dargestellten Objekte und deren Bewegung im Raum. Während die Bildinhalte mithilfe von Zeichnungen wiedergegeben werden können, werden Lage und Bewegung der dargestellten Objekte in den Dimensionen des Raums mithilfe der Bewegungsmatrizen $A_i$ beschrieben. Auch die relative Phase der einzelnen Sollbilder kann individuell eingestellt werden, wie durch die Koeffizienten $c_{ij}$ in der Formel (M1) ausgedrückt. Die relative Phase steuert, bei welchen Betrachtungsrichtungen die Motive zu erkennen sind.

Wird der Einfachheit halber für die Maskenfunktionen $g_i$ jeweils die Einheitsfunktion gewählt, sind die Zellengrenzen im Motivbild nicht ortsabhängig verschoben und wird als Masterfunktion F die Summenfunktion gewählt, so ergibt sich für eine Reihe übereinander gelegter Sollbilder $f_i$:

$$m(x,y) = \sum_i \left( f_i \left( \begin{pmatrix} x \\ y \end{pmatrix} + (A_i - I) \cdot \left( \begin{pmatrix} x \\ y \end{pmatrix} \bmod W - W \cdot \begin{pmatrix} c_{i1} \\ c_{i2} \end{pmatrix} \right) \right) \right).$$

Bei der Überlagerung mehrerer Bilder entspricht die Verwendung der Summenfunktion als Masterfunktion je nach Charakter der Bildfunktion f einer Addition der Grau-, Farb-, Transparenz- oder Dichte-Werte, wobei die resultierenden Bildwerte bei Überschreiten des maximalen Wertebereichs typischerweise auf den Maximalwert gesetzt werden. Es kann jedoch auch günstiger sein, andere Funktionen als die Summenfunktion für die Masterfunktion F zu wählen.

Sind die Sollbilder beispielsweise binär codiert, liegt die Bildinformation also in Form von Schwarz-Weiß-Zeichnungen vor, so kann als Masterfunktion die ODER-Verknüpfung gewählt werden, bei der ein Bildpunkt (x,y) gesetzt wird, wenn mindestens einer der entsprechenden Bildpunkte (x,y) in einer der beschreibenden Funktionen $h_i$ gesetzt ist.

Bei je zwei binären Sollbildern kann auch eine Exklusiv-Oder- (XOR)-Verknüpfung vorgenommen werden, bei der ein Bildpunkt des Motivbilds genau dann gesetzt wird, wenn die entsprechenden Bildpunkte der beschreibenden Funktionen $h_i$ nicht identisch sind.

Im Falle von Graustufenbelichtungen, bei denen die Bildinformation in Form von Graustufen gespeichert ist, kann es von Vorteil sein, wenn die Information des Bildes, welches dem Betrachter am nächsten zu sein scheint, über die anderen Bilder dominiert. Bei der Beurteilung können auch die Bewegungsmatrizen $A_i$ ausgewertet werden.

Andere Verknüpfungsregeln können sich nach der Intensität der darzustellenden Bildsignale richten: beispielsweise kann man das Signal mit dem höchsten Funktionswert als dominierend wählen, also als Masterfunktion F die Maximumsfunktion wählen:

$$m(x,y) = \max_i \left( f_i \left( \begin{pmatrix} x \\ y \end{pmatrix} + (A_i - I) \cdot \left( \begin{pmatrix} x \\ y \end{pmatrix} \bmod W - W \cdot \begin{pmatrix} c_{i1} \\ c_{i2} \end{pmatrix} \right) \right) \right).$$

Weitere Möglichkeiten bestehen darin, das Signal mit dem geringsten Funktionswert zu wählen, oder wie oben die Summe aller an einem bestimmten Punkt zusammentreffender Funktionswerte zu bilden. Gibt es eine maximale Obergrenze, beispielsweise die maximale Belichtungsintensität eines Laserbelichters, so kann man die Summe bei diesem Maximalwert abschneiden.

**Beispiel 15:**

Bei Gestaltungen mit übereinander gelegten Bildern werden vorzugsweise mehrere Objekte (Sollbilder) so angeordnet, dass sie bei üblicher Betrachtung, also bei Augenabstandrichtung in x-Richtung, in bestimmter Anordnung hintereinander liegen, sich teilweise überdecken und sich gegebenenfalls bei Änderung der Betrachtungsrichtung hintereinander bewegen.

Es seien n Sollobjekte $f_j(x,y)$, j = 1,...n vorgegeben, die jeweils in einer Tiefe $z_j$ mit $z_j > z_{j-1}$ liegen sollen. Die $A_j$-Matrix muss dann so gewählt werden, dass der linke obere Koeffizient gleich $z_j / e$ ist. Für das Motivbild ergibt sich

$$h_j(x,y) = f_j \left( \begin{pmatrix} x \\ y \end{pmatrix} + (A_j - I) \cdot \left( \begin{pmatrix} x \\ y \end{pmatrix} \bmod W - W \cdot \begin{pmatrix} c_{j1} \\ c_{j2} \end{pmatrix} \right) \right)$$

oder allgemein

$$h_j(x,y) = f_j \left( \begin{pmatrix} x \\ y \end{pmatrix} + (A_j - I) \cdot \left( \begin{pmatrix} x \\ y \end{pmatrix} \bmod W - W \cdot \begin{pmatrix} c_{j1} \\ c_{j2} \end{pmatrix} \right) \right) \cdot g_j(x,y).$$

Als Masterfunktion F wird eine modifzierte Minimumsfunktion gewählt: Ist $h_j$ an der Stelle (x,y) für mehrere j ungleich Null, so ist das kleinste j zu wählen.

Als wichtige Spezialfälle lassen sich angeben:

$$a) \quad A_j = \begin{pmatrix} \dfrac{z_j}{e} & 0 \\ 0 & \dfrac{z_j}{e} \end{pmatrix} = \dfrac{z_j}{e} \cdot I$$

Bei allen Betrachtungsrichtungen, allen Augenabstandsrichtungen und beim Drehen der Anordnung bleiben die scheinbaren Schwebetiefen $z_j$ unverändert.

$$b) \quad A_j = \begin{pmatrix} \dfrac{z_j}{e} & 0 \\ 0 & k \cdot \dfrac{z_j}{e} \end{pmatrix}$$

Bei diesem Spezialfall ändert sich die scheinbare Tiefe um Faktor k beim Drehen der Anordnung, also einer Änderung der Augenabstandsrichtung.

$$c) \quad A_j = \begin{pmatrix} \dfrac{z_j}{e} & \dfrac{z_j}{e} \cdot \cot \phi_2 \\ \dfrac{z_j}{e} \cdot \tan \phi_1 & \dfrac{z_j}{e} \end{pmatrix}$$

Bei normaler Betrachtung (Augenabstandsrichtung in x-Richtung) und Kippen der Anordnung in x-Richtung bewegen sich die Objekte in Richtung $\phi_1$ zur x-Achse, bei um 90° gedrehter Betrachtung (Augenabstandsrichtung in y-Richtung) und Kippen der Anordnung in y-Richtung bewegen sich die Objekte in Richtung $\phi_2$ zur x-Achse.

$$d) \quad A_j = \begin{pmatrix} \dfrac{z_j}{e} & 0 \\ 0 & 1 \end{pmatrix}, \quad bzw. \quad A_j = \begin{pmatrix} \dfrac{z_j}{e} & 0 \\ \dfrac{z_j}{e} \cdot \tan \phi_1 & 1 \end{pmatrix}$$

Bei normaler Betrachtung (Augenabstandsrichtung = x-Richtung) und Kippen der Anordnung in x-Richtung bewegen sich die Objekte in Richtung $\phi_1$, zur x-Achse. Die Betrachtung ist auch mit einem passenden Zylinderlinsenraster möglich.

**Beispiel 16:**

Alle im Rahmen dieser Beschreibung diskutierten Ausgestaltungen können auch nebeneinander oder ineinander angeordnet werden, beispielsweise als Wechselbilder wie in Beispiel 12 oder als übereinander gelegte Bilder wie in den Beispielen 14 und 15. Die Grenzen zwischen den Bildteilen müssen dabei nicht geradlinig verlaufen, sondern können beliebig gestaltet werden. Insbesondere können die Grenzen so gewählt werden, dass sie die Umrisslinien von Symbolen oder Schriftzügen, Muster, Formen jedweder Art, Pflanzen, Tieren oder Menschen darstellen.

Die neben- oder ineinander angeordneten Bildteile werden in bevorzugten Ausgestaltungen mit einem einheitlichen Linsenarray betrachtet. Zusätzlich kann sich auch die Vergrößerungs- und Bewegungsmatrix A der verschiedenen Bildteile unterscheiden, um beispielsweise spezielle Bewegungseffekte der einzelnen vergrößerten Motive zu ermöglichen. Es kann von Vorteil sein, die Phasenbeziehung zwischen den Bildteilen zu steuern, damit die vergrößerten Motive in definiertem Abstand zueinander erscheinen.

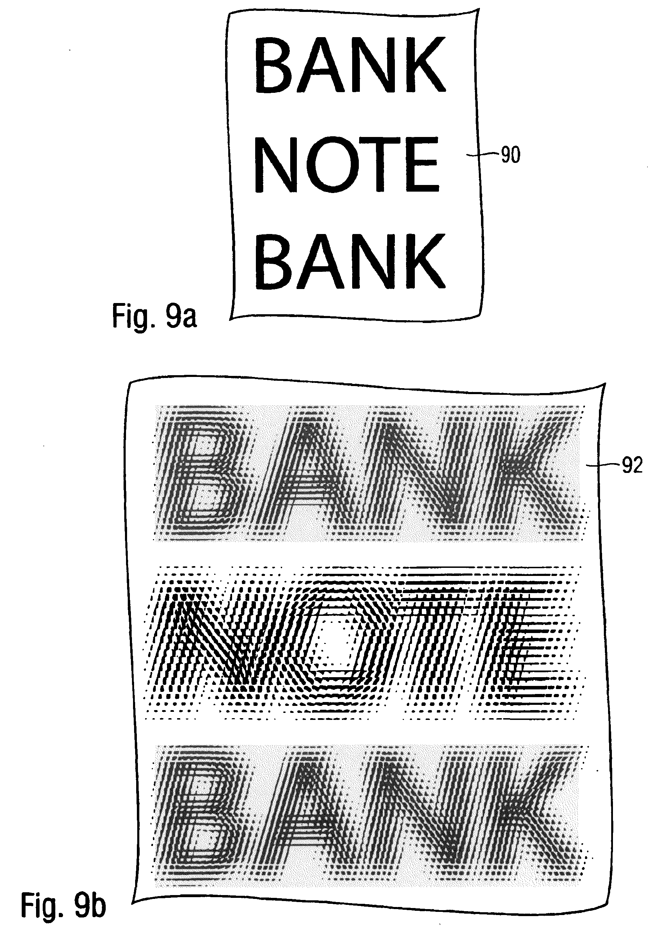

Ein Beispiel für nebeneinander angeordnete Bildteile, die mithilfe eines homogenen Linsenrasters abgebildet werden, ist in Fig. 9 dargestellt. Das Sollbild 90 besteht aus Worten BANK NOTE BANK, wobei bei Betrachtung des Motivbilds 92 mit einem geeigneten homogenen Linsenarray das Wort NOTE über der Linsenebene schwebt, und die beiden Worte BANK unterhalb der Linsenebene zu liegen scheinen.

**Beispiel 17:**

Die Vergrößerungs- und Bewegungsmatrix A ist für die Konstruktion einer Modulo-Vergrößerungsanordnung von herausragender Bedeutung, da sie bei Vorgabe eines Linsenrasters (definiert durch die Matrix W) die Berechnung der Motivbildebene mit der Größe und Anordnung der Bildelemente gestattet. Die erste Spalte der A-Matrix (Spaltenvektor) gibt an, in welche Richtung sich das vergrößerte Bild bewegt, wenn das Sicherheitsmerkmal um eine vertikale Achse gekippt wird. Die zweite Spalte beschreibt entsprechend das Verhalten beim Kippen um eine horizontale Achse.

In den bisher beschriebenen Varianten war die A-Matrix meist ortsunabhängig, d.h. insbesondere ihre vier Koeffizienten waren ortsunabhängig. Folglich erschienen alle Bereiche, die mit einer bestimmten A-Matrix berechnet worden waren, in sich homogen, was beispielsweise Tiefe und Bewegungseffekte betrifft.

Im allgemeinen Fall kann jedoch die Vergrößerungs- und Bewegungsmatrix A auch ortsabhängig sein, insbesondere können die vier Koeffizienten der A-Matrix als voneinander unabhängige Funktionen des Ortes aufgefasst werden. Bleibt man im Bild der Spaltenvektoren als Richtungsvektoren, so ergibt sich für ein Einzel-Sollbild ausgehend von Formel (E4) die Beziehung

$$m(x,y) = f\left(\begin{pmatrix} x \\ y \end{pmatrix} + \left(A(x,y) - I\right) \cdot \left(\begin{pmatrix} x \\ y \end{pmatrix} \bmod W - W \cdot \begin{pmatrix} c_1 \\ c_2 \end{pmatrix}\right)\right).$$

Ein so berechnetes Motivbild erzeugt bei der Betrachtung ein Sollbild, das sich beim seitlichen Kippen wie durch das Vektorfeld $\begin{pmatrix} a_{11}(x,y) \\ a_{21}(x,y) \end{pmatrix}$ vorgegeben bewegt, und sich beim senkrechten Kippen wie durch das Vektorfeld

$\begin{pmatrix} a_{12}(x,y) \\ a_{22}(x,y) \end{pmatrix}$ vorgegeben bewegt.

Mithilfe einer solchen ortsabhängigen Vergrößerungs- und Bewegungsmatrix A lässt sich beispielsweise eine Modulo-Vergrößerungsanordnung konstruieren, die beim Kippen um eine horizontale Achse eine Rotation oder eine nichtlineare Bewegung des vergrößerten Bildes zeigt. Das Kippverhalten um eine vertikale Achse ist davon unabhängig und kann für einen beliebigen anderen Effekt genutzt werden.

Mit einer ortsabhängigen Vergrößerungs- und Bewegungsmatrix kann auch die Vergrößerung ortsabhängig gestaltet werden.

An dieser Stelle soll auf einen weiteren interessanten Aspekt erfindungsgemäßer Gestaltungen hingewiesen werden. Obwohl die beiden Spaltenvektoren der Vergrößerungs- und Bewegungsmatrix grundsätzlich unabhängig voneinander das Kippverhalten in horizontaler und vertikaler Richtung bestimmen, sind sie dennoch visuell nicht gleichwertig. Die Ursache dafür liegt in der Physiognomie des Menschen: da die Augen nebeneinander in x-Richtung und nicht übereinander angeordnet sind, kann die in der ersten Spalte der Vergrößerungs- und Bewegungsmatrix enthaltene räumliche Information sofort erkannt werden, während sich die in der zweiten Spalte versteckte räumliche Information erst aus dem Bewegungsverhalten beim Kippen um eine horizontale Achse erschließt.

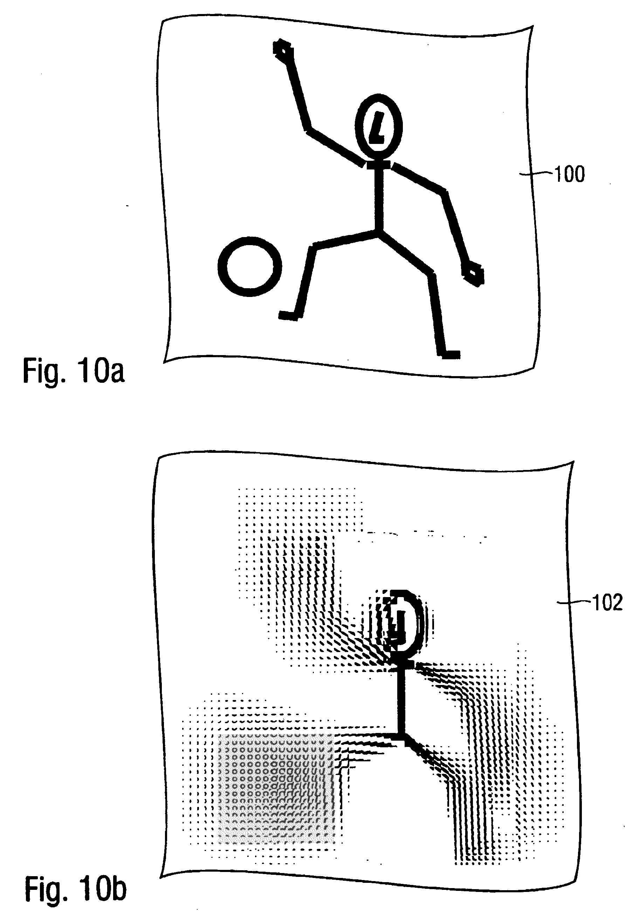

Zur Illustration der Wirkung einer ortsabhängigen Vergrößerungs- und Bewegungsmatrix zeigt Fig. 10 in (a) als Sollbild 100 ein Fußball spielendes Männchen. Während es den Ball anstößt, zappelt es mit den Händen und Füßen. Die Bewegungen des Balles folgen den Bewegungen der Fußspitze. Das berechnete Motivbild 102 ist in Fig. 10(b) dargestellt.

Bei einem Linsenraster W, das durch

$$W = \begin{pmatrix} 2.0mm & 0mm \\ 0mm & 2.0mm \end{pmatrix}$$

gegeben ist, wird der gewünschte Bewegungsablauf mit folgender Vergrößerungs- und Bewegungsmatrix realisiert:

$$A(x,y) = \frac{1}{3}\begin{pmatrix} x/mm - 45 & 0 \\ 0 & x/mm - 45 \end{pmatrix}.$$

Es versteht sich, dass die Effekte einer ortsabhängigen Vergrößerungs- und Bewegungsmatrix auch bei Gestaltungen mit mehreren Sollbildern eingesetzt werden können. Beispielsweise kann eine Modulo-Vergrößerungsanordnung beim seitlichen Kippen zwischen mehreren Sollbildern wechseln (siehe Beispiel 12), die beim senkrechten Kippen jeweils einen Bewegungseffekt der beschriebenen Art zeigen.

**Beispiel 18:**

Nicht nur die Vergrößerungs- und Bewegungsmatrix A kann ortsabhängig sein, auch der Vektor $(c_1(x,y), c_2(x,y))$ kann eine Funktion des Ortes sein:

Im Gegensatz zu Beispiel 14 variiert der Vektor $(c_1(x,y), c_2(x,y))$ dabei nicht nur von Sollbild zu Sollbild, sondern innerhalb eines Sollbilds als Funktion des Orts. Wie weiter oben erläutert, beschreibt der Vektor $(c_1(x,y), c_2(x,y))$ die Position der Zellen in der Motivbildebene relativ zum Linsenarray W, wobei als Bezugspunktemenge das Raster der Linsenzentren betrachtet werden kann. Ist der Vektor $(c_1(x,y), c_2(x,y))$ eine Funktion des Ortes, so bedeutet dies, dass Änderungen von $(c_1(x,y), c_2(x,y))$ sich in einer Änderung der relativen Positionierung zwischen den Zellen in der Motivbildebene und den Linsen manifestieren, was zu Schwankungen in der Periodizität der Motivbildelemente führt.

Beispielsweise kann eine Ortsabhängigkeit des Vektors $(c_1(x,y), c_2(x,y))$ vorteilhaft eingesetzt werden, wenn eine Folienbahn verwendet wird, die auf der Vorderseite eine Linsenprägung mit vollflächig homogenem Raster W trägt. Prägt man auf der Rückseite eine Modulo-Vergrößerungsanordnung mit ortsunabhängigem $(c_1, c_2)$ ein, so bleibt es dem Zufall überlassen, unter welchen Betrachtungswinkeln man welche Features erkennt, wenn keine exakte Registrierung zwischen Vorder- und Rückseitenprägung möglich ist. Variiert man hingegen $(c_1(x,y), c_2(x,y))$ quer zur Folienlaufrichtung, so findet sich ein streifenförmiger Bereich in Laufrichtung der Folie, der die geforderte Positionierung zwischen Vorder- und Rückseitenprägung erfüllt.

Darüber hinaus kann man $(c_1(x,y), c_2(x,y))$ beispielsweise auch in Laufrichtung der Folie variieren, um in jedem Streifen in Längsrichtung der Folie Abschnitte vorzufinden, welche die richtige Registrierung aufweisen. Dadurch lässt sich verhindern, dass metallisierte Hologrammstreifen oder Sicherheitsfäden von Banknote zu Banknote unterschiedlich aussehen.

**Ende Beispiel 18**

Zuletzt sei eine Verallgemeinerung der Modulo-Vergrößerungsanordnung erwähnt, bei der die Linsenelemente (bzw. allgemein die Betrachtungselemente) nicht in Form eines regelmäßigen Gitters angeordnet sein müssen, sondern mit unterschiedlichen Abständen beliebig im Raum verteilt sein können. Das auf Betrachtung mit einer solchen allgemeinen Betrachtungselement-Anordnung ausgelegte Motivbild lässt sich dann nicht mehr in der Modulo-Schreibweise beschreiben, ist jedoch durch folgende Beziehung

$$m(x,y) = \sum_{w \in W} \chi_{M(w)}(x,y) \cdot (f_2 \circ p_w^{-1})(x,y, \min\langle p_w(f_1^{-1}(1)) \cap pr_{XY}^{-1}(x,y), e_z\rangle)$$

eindeutig festgelegt. Dabei ist

$$pr_{XY} : R^3 \to R^2, \quad pr_{XY}(x, y, z) = (x, y)$$

die Projektion auf XY-Ebene,

$$\langle a, b \rangle$$

stellt das Skalarprodukt dar, wobei <(x, y, z), ez >, das Skalarprodukt von (x, y, z) mit ez = (0, 0,1) die z-Komponente ergibt, und die Mengenschreibweise

$$\langle A, x \rangle = \left\{ \langle a, x \rangle \mid a \in A \right\}$$

zur Abkürzung eingeführt wurde. Weiter wird die charakteristische Funktion verwendet, die für eine Menge A gegeben ist durch

$$\chi_A(x) = \begin{cases} 1 & \textit{falls } x \in A \\ 0 & \textit{sonst} \end{cases}$$

und das Lochraster bzw. Linsenraster $W = \{w_1, w_2, w_3,...\}$ ist durch eine beliebige diskrete Teilmenge von $R^3$ gegeben.

Die Perspektivenabbildung zum Rasterpunkt $w_m = (x_m, y_m, z_m)$ ist gegeben durch

$$p_{wm} : R^3 \to R^3 \, ,$$

$$p_{wm}(x, y, z) = (( z_m x - x_m z)/(z_m{-}z), ( z_m y - y_m z)/(z_m{-}z), ( z_m z )/(z_m{-}z) )$$

Jedem Rasterpunkt $w \in W$ wird eine Teilmenge M(w) der Zeichenebene zugeordnet. Hierbei seien für verschiedene Rasterpunkte die zugehörigen Teilmengen disjunkt.

Der zu modellierende Körper K werde durch die Funktion f = (f$_1$, f$_2$): $R^3 \to R^2$ definiert, wobei

$$f_1(x, y, z) = \begin{cases} 1 & \textit{falls } x \in K \\ 0 & \textit{sonst} \end{cases}$$

$$f_2(x, y, z) = \text{Helligkeit des Körpers K an der Stelle (x,y,z)}$$

Dann lässt sich die oben genannte Formel wie folgt verstehen:

$$\sum_{w \in W} \chi_{M(w)}(x,y) \cdot (f_2 \circ p_w^{-1})(x,y,\min\left(p_w(f_1^{-1}(1)) \cap pr_{xy}^{-1}(x,y), e_z\right))$$

Körper

Perspektivisches
Bild des Körpers

Perspektivisches Bild
des Körpers
geschnitten mit der
senkrechten
Geraden über (x,y)

Minimaler z-Wert, also
vorderer Rand des
perspektivischen Bildes
des Körpers

1, wenn
(x,y) in
Bildzelle
von w

Helligkeit am vorderen Rand des Körpers

**Patentansprüche**

1. Darstellungsanordnung für Sicherheitspapiere, Wertdokument, elektronische Anzeigeeinrichtungen oder andere Datenträger, mit einer Rasterbildanordnung zur Darstellung eines ebenen Sollbildes, welches durch eine Bildfunktion f(x,y) gegeben ist, die eine Bildeigenschaft des Sollbildes wie eine Helligkeitsverteilung, eine Farbverteilung, eine Binärverteilung, oder eine andere Bildeigenschaft wie Transparenz, Reflektivität, Dichte oder dergleichen angibt, mit

- einem Motivbild, das in eine Mehrzahl von Zellen eingeteilt ist, in denen jeweils abgebildete Bereiche des Sollbilds angeordnet sind,
- einem Betrachtungsraster aus einer Mehrzahl von Betrachtungselementen zur Rekonstruktion des Sollbildes bei der Betrachtung des Motivbilds mit Hilfe des Betrachtungsrasters,
- wobei das Motivbild mit seiner Einteilung in eine Mehrzahl von Zellen eine Bildfunktion m(x,y) aufweist, die gegeben ist durch

$$m(x,y) = f\left(\begin{pmatrix} x \\ y \end{pmatrix} + (A(x,y) - I) \cdot \left(\left(\left(\begin{pmatrix} x \\ y \end{pmatrix} + w_d(x,y)\right) \bmod W\right) - w_d(x,y) - w_c(x,y)\right)\right) \cdot g(x,y)$$

mit $w_d(x,y) = W \cdot \begin{pmatrix} d_1(x,y) \\ d_2(x,y) \end{pmatrix}$ und $w_c(x,y) = W \cdot \begin{pmatrix} c_1(x,y) \\ c_2(x,y) \end{pmatrix}$

- wobei die Einheitszelle des Betrachtungsrasters durch Gitterzellenvektoren $w_1 = \begin{pmatrix} w_{11} \\ w_{21} \end{pmatrix}$ und $w_2 = \begin{pmatrix} w_{12} \\ w_{22} \end{pmatrix}$

beschrieben und in der Matrix $W = \begin{pmatrix} w_{11} & w_{12} \\ w_{21} & w_{22} \end{pmatrix}$ zusammengefasst ist,

- die Matrix $A(x,y) = \begin{pmatrix} a_{11}(x,y) & a_{12}(x,y) \\ a_{21}(x,y) & a_{22}(x,y) \end{pmatrix}$ ein gewünschtes Vergrößerungs- und Bewegungsverhalten des dargestellten Sollbilds beschreibt,

- der Vektor $(c_1(x,y), c_2(x,y))$ mit $0 \leq c_1(x,y), c_2(x,y) < 1$ die relative Position des Zentrums der Betrachtungselemente innerhalb der Zellen des Motivbilds angibt,

- der Vektor $(d_1(x,y), d_2(x,y))$ mit $0 \leq d_1(x,y), d_2(x,y) < 1$ eine ortsabhängige Verschiebung der Zellengrenzen im Motivbild darstellt,

- $g(x,y)$ eine Maskenfunktion zur Einstellung der Sichtbarkeit des Soll-bilds ist, die entweder identisch 1 ist, oder die in Teilbereichen, insbesondere in Randbereichen der Zellen des Motivbilds Null ist und so eine Winkelbeschränkung bei der Betrachtung des Sollbilds beschreibt, und

- wobei das dargestellte Sollbild entweder keine Periodizität aufweist, oder eine Periodizität aufweist, die durch eine 2x2-Matrix P beschrieben wird, wobei die Periodizitäts-Einheitszelle ungleich (A-I) W ist.

2. Darstellungsanordnung nach Anspruch 1, **dadurch gekennzeichnet, dass** die Betrachtungselemente des Betrachtungsrasters periodisch oder lokal periodisch angeordnet sind, wobei sich im letzteren Fall die lokalen Periodenparameter im Verhältnis zur Periodizitätslänge entweder nur langsam ändern, oder eine abrupte Änderung der Periodizitätslänge erfolgt, wenn diese zuvor über eine im Vergleich zur Periodizitätslänge große Strecke konstant oder nahezu konstant gehalten wurde.

3. Darstellungsanordnung nach Anspruch 1 oder 2, **dadurch gekennzeicnnet, dass** die Betrachtungselemente durch nicht-zylindrische Mikrolinsen oder Mikrohohlspiegel, insbesondere durch Mikrolinsen oder Mikrohohlspiegel mit einer kreisförmigen oder polygonal begrenzten Basisfläche gebildet sind, oder dass die Betrachtungselemente durch langgestreckte Zylinderlinsen oder Zylinderhohlspiegel gebildet sind, deren Ausdehnung in Längsrichtung mehr als 250 $\mu$m, bevorzugt mehr als 300 $\mu$m, besonders bevorzugt mehr als 500 $\mu$m und insbesondere mehr als 1 mm beträgt, oder dass die Betrachtungselemente durch Lochblenden, Schlitzblenden, mit Spiegeln versehene Loch- oder Schlitzblenden, asphärische Linsen, Fresnellinsen, GRIN-Linsen (<u>G</u>radient <u>R</u>efraction <u>In</u>dex), Zonenplatten, holographische Linsen, Hohlspiegel, Fresnelspiegel, Zonenspiegel oder andere Elemente mit fokussierender oder auch ausblendender Wirkung gebildet sind.

4. Darstellungsanordnung nach wenigstens einem der Ansprüche 1 bis 3, **dadurch gekennzeichnet, dass** der Träger der Bildfunktion

$$ f\left( (A - I) \cdot \begin{pmatrix} x \\ y \end{pmatrix} \right) $$

größer als die Einheitszelle des Betrachtungsrasters W ist.

5. Darstellungsanordnung nach wenigstens einem der Ansprüche 1 bis 4, **dadurch gekennzeichnet, dass** das Betrachtungsraster und das Motivbild, fest miteinander verbunden sind, um ein Sicherheitselement mit beabstandet übereinander angeordnetem Betrachtungsraster und Motivbild zu bilden, oder dass das Betrachtungsraster und das Motivbilds so an verschiedenen Stellen eines Datenträgers angeordnet sind, dass das Betrachtungsraster und das Motivbild zur Selbstauthentifizierung übereinander legbar sind und im übereinander gelegten Zustand ein Sicherheitselement bilden, insbesondere, dass das Betrachtungsraster und das Motivbild durch Biegen, Falten, Knicken oder Klappen des Datenträgers übereinander legbar sind, oder dass das Motivbild von einer elektronischen Anzeigeeinrichtung angezeigt ist und das Betrachtungsraster zur Betrachtung des angezeigten Motivbilds fest mit der elektronischen Anzeigeeinrichtung verbunden ist, oder dass das Motivbild von einer elektronischen Anzeigeeinrichtung angezeigt ist und dass das Betrachtungsraster als ein separates Betrachtungsraster zur Betrachtung des angezeigten Motivbilds auf oder vor die elektronische Anzeigeeinrichtung bringbar ist.

6. Darstellungsanordnung nach Anspruch 5, **dadurch gekennzeichnet, dass** die Vergrößerung- und Bewegungsmatrix A durch

$$A = \begin{pmatrix} a_{11} & a_{12} \\ a_{21} & a_{22} \end{pmatrix} = \begin{pmatrix} v_1 \cdot \cos\phi_1 & v_2 \cdot \cos\phi_2 \\ v_1 \cdot \sin\phi_1 & v_2 \cdot \sin\phi_2 \end{pmatrix}$$

gegeben ist, so dass sich das dargestellte Sollbild beim waagrechten Kippen des Sicherheitselements um eine vertikale Achse mit einer Geschwindigkeit $v_1$ in Richtung $\phi_1$ bezogen auf die x-Achse bewegt und beim senkrechten Kippen um eine horizontale Achse mit der Geschwindigkeit $v_2$ in Richtung $\phi_2$ bezogen auf die x-Achse bewegt.

7. Darstellungsanordnung nach Anspruch 6, **dadurch gekennzeichnet, dass** $\phi_1$ ungleich 0° und ungleich 180° ist und/oder $\phi2$ ungleich 90° und ungleich -90° ist und/oder $v_1$ ungleich $v_2$ ist.

8. Darstellungsanordnung nach Anspruch 6 oder 7, **dadurch gekennzeichnet, dass** sich das Sollbild beim Kippen des Sicherheitselements unabhängig von der Kipprichtung stets in dieselbe Richtung bewegt.

9. Darstellungsanordnung nach Anspruch 5, **dadurch gekennzeichnet, dass** in der Vergrößerungs- und Bewegungsmatrix A
$a_{11} = z_1/e$ und $a_{22} = z_2/e$ ist, wobei e den effektiven Abstand des Betrachtungsrasters vom Motivbild bezeichnet, so dass das Sollbild bei Betrachtung mit Augenabstand in x-Richtung in einer Tiefe bzw. Höhe $z_1$ zu sehen ist und bei Betrachtung der um 90° gedrehten Anordnung mit Augenabstand in y-Richtung in einer Tiefe bzw. Höhe $z_2$ zu sehen ist, insbesondere, dass in der Vergrößerungs- und Bewegungsmatrix A

$$a_{11} = z_1/e \, , \ a_{21} = (z_1/e)\tan\phi_1$$

$$a_{22} = z_2/e \, , \ a_{12} = (z_2/e)\cot\phi_2$$

ist, so dass

- das Sollbild bei Betrachtung mit Augenabstand in x-Richtung in einer Tiefe bzw. Höhe $z_1$ zu sehen ist und sich beim waagrechten Kippen der Anordnung bzw. bei waagrechter Änderung der Betrachtungsrichtung in Richtung $\phi_1$ bezogen auf die x-Achse bewegt, und
- das Sollbild bei Betrachtung der um 90° gedrehten Anordnung mit Augenabstand in y-Richtung in einer Tiefe bzw. Höhe $z_2$ zu sehen ist und sich beim senkrechten Kippen der Anordnung bzw. bei senkrechter Änderung der Betrachtungsrichtung in Richtung $\phi_2$ bezogen auf die x-Achse bewegt.

10. Darstellungsanordnung nach wenigstens einem der Ansprüche 1 bis 9, **dadurch gekennzeichnet, dass** die Vergrößerungs- und Bewegungsmatrix A ortsunabhängig ist.

11. Darstellungsanordnung nach Anspruch 9, **dadurch gekennzeichnet, dass** eine oder mehrere der Vergrößerungen $z_1$, $z_2$ und der Bewegungsrichtungen $\phi_1$, $\phi_2$ ortsabhängig sind.

12. Darstellungsanordnung nach Anspruch 5, **dadurch gekennzeichnet, dass** das Betrachtungsraster ein Spaltraster, Zylinderlinsenraster oder Zylinder-Hohlspiegelraster ist, dessen Einheitszelle gegeben ist durch

$$W = \begin{pmatrix} \cos\gamma & -\sin\gamma \\ \sin\gamma & \cos\gamma \end{pmatrix} \cdot \begin{pmatrix} d & 0 \\ 0 & \infty \end{pmatrix}$$

mit dem Spalt- bzw. Zylinderachsenabstand d und einer durch einen Winkel $\gamma$ angegebenen Richtung der Spalt- bzw. Zylinderachse, und dass die Vergrößerungs- und Berwegungsmatrix A durch

$$A = \begin{pmatrix} \cos\gamma & -\sin\gamma \\ \sin\gamma & \cos\gamma \end{pmatrix} \cdot \begin{pmatrix} a_{11} & 0 \\ a_{21} & 1 \end{pmatrix} \cdot \begin{pmatrix} \cos\gamma & \sin\gamma \\ -\sin\gamma & \cos\gamma \end{pmatrix}$$

$$\text{mit} \begin{pmatrix} a_{11} & 0 \\ a_{21} & 1 \end{pmatrix} = \begin{pmatrix} v_1 \cdot \cos\phi_1 & 0 \\ v_1 \cdot \sin\phi_1 & 1 \end{pmatrix} = \begin{pmatrix} \dfrac{z_1}{e} & 0 \\ \dfrac{z_1}{e} \cdot \tan\phi_1 & 1 \end{pmatrix},$$ mit einer vorgewählten Bewegungsrichtung $\phi_1$ gegeben

ist.

13. Darstellungsanordnung nach wenigstens einem der Ansprüche 1 bis 12, **dadurch gekennzeichnet, dass** die Zellengrenzen im Motivbild nicht ortsabhängig verschoben sind, dass also der in der Bildfunktion m(x,y) auftretende Vektor $(d_1(x,y), d_2(x,y))$ konstant ist, oder dass die Zellengrenzen im Motivbild ortsabhängig verschoben sind, vorzugsweise, dass das Motivbild zwei oder mehr Teilbereiche mit unterschiedlichem, jeweils konstantem Zellenraster aufweist.

14. Darstellungsanordnung nach wenigstens einem der Ansprüche 1 bis 13, **dadurch gekennzeichnet, dass** die relative Position des Zentrums der Betrachtungselemente innerhalb der Zellen des Motivbilds ortsunabhängig, der Vektor $(c_1(x,y), c_2(x,y))$ also konstant ist, oder dass die relative Position des Zentrums der Betrachtungselemente innerhalb der Zellen des Motivbilds ortsabhängig ist.

15. Darstellungsanordnung für Sicherheitspapiere, Wertdokumente, elektronische Anzeigeeinrichtungen oder andere Datenträger, mit einer Rasterbildanordnung zur Darstellung einer Mehrzahl ebener Sollbilder, die durch Bildfunktionen $f_1(x,y)$, i=1,2,...n mit n≥1 gegeben sind, die jeweils eine Bildeigenschaft für das Sollbild $f_i$ wie eine Helligkeitsverteilung, eine Farbverteilung, eine Binärverteilung, oder eine andere Bildeigenschaft wie Transparenz, Reflektivität, Dichte oder dergleichen angeben, mit

  - einem Motivbild, das in eine Mehrzahl von Zellen eingeteilt ist, in denen jeweils abgebildete Bereiche der Sollbilder angeordnet sind,
  - einem Betrachtungsraster aus einer Mehrzahl von Betrachtungselementen zur Rekonstruktion der Sollbilder bei der Betrachtung des Motivbilds mit Hilfe des Betrachtungsrasters,
  - wobei das Motivbild mit seiner Einteilung in einer Mehrzahl von Zellen eine Bildfunktion m(x,y) aufweist, die gegeben ist durch

$$m(x,y) = F(h_1, h_2, \ldots, h_n), \text{ mit den beschreibenden Funktionen}$$

mit den beschreibenden Funktionen

$$h_i(x,y) = f_i\left(\begin{pmatrix} x \\ y \end{pmatrix} + (A_i(x,y) - I) \cdot \left(\left(\left(\begin{pmatrix} x \\ y \end{pmatrix} + w_{di}(x,y)\right) \bmod W\right) - w_{di}(x,y) - w_{ci}(x,y)\right)\right) \cdot g_i(x,y)$$

$$\text{mit } w_{di}(x,y) = W \cdot \begin{pmatrix} d_{i1}(x,y) \\ d_{i2}(x,y) \end{pmatrix} \text{ und } w_{ci}(x,y) = W \cdot \begin{pmatrix} c_{i1}(x,y) \\ c_{i2}(x,y) \end{pmatrix},$$

  - wobei $F(h_1, h_2, \ldots h_n)$ eine Masterfunktion ist, die eine Verknüpfung der n beschreibenden Funktionen $h_i(x,y)$ angibt,

  - die Einheitszelle des Betrachtungsrasters durch Gitterzellenvektoren $W1 = \begin{pmatrix} w_{11} \\ w_{21} \end{pmatrix}$ und $W2 = \begin{pmatrix} w_{12} \\ w_{22} \end{pmatrix}$ beschrieben und in der Matrix $W = \begin{pmatrix} w_{11} & w_{12} \\ w_{21} & w_{22} \end{pmatrix}$ zusammengefasst ist,

  - die Matrizen $A_i(x,y) = \begin{pmatrix} a_{i11}(x,y) & a_{i12}(x,y) \\ a_{i21}(x,y) & a_{i22}(x,y) \end{pmatrix}$ jeweils ein gewünschtes Vergrößerungs- und Bewegungsverhalten für das Sollbild $f_i$ beschreiben,
  - die Vektoren $(c_{i1}(x,y), c_{i2}(x,y))$ mit $0 \le c_{i1}(x,y), c_{i2}(x,y) < 1$ für das Sollbild $f_i$ jeweils die relative Position des Zentrums der Betrachtungselemente innerhalb der Zellen i des Motivbilds angeben,

- die Vektoren $(d_{i1}(x,y), d_{i2}(x,y))$ mit $0 \leq d_{i2}(x,y), d_{i2}(x,y) < 1$ jeweils eine ortsabhängige Verschiebung der Zellengrenzen im Motivbild darstellen,

- gt(x,y) Maskenfunktionen zur Einstellung der Sichtbarkeit des Sollbilds $f_i$ sind, die entweder identisch 1 sind, oder die die unter einem Betrachtungselement befindliche Fläche in Teilbereiche untergliedern und periodisch fortsetzen, so dass eine Parkettierung entsteht, und

- wobei zumindest eines der dargestellten Sollbilder entweder keine Periodizität aufweist, oder eine Periodizität aufweist, die durch eine 2x2-Matrix P beschrieben wird, wobei die Periodizitäts-Einheitszelle ungleich (A-I) W ist.

**16.** Darstellungsanordnung nach Anspruch 15, **dadurch gekennzeichnet, dass** zumindest eine der beschreibenden Funktionen $h_i(x,y)$ wie in den Ansprüchen 1 bis 14 für die Büdfunktion m(x,y) angegeben, gestaltet ist.

**17.** Darstellungsanordnung nach Anspruch 15 oder 16, **dadurch gekennzeichnet, dass** die Rasterbildanordnung ein Wechselbild, ein Bewegungsbild oder ein Morphbild darstellt, und/ oder dass die Maskenfunktionen $g_i$ ein streifenartiges oder schachbrettartiges Wechseln der Sichtbarkeit der Sollbilder $f_i$ festlegen.

**18.** Darstellungsanordnung nach wenigstens einem der Ansprüche 15 bis 17, **dadurch gekennzeichnet, dass** die Masterfunktion F die Summenfunktion darstellt.

**19.** Darstellungsanordnung nach wenigstens einem der Ansprüche 15 bis 18, **dadurch gekennzeichnet, dass** zwei oder mehr Sollbilder $f_i$ gleichzeitig sichtbar sind, insbesondere, dass die Masterfunktion F die Summenfunktion, die Maximumsfunktion, eine ODER-Verknüpfung, eine XOR-Verknüpfung oder eine andere logische Verknüpfung darstellt.

**20.** Darstellungsanordnung nach Anspruch 19, **dadurch gekennzeichnet, dass** n Sollobjekte $f_j(x,y)$, j = 1,...n vorgegeben sind, die jeweils in einer scheinbaren Tiefe $z_j$ mit $z_j > z_j-1$ liegen, und dass als Masterfunktion F eine modifizierte Minimumsfunktion gewählt ist, durch die im Fall, dass die beschreibenden Funktionen $h_j$ an einer Stelle (x,y) für mehrere j ungleich Null sind, das kleinste j ausgewählt wird.

**21.** Darstellungsanordnung nach wenigstens einem der Ansprüche 15 bis 20, **dadurch gekennzeichnet, dass** das Betrachtungsraster und das Motivbild fest miteinander verbunden sind, um ein Sicherheitselement mit beabstandet übereinander angeordnetem Betrachtungsraster und Motivbild zu bilden, oder dass das Betrachtungsraster und das Motivbild so an verschiedenen Stellen eines Datenträgers angeordnet sind, dass das Betrachtungsraster und das Motivbild zur Selbstauthentifizierung übereinander legbar sind und im übereinander gelegten Zustand ein Sicherheitselement bilden, insbesondere, dass das Betrachtungsraster und das Motivbild durch Biegen, Falten, Knicken oder Klappen des Datenträgers übereinander legbar sind, oder dass das Motivbild von einer elektronischen Anzeigeeinrichtung angezeigt ist und das Betrachtungsraster zur Betrachtung des angezeigten Motivbilds fest mit der elektronischen Anzeigeeinrichtung verbunden ist, oder dass das Motivbild von einer elektronischen Anzeigeeinrichtung angezeigt ist und dass das Betrachtungsraster als ein separates Betrachtungsraster zur Betrachtung des angezeigten Motivbilds auf oder vor die elektronische Anzeigeeinrichtung bringbar ist.

**22.** Darstellungsanordnung nach wenigstens einem der Ansprüche 1 bis 21, **dadurch gekennzeichnet, dass** die Bildinhalte einzelner Zellen des Motivbilds nach der Bestimmung der Bildfunktion m(x,y) miteinander vertauscht sind.

**23.** Verfahren zur Herstellung einer Darstellungsanordnung nach wenigstens einem der Ansprüche 1 bis 14 oder 22, bei dem aus einem ebenen Soll-bild, welches durch eine Bildfunktion f(x,y) gegeben ist, die eine Bildeigenschaft des Sollbildes wie eine Helligkeitsverteilung, eine Farbverteilung, eine Binärverteilung, oder eine andere Bildeigenschaft wie Transparenz, Reflektivität, Dichte oder dergleichen angibt, ein Motivbild berechnet wird, das in eine Mehrzahl von Zellen eingeteilt ist, in denen jeweils abgebildete Bereiche des Sollbilds angeordnet werden,

- wobei das Motivbild mit seiner Einteilung in eine Mehrzahl von Zellen eine Bildfunktion m(x,y) aufweist, die berechnet wird durch

$$m(x, y) = f\left(\begin{pmatrix} x \\ y \end{pmatrix} + (A(x, y) - I) \cdot \left(\left(\left(\begin{pmatrix} x \\ y \end{pmatrix} + w_d(x, y)\right) \bmod W\right) - w_d(x, y) - w_c(x, y)\right)\right) \cdot g(x, y)$$

mit $w_d(x,y) = W \cdot \begin{pmatrix} d_1(x,y) \\ d_2(x,y) \end{pmatrix}$ und $w_c(x,y) = W \cdot \begin{pmatrix} c_1(x,y) \\ c_2(x,y) \end{pmatrix}$ so dass das Sollbild bei der Betrachtung des Motivbilds mit Hilfe des Betrachtungsrasters rekonstruiert wird,

- wobei die Einheitszelle des Betrachtungsrasters durch Gitterzellenvektoren $W_1 = \begin{pmatrix} w_{11} \\ w_{21} \end{pmatrix}$ und $W_2 = \begin{pmatrix} w_{12} \\ w_{22} \end{pmatrix}$ beschrieben und in der Matrix $W = \begin{pmatrix} w_{11} & w_{12} \\ w_{21} & w_{22} \end{pmatrix}$ zusammengefasst ist,

- die Matrix $A(x,y) = \begin{pmatrix} a_{11}(x,y) & a_{12}(x,y) \\ a_{21}(x,y) & a_{22}(x,y) \end{pmatrix}$ ein gewünschtes Vergrößerungs- und Bewegungsverhalten des dargestellten Sollbilds beim Kippen des Sicherheitselements beschreibt,
- der Vektor $(c_1(x,y), c_2(x,y))$ mit $0 \leq c_1(x,y), c_2(x,y) < 1$ die relative Position des Zentrums der Betrachtungselemente innerhalb der Zellen des Motivbilds angibt,
- der Vektor $(d_i(x,y), d_2(x,y))$ mit $0 \leq d_1(x,y), d_2(x,y) < 1$ eine ortsabhängige Verschiebung der Zellengrenzen im Motivbild darstellt,
- g(x,y) eine Maskenfunktion zur Einstellung der Sichtbarkeit des Sollbilds ist, die entweder identisch 1 ist, oder die in Teilbereichen, insbesondere in Randbereichen der Zellen des Motivbilds Null ist und so eine Winkelbeschränkung bei der Betrachtung des Sollbilds beschreibt, und
- wobei das Sollbild entweder keine Periodizität aufweist, oder eine Periodizität aufweist, die durch eine 2x2-Matrix P beschrieben wird, wobei die Periodizitäts-Einheitszelle ungleich (A-I) W ist.

24. Verfahren zur Herstellung einer Darstellungsanordnung nach wenigstens einem der Ansprüche 15 bis 22, bei dem aus einer Mehrzahl ebener Sollbilder, die durch Bildfunktionen $f_i(x,y)$, i=1,2,...n mit n≥1 gegeben sind, die jeweils eine Bildeigenschaft für das Sollbild $f_i$ wie eine Helligkeitsverteilung, eine Farbverteilung, eine Binärverteilung, oder eine andere Bildeigenschaft wie Transparenz, Reflektivität, Dichte oder dergleichen angeben, ein Motivbild berechnet wird, das in eine Mehrzahl von Zellen eingeteilt ist, in denen jeweils abgebildete Bereiche des Sollbilds angeordnet werden,

- wobei das Motivbild mit seiner Einteilung in eine Mehrzahl von Zellen eine Bildfunktion m(x,y) aufweist, die berechnet wird durch $m(x,y) = F(h_1, h_2,...h_n)$, mit den beschreibenden Funktionen

$$h_i(x,y) = f_i\left( \begin{pmatrix} x \\ y \end{pmatrix} + (A_i(x,y) - I) \cdot \left( \left( \left( \begin{pmatrix} x \\ y \end{pmatrix} + w_{di}(x,y) \right) \bmod W \right) - w_{di}(x,y) - w_{ci}(x,y) \right) \right) \cdot g_i(x,y)$$

mit $w_{di}(x,y) = W \cdot \begin{pmatrix} d_{i1}(x,y) \\ d_{i2}(x,y) \end{pmatrix}$ und $w_{ci}(x,y) = W \cdot \begin{pmatrix} c_{i1}(x,y) \\ c_{i2}(x,y) \end{pmatrix}$, so dass das Sollbild bei der Betrachtung des Motivbilds mit Hilfe des Betrachtungsrasters rekonstruiert wird,
- wobei $F(h_1,h_2,...h_n)$ eine Masterfunktion ist, die eine Verknüpfung der n beschreibenden Funktionen $h_i(x,y)$ angibt,

- die Einheitszelle des Betrachtungsrasters durch Gitterzellenvektoren $W_1 = \begin{pmatrix} w_{11} \\ w_{21} \end{pmatrix}$ und $W_2 = \begin{pmatrix} w_{12} \\ w_{22} \end{pmatrix}$ beschrieben und in der Matrix $W = \begin{pmatrix} w_{11} & w_{12} \\ w_{21} & w_{22} \end{pmatrix}$ zusammengefasst ist,

- die Matrizen $A_i(x,y) = \begin{pmatrix} a_{i11}(x,y) & a_{i12}(x,y) \\ a_{i21}(x,y) & a_{i22}(x,y) \end{pmatrix}$ jeweils ein gewünschtes Vergrößerungs- und Bewegungsverhalten für das Sollbild $f_i$ beschreiben,
- die Vektoren $(c_{i1}(x,y), c_{i2}(x,y))$ mit $0 \leq c_{i1}(x,y), c_{i2}(x,y) < 1$ für das Soll-bild $f_i$ jeweils die relative Position des Zentrums der Betrachtungselemente innerhalb der Zellen i des Motivbilds angeben,

- die Vektoren ($d_{i1}(x,y)$, $d_{i2}(x,y)$) mit $0 \leq d_{i1}(x,y)$, $d_{i2}(x,y) < 1$ jeweils eine ortsabhängige Verschiebung der Zellengrenzen im Motivbild darstellen,

- $g_i(x,y)$ Maskenfunktionen zur Einstellung der Sichtbarkeit des Soll-bilds $f_i$ sind, die entweder identisch 1 sind, oder die die unter einem Betrachtungselement befindliche Fläche in Teilbereiche untergliedern und periodisch fortsetzen, so dass eine Parkettierung entsteht, und

- wobei zumindest eines der Sollbilder entweder keine Periodizität aufweist, oder eine Periodizität aufweist, die durch eine 2x2-Matrix P beschrieben wird, wobei die Periodizitäts-Einheitszelle ungleich (A-I) W ist.

25. Sicherheitspapier für die Herstellung von Sicherheits- oder Wertdokumenten, wie Banknoten, Schecks, Ausweiskarten, Urkunden oder dergleichen, mit einer Darstellungsanordnung nach wenigstens einem der Ansprüche 1 bis 22.

26. Datenträger, insbesondere Markenartikel, Wertdokument, dekorativer Artikel oder dergleichen, mit einer Darstellungsanordnung nach wenigstens einem der Ansprüche 1 bis 22, wobei das Betrachtungsraster und/oder das Motivbild der Darstellungsanordnung insbesondere in einem Fensterbereich des Datenträgers angeordnet ist.

27. Elektronische Anzeigeanordnung mit einer elektronischen Anzeigeeinrichtung, insbesondere einem Computer- oder Fernsehbildschirm, einer Steuereinrichtung und einer Darstellungsanordnung nach wenigstens einem der Ansprüche 1 bis 22, wobei die Steuereinrichtung ausgelegt und eingerichtet ist, das Motivbild der Darstellungsanordnung auf der elektronischen Anzeigeeinrichtung anzuzeigen.

**Claims**

1. A depiction arrangement for security papers, value documents, electronic display devices or other data carriers, having a raster image arrangement for depicting a planar target image that is given by an image function f(x,y), which indicates an image property of the target image, such as a brightness distribution, a color distribution, a binary distribution or other image property, such as transparency, reflectivity, density or the like, having

   - a motif image that is subdivided into a plurality of cells, in each of which are arranged imaged regions of the target image,
   - a viewing grid composed of a plurality of viewing elements for reconstructing the target image when the motif image is viewed with the aid of the viewing grid,
   - the motif image exhibiting, with its subdivision into a plurality of cells, an image function m(x,y) that is given by

$$m(x, y) = f\left(\begin{pmatrix} x \\ y \end{pmatrix}\right) + \left(A(x,y) - I\right) \cdot \left(\left(\left(\begin{pmatrix} x \\ y \end{pmatrix} + w_d(x,y)\right) \bmod W\right) - w_d(x,y) - w_c(x,y)\right) \cdot g(x,y)$$

   where $w_d(x,y) = W \cdot \begin{pmatrix} d_1(x,y) \\ d_2(x,y) \end{pmatrix}$ and $w_c(x,y) = W \cdot \begin{pmatrix} c_1(x,y) \\ c_2(x,y) \end{pmatrix}$

   - wherein the unit cell of the viewing grid is described by lattice cell vectors $w_1 = \begin{pmatrix} w_{11} \\ w_{21} \end{pmatrix}$ and $w_2 = \begin{pmatrix} w_{12} \\ w_{22} \end{pmatrix}$

   and combined in the matrix $W = \begin{pmatrix} w_{11} & w_{12} \\ w_{21} & w_{22} \end{pmatrix}$,

   - the matrix $A(x,y) = \begin{pmatrix} a_{11}(x,y) & a_{12}(x,y) \\ a_{21}(x,y) & a_{22}(x,y) \end{pmatrix}$ describes a desired magnification and movement behavior of the depicted target image,

   - the vector ($c_1(x,y)$, $c_2(x,y)$), where $0 \leq c_1(x,y), c_2(x,y) < 1$, indicates the relative position of the center of the viewing elements within the cells of the motif image,
   - the vector ($d_1(x,y)$, $d_2(x,y)$), where $0 \leq d_1(x, y), d_2(x, y) < 1$, represents a location-dependent displacement of the cell boundaries in the motif image,
- g(x,y) is a mask function for adjusting the visibility of the target image, which is either identical to 1, or which is zero in subregions, especially in edge regions of the cells of the motif image, and in this way describes an angle limit when the target image is viewed, and
- wherein the depicted target image either exhibits no periodicity, or exhibits a periodicity that is described by a 2x2 matrix P, wherein the periodicity unit cell is not equal to (A-I) W.

2. The depiction arrangement according to claim 1, **characterized in that** the viewing elements of the viewing grid are arranged periodically or locally periodically, the local period parameters in the latter case either changing, in relation to the periodicity length, only slowly, or an abrupt change in the periodicity length occurring if it was previously kept constant or nearly constant over a segment that is large compared with the periodicity length.

3. The depiction arrangement according to claim 1 or 2, **characterized in that** the viewing elements are formed by non-cylindrical microlenses or concave microreflectors, especially by microlenses or concave microreflectors having a circular or polygonally delimited base area, or that the viewing elements are formed by elongated cylindrical lenses or concave cylindrical reflectors whose dimension in the longitudinal direction measures more than 250 $\mu$m, preferably more than 300 $\mu$m, particularly preferably more than 500 $\mu$m and especially more than 1 mm, or that the viewing elements are formed by circular apertures, slit apertures, circular or slit apertures provided with reflectors, aspherical lenses, Fresnel lenses, GRIN (Gradient Refractive Index) lenses, zone plates, holographic lenses, concave reflectors, Fresnel reflectors, zone reflectors or other elements having a focusing or also masking effect.

4. The depiction arrangement according to at least one of claims 1 to 3, **characterized in that** the support of the image function

$$ f\left( (A - I) \cdot \begin{pmatrix} x \\ y \end{pmatrix} \right) $$

is greater than the unit cell of the viewing grid W.

5. The depiction arrangement according to at least one of claims 1 to 4, **characterized in that** the viewing grid and the motif image are firmly joined together to form a security element having a stacked, spaced-apart viewing grid and motif image, or that the viewing grid and the motif image are arranged at different positions of a data carrier such that the viewing grid and the motif image are stackable for self-authentication and form a security element in the stacked state, especially that the viewing grid and the motif image are stackable by bending, creasing, buckling or folding the data carrier, or that the motif image is displayed by an electronic display device, and the viewing grid for viewing the displayed motif image is firmly joined with the electronic display device, or that the motif image is displayed by an electronic display device, and **in that** the viewing grid, as a separate viewing grid for viewing the displayed motif image, is bringable onto or in front of the electronic display device.

6. The depiction arrangement according to claim 5, **characterized in that** the magnification and movement matrix A is given by

$$ A = \begin{pmatrix} a_{11} & a_{12} \\ a_{21} & a_{22} \end{pmatrix} = \begin{pmatrix} v_1 \cdot \cos\phi_1 & v_2 \cdot \cos\phi_2 \\ v_1 \cdot \sin\phi_1 & v_2 \cdot \sin\phi_2 \end{pmatrix} $$

such that the depicted target image, upon tilting the security element horizontally about a vertical axis, moves with a speed $v_1$ in the direction $\phi_1$ in relation to the x-axis, and upon tilting vertically about a horizontal axis, moves with the speed $v_2$ in the direction $\phi_2$ in relation to the x-axis.

7. The depiction arrangement according to claim 6, **characterized in that** $\phi_1$ is not equal to 0° and not equal to 180° and/or $\phi_2$ is not equal to 90° and not equal to -90° and/or $v_1$ is not equal to $v_2$.

8. The depiction arrangement according to claim 6 or 7, **characterized in that,** upon tilting the security element, the target image always moves in the same direction, irrespective of the tilt direction.

9. The depiction arrangement according to claim 5, **characterized in that,** in the magnification and movement matrix A, $a_{11} = z_1/e$ and $a_{22} = z_2/e$, where e denotes the effective distance of the viewing grid from the motif image such that, upon viewing with the eye separation being in the x-direction, the target image is visible at a depth or height $z_1$, and when the arrangement, rotated by 90°, is viewed with the eye separation being in the y-direction, is visible at a depth or height $z_2$, especially that in the magnification and movement matrix A,

$$a_{11} = z_1/e \ , \ a_{21} = (z_1/e) \tan \phi_1$$

$$a_{22} = z_2/e \ , \ a_{12} = (z_2/e) \cot \phi_2$$

such that,

- upon viewing with the eye separation being in the x-direction, the target image is visible at a depth or height $z_1$ and, upon tilting the arrangement horizontally or upon a horizontal change in the viewing direction, moves in the direction $\phi_1$ in relation to the x-axis, and
- when the arrangement, rotated by 90°, is viewed with the eye separation being in the y-direction, the target image is visible at a depth or height $z_2$ and, upon tilting the arrangement vertically or upon a vertical change in the viewing direction, moves in the direction $\phi_2$ in relation to the x-axis.

10. The depiction arrangement according to at least one of claims 1 to 9, **characterized in that** the magnification and movement matrix A is location independent.

11. The depiction arrangement according to claim 9, **characterized in that** one or more of the magnifications $z_1$, $z_2$ and movement directions $\phi_1, \phi_2$ are location dependent.

12. The depiction arrangement according to claim 5, **characterized in that** the viewing grid is a slot grid, cylindrical lens grid or cylindrical concave reflector grid whose unit cell is given by

$$W = \begin{pmatrix} \cos \gamma & -\sin \gamma \\ \sin \gamma & \cos \gamma \end{pmatrix} \cdot \begin{pmatrix} d & 0 \\ 0 & \infty \end{pmatrix}$$

where d is the slot or cylinder axis distance and the direction of the slot or cylinder axis is specified by an angle $\gamma$ , and **in that** the magnification and movement matrix A is given by

$$A = \begin{pmatrix} \cos \gamma & -\sin \gamma \\ \sin \gamma & \cos \gamma \end{pmatrix} \cdot \begin{pmatrix} a_{11} & 0 \\ a_{21} & 1 \end{pmatrix} \cdot \begin{pmatrix} \cos \gamma & \sin \gamma \\ -\sin \gamma & \cos \gamma \end{pmatrix}$$

where $\begin{pmatrix} a_{11} & 0 \\ a_{21} & 1 \end{pmatrix} = \begin{pmatrix} v_1 \cdot \cos \phi_1 & 0 \\ v_1 \cdot \sin \phi_1 & 1 \end{pmatrix} = \begin{pmatrix} \dfrac{z_1}{e} & 0 \\ \dfrac{z_1}{e} \cdot \tan \phi_1 & 1 \end{pmatrix}$ , where $\phi_1$ is a prechosen movement direction.

13. The depiction arrangement according to at least one of claims 1 to 12, **characterized in that** the cell boundaries in the motif image are not displaced location dependently, in other words **in that** the vector $(d_1(x,y), d_2(x,y))$ occurring in the image function m(x,y) is constant, or that the cell boundaries in the motif image are displaced location dependently, preferably **in that** the motif image exhibits two or more subregions having a different, in each case constant, cell grid.

14. The depiction arrangement according to at least one of claims 1 to 13, **characterized in that** the relative position of the center of the viewing elements is location independent within the cells of the motif image, in other words the

vector $(c_1(x,y), c_2(x,y))$ is constant, or that the relative position of the center of the viewing elements is location dependent within the cells of the motif image.

15. A depiction arrangement for security papers, value documents, electronic display devices or other data carriers, having a raster image arrangement for depicting a plurality of planar target images that are given by image functions $f_i(x,y)$, i=1,2,...n, where n ≥ 1, each of which indicates an image property of the target image $f_i$, such as a brightness distribution, a color distribution, a binary distribution or other image property, such as transparency, reflectivity, density or the like, having

- a motif image that is subdivided into a plurality of cells, in each of which are arranged imaged regions of the target images,
- a viewing grid composed of a plurality of viewing elements for reconstructing the target images when the motif image is viewed with the aid of the viewing grid,
- the motif image exhibiting, with its subdivision into a plurality of cells, an image function m(x,y) that is given by

$$m(x, y) = F\big(h_1, h_2, \ldots h_n\big),$$

having the describing functions

$$h_i(x, y) = f_i\left(\begin{pmatrix} x \\ y \end{pmatrix} + (A_i(x,y) - I) \cdot \left(\left(\left(\begin{pmatrix} x \\ y \end{pmatrix} + w_{di}(x,y)\right) \bmod W\right) - w_{di}(x,y) - w_{ci}(x,y)\right)\right) \cdot g_i(x, y)$$

where $w_{di}(x,y) = W \cdot \begin{pmatrix} d_{i1}(x,y) \\ d_{i2}(x,y) \end{pmatrix}$ and $w_{ci}(x,y) = W \cdot \begin{pmatrix} c_{i1}(x,y) \\ c_{i2}(x,y) \end{pmatrix}$,

- wherein $F(h_1, h2, \ldots h_n)$ is a master function that indicates an operation on the n describing functions $h_i(x,y)$,

- the unit cell of the viewing grid is described by lattice cell vectors $w_1 = \begin{pmatrix} w_{11} \\ w_{21} \end{pmatrix}$ and $w_2 = \begin{pmatrix} w_{12} \\ w_{22} \end{pmatrix}$ and

combined in the matrix $W = \begin{pmatrix} w_{11} & w_{12} \\ w_{21} & w_{22} \end{pmatrix}$,

- the matrices $A_i(x,y) = \begin{pmatrix} a_{i11}(x,y) & a_{i12}(x,y) \\ a_{i21}(x,y) & a_{i22}(x,y) \end{pmatrix}$ each describe a desired magnification and movement behavior for the target image $f_i$,

- the vectors $(c_{i1}(x,y), c_{i2}(x,y))$, where $0 \le c_{i1}(x,y), c_{i2}(x,y) < 1$, indicate in each case, for the target image $f_i$, the relative position of the center of the viewing elements within the cells i of the motif image,
- the vectors $(d_{i1}(x,y), d_{i2}(x,y))$, where $0 \le d_{i1}(x,y), d_{i2}(x,y) < 1$, each represent a location-dependent displacement of the cell boundaries in the motif image,
- $g_i(x,y)$ are mask functions for adjusting the visibility of the target image $f_i$, each of which is either identical to 1, or which partition the area located under a viewing element into subregions and continue these subregions periodically such that a parqueting is created, and
- wherein at least one of the depicted target images either exhibits no periodicity, or exhibits a periodicity that is described by a 2x2 matrix P, wherein the periodicity unit cell is not equal to (A-I) W.

16. The depiction arrangement according to claim 15, **characterized in that** at least one of the describing functions $h_i(x,y)$ is designed as specified in claims 1 to 14 for the image function m(x,y).

17. The depiction arrangement according to claim 15 or 16, **characterized in that** the raster image arrangement depicts an alternating image, a motion image or a morph image, and/or that the mask functions $g_i$ define a strip-like or checkerboard-like alternation of the visibility of the target images $f_i$.

18. The depiction arrangement according to at least one of claims 15 to 17, **characterized in that** the master function F constitutes the sum function.

19. The depiction arrangement according to at least one of claims 15 to 18, **characterized in that** two or more target images $f_i$ are visible simultaneously, especially, that the master function F constitutes the sum function, the maximum function, an OR function, an XOR function or another logic function.

20. The depiction arrangement according to claim 19, **characterized in that** n target objects $f_j(x,y)$, j = 1,...n are specified that each lie at an apparent depth $z_j$, where $z_j > z_{j-1}$, and **in that**, as the master function F, a modified minimum function is chosen through which, in the event that, at a position (x,y), the describing functions $h_j$ are not equal to zero for multiple j, the smallest j is selected.

21. The depiction arrangement according to at least one of claims 15 to 20, **characterized in that** the viewing grid and the motif image are firmly joined together to form a security element having a stacked, spaced-apart viewing grid and motif image, or that the viewing grid and the motif image are arranged at different positions of a data carrier such that the viewing grid and the motif image are stackable for self-authentication and form a security element in the stacked state, especially that the viewing grid and the motif image are stackable by bending, creasing, buckling or folding the data carrier, or that the motif image is displayed by an electronic display device, and the viewing grid for viewing the displayed motif image is firmly joined with the electronic display device, or that the motif image is displayed by an electronic display device, and **in that** the viewing grid, as a separate viewing grid for viewing the displayed motif image, is bringable onto or in front of the electronic display device.

22. The depiction arrangement according to at least one of claims 1 to 21, **characterized in that** after the definition of the image function m(x,y), the image contents of individual cells of the motif image are interchanged.

23. A method for manufacturing a depiction arrangement according to at least one of claims 1 to 14 or 22, in which is calculated, from a planar target image that is given by an image function f(x,y), which indicates an image property of the target image, such as a brightness distribution, a color distribution, a binary distribution or other image property, such as transparency, reflectivity, density or the like, a motif image that is subdivided into a plurality of cells, in each of which are arranged imaged regions of the target image,

   - the motif image exhibiting, with its subdivision into a plurality of cells, an image function m(x,y) that is calculated by

$$m(x, y) = f\left(\begin{pmatrix} x \\ y \end{pmatrix}\right) + (A(x,y) - I) \cdot \left(\left(\left(\begin{pmatrix} x \\ y \end{pmatrix} + w_d(x,y)\right) \bmod W\right) - w_d(x,y) - w_c(x,y)\right) \cdot g(x, y)$$

   where $w_d(x,y) = W \cdot \begin{pmatrix} d_1(x,y) \\ d_2(x,y) \end{pmatrix}$ and $w_c(x,y) = W \cdot \begin{pmatrix} c_1(x,y) \\ c_2(x,y) \end{pmatrix}$ such that the target image is reconstructed upon viewing the motif image with the aid of the viewing grid,

   - wherein the unit cell of the viewing grid is described by lattice cell vectors $w_1 = \begin{pmatrix} w_{11} \\ w_{21} \end{pmatrix}$ and $w_2 = \begin{pmatrix} w_{12} \\ w_{22} \end{pmatrix}$

   and combined in the matrix $W = \begin{pmatrix} w_{11} & w_{12} \\ w_{21} & w_{22} \end{pmatrix}$,

   - the matrix $A(x,y) = \begin{pmatrix} a_{11}(x,y) & a_{12}(x,y) \\ a_{21}(x,y) & a_{22}(x,y) \end{pmatrix}$ describes a desired magnification and movement behavior of the depicted target image upon tilting the security element,
   - the vector $(c_1(x,y), c_2(x,y))$, where $0 \leq c_1(x,y), c_2(x,y) < 1$, indicates the relative position of the center of the viewing elements within the cells of the motif image,
   - the vector $(d_1(x,y), d_2(x,y))$, where $0 \leq d_1(x,y), d_2(x,y) < 1$, represents a location-dependent displacement of the cell boundaries in the motif image,
- g(x,y) is a mask function for adjusting the visibility of the target image, which is either identical to 1, or which is zero in subregions, especially in edge regions of the cells of the motif image, and in this way describes an angle limit when the target image is viewed, and
- wherein the target image either exhibits no periodicity, or exhibits a periodicity that is described by a 2x2 matrix P, wherein the periodicity unit cell is not equal to (A-I) W.

24. A method for manufacturing a depiction arrangement according to at least one of claims 15 to 22, in which is calculated, from a plurality of planar target images that are given by image functions $f_i(x,y)$, i=1,2,...n, where n≥1, each of which indicates an image property of the target image fi, such as a brightness distribution, a color distribution, a binary distribution or other image property, such as transparency, reflectivity, density or the like, a motif image that is subdivided into a plurality of cells, in each of which are arranged imaged regions of the target image,

- the motif image exhibiting, with its subdivision into a plurality of cells, an image function m(x,y) that is calculated by $m(x,y) = F(h_1,h_2,...h_n)$, having the describing functions

$$h_i(x,y) = f_i\left(\begin{pmatrix} x \\ y \end{pmatrix} + (A_i(x,y) - I)\cdot\left(\left(\left(\begin{pmatrix} x \\ y \end{pmatrix} + w_{di}(x,y)\right) \bmod W\right) - w_{di}(x,y) - w_{ci}(x,y)\right)\right)\cdot g_i(x,y)$$

where $w_{di}(x,y) = W\cdot\begin{pmatrix} d_{i1}(x,y) \\ d_{i2}(x,y) \end{pmatrix}$ and $w_{ci}(x,y) = W\cdot\begin{pmatrix} c_{i1}(x,y) \\ c_{i2}(x,y) \end{pmatrix}$, such that the target image is reconstructed upon viewing the motif image with the aid of the viewing grid,
- wherein $F(h_1,h_2,...h_n)$ is a master function that indicates an operation on the n describing functions $h_i(x,y)$,

- the unit cell of the viewing grid is described by lattice cell vectors $w_1 = \begin{pmatrix} w_{11} \\ w_{21} \end{pmatrix}$ and $w_2 = \begin{pmatrix} w_{12} \\ w_{22} \end{pmatrix}$ and

combined in the matrix $W = W = \begin{pmatrix} w_{11} & w_{12} \\ w_{21} & w_{22} \end{pmatrix}$,

- the matrices $A_i(x,y) = \begin{pmatrix} a_{i11}(x,y) & a_{i12}(x,y) \\ a_{i21}(x,y) & a_{i22}(x,y) \end{pmatrix}$ each describe a desired magnification and movement behavior for the target image $f_i$,
- the vectors $(c_{i1}(x,y), c_{i2}(x,y))$, where $0 \le c_{i1}(x,y), c_{i2}(x,y) < 1$, indicate in each case, for the target image $f_i$, the relative position of the center of the viewing elements within the cells i of the motif image,
- the vectors $(d_{i1}(x,y), di_2(x,y))$, where $0 \le d_{i1}(x,y), d_{i2}(x,y) < 1$, each represent a location-dependent displacement of the cell boundaries in the motif image,
- $g_i(x,y)$ are mask functions for adjusting the visibility of the target image $f_i$, each of which is either identical to 1, or which partition the area located under a viewing element into subregions and continue these subregions periodically such that a parqueting is created, and
- wherein at least one of the target images either exhibits no periodicity, or exhibits a periodicity that is described by a 2x2 matrix P, wherein the periodicity unit cell is not equal to (A-I) W.

25. A security paper for manufacturing security or value documents, such as banknotes, checks, identification cards, certificates or the like, having a depiction arrangement according to at least one of claims 1 to 22.

26. A data carrier, especially a branded article, value document, decorative article or the like, having a depiction arrangement according to at least one of claims 1 to 22, where the viewing grid and/or the motif image of the depiction arrangement is preferably arranged in a window region of the data carrier.

27. An electronic display arrangement having an electronic display device, especially a computer or television screen, a control device and a depiction arrangement according to at least one of claims 1 to 22, the control device being designed and adjusted to display the motif image of the depiction arrangement on the electronic display device.

**Revendications**

1. Système de représentation pour papiers de sécurité, documents de valeur, dispositifs électroniques d'affichage ou autres supports de données, avec un système d'image tramée pour la représentation d'une image de consigne plane, laquelle est donnée par une fonction d'image f(x, y), laquelle indique une propriété d'image de l'image de consigne telle une répartition de la luminosité, une répartition des couleurs, une répartition binaire ou une autre propriété d'image telle une transparence, une réflectivité, une densité ou similaire, avec

- une image à motif qui est subdivisée en une pluralité de cellules, dans lesquelles sont disposées des zones respectivement représentées de l'image de consigne,
- une grille d'observation en une pluralité d'éléments d'observation pour la reconstruction de l'image de consigne lors de l'observation de l'image à motif à l'aide de la grille d'observation,
- dans lequel l'image à motif présente, avec sa subdivision en une pluralité de cellules, une fonction d'image m (x, y) qui est donnée par

$$m(x,y) = f\left(\begin{pmatrix} x \\ y \end{pmatrix} + (A(x,y) - I) \cdot \left(\left(\left(\begin{pmatrix} x \\ y \end{pmatrix} + w_J(x,y)\right) \bmod W\right) - w_d(x,y) - w_c(x,y)\right)\right) \cdot g(x,y)$$

avec $w_d(x,y) = W \cdot \begin{pmatrix} d_1(x,y) \\ d_2(x,y) \end{pmatrix}$ et $w_c(x,y) = W \cdot \begin{pmatrix} c_1(x,y) \\ c_2(x,y) \end{pmatrix}$

- dans lequel la cellule unitaire de la grille d'observation est décrite par des vecteurs de cellules de grille

$$w_1 = \begin{pmatrix} w_{11} \\ w_{21} \end{pmatrix} \text{ et } w_2 = \begin{pmatrix} w_{12} \\ w_{22} \end{pmatrix} \text{ et est résumée dans la matrice } W = \begin{pmatrix} w_{11} & w_{12} \\ w_{21} & w_{22} \end{pmatrix},$$

- la matrice $A(x, y) = \begin{pmatrix} a_{11}(x,y) & a_{12}(x,y) \\ a_{21}(x,y) & a_{22}(x,y) \end{pmatrix}$ décrivant un comportement souhaité d'agrandissement et de mouvement de l'image de consigne représentée,
- le vecteur $(c_1(x, y), c_2(x, y))$ avec $0 \leq c_1(x, y), c_2(x, y) < 1$ indiquant la position relative du centre des éléments d'observation à l'intérieur des cellules de l'image à motif,
- le vecteur $(d_1(x\,y), d_2(x, y))$ avec $0 \leq d_1(x, y), d_2(x, y) < 1$ représentant un décalage en fonction de l'emplacement des limites de cellule dans l'image à motif,
- g(x, y) étant une fonction de masque pour le réglage de la visibilité de l'image de consigne, laquelle est identique à 1 ou est nulle dans des zones partielles, en particulier dans des zones du bord des cellules de l'image à motif, et décrit ainsi une limitation angulaire lors de l'observation de l'image de consigne, et
- dans lequel l'image de consigne représentée ne présente pas de périodicité, ou bien présente une périodicité qui est décrite par une matrice 2x2 P, dans lequel la cellule unitaire de périodicité est différente de (A-I) W.

2. Système de représentation selon la revendication 1, **caractérisé en ce que** les éléments d'observation de la grille d'observation sont disposés périodiquement ou localement périodiquement, dans lequel, dans le dernier cas, les paramètres locaux de période varient seulement lentement par rapport à la longueur de périodicité ou bien une variation brusque de la longueur de périodicité ayant lieu lorsque celle-ci a été maintenue constante ou presque constante sur une longue distance en comparaison avec la longueur de périodicité.

3. Système de représentation selon la revendication 1 ou 2, **caractérisé en ce que** les éléments d'observation sont formés par des microlentilles non cylindriques ou des micro-miroirs concaves, en particulier des microlentilles ou des micro-miroirs concaves avec une surface de base circulaire ou polygonale délimitée, ou bien **en ce que** les éléments d'observation sont formés par des lentilles cylindriques ou des miroirs concaves cylindriques étiré(e)s en longueur dont l'extension en direction longitudinale est de plus de 250 $\mu$m, de préférence de plus de 300 $\mu$m, de manière particulièrement préférée de plus de 500 $\mu$m, et est en particulier de plus de 1 mm, ou bien **en ce que** les éléments d'observation sont formés par des diaphragmes à trou, des diaphragmes à fente, des diaphragmes à trou ou fente dotés de miroirs, des lentilles asphériques, des lentilles de Fresnel, des lentilles GRIN (Gradient Refraction Index), des lentilles zonales, des lentilles holographiques, des miroirs concaves, des miroirs de Fresnel, des miroirs zonaux ou d'autres éléments avec un effet focalisateur ou également de fondu.

4. Système de représentation selon l'une au moins des revendications 1 à 3, **caractérisé en ce que** le support de la fonction d'image $f\left((\mathbf{A}-\mathbf{I})\cdot\begin{pmatrix}x\\y\end{pmatrix}\right)$ est plus grand que la cellule unitaire de la grille d'observation W.

5. Système de représentation selon l'une au moins des revendications 1 à 4, **caractérisé en ce que** la grille d'observation et l'image à motif sont reliées ensemble de manière serrée pour former un élément de sécurité avec une grille d'observation et une image à motif disposées à distance l'une au-dessus de l'autre, ou bien **en ce que** la grille d'observation et l'image à motif sont disposées à différents emplacements d'un support de données d'une manière telle, que la grille d'observation et l'image à motif peuvent être disposées l'une au-dessus de l'autre pour l'auto-authentification et forment un élément de sécurité à l'état de disposition l'une au-dessus de l'autre, en particulier **en ce que** la grille d'observation et l'image à motif peuvent être disposées l'une au-dessus de l'autre en courbant, pliant, recourbant ou rabattant le support de données, ou bien **en ce que** l'image à motif est affichée par un dispositif électronique d'affichage et **en ce que** la grille d'observation est reliée de manière serrée au dispositif électronique d'affichage pour l'observation de l'image à motif affichée, ou bien **en ce que** l'image à motif est affichée par un dispositif électronique d'affichage, et **en ce que** la grille d'observation en tant qu'une grille d'observation séparée peut être mise sur ou devant le dispositif électronique d'affichage pour l'observation de l'image à motif affichée.

6. Système de représentation selon la revendication 5, **caractérisé en ce que** la matrice d'agrandissement et de mouvement A est donnée par

$$A = \begin{pmatrix} a_{11} & a_{12} \\ a_{21} & a_{22} \end{pmatrix} = \begin{pmatrix} v_1 \cdot \cos\phi_1 & v_2 \cdot \cos\phi_2 \\ v_1 \cdot \sin\phi_1 & v_2 \cdot \sin\phi_2 \end{pmatrix},$$

de sorte que l'image de consigne représentée, lors du basculement horizontal de l'élément de sécurité autour d'un axe vertical, se déplace à une vitesse $v_1$ en direction $\varnothing_1$ par rapport à l'axe x, et lors du basculement vertical autour d'un axe horizontal, se déplace à une vitesse $v_2$ en direction $\varnothing_2$ par rapport à l'axe x.

7. Système de représentation selon la revendication 6, **caractérisé en ce que** $\varnothing_1$ est différente de 0° et différente de 180° et/ou **en ce que** $\varnothing_2$ est différente de 90° et différente de -90° et/ou **en ce que** $v_1$ est différente de $v_2$.

8. Système de représentation selon la revendication 6 ou 7, **caractérisé en ce que**, lors du basculement de l'élément de sécurité, l'image de consigne se déplace toujours dans la même direction indépendamment du sens de basculement.

9. Système de représentation selon la revendication 5, **caractérisé en ce que**, dans la matrice d'agrandissement et de mouvement A,
$a_{11} = z_1/e$ et $a_{22} = z_2/e$, e désignant la distance effective entre la grille d'observation et l'image à motif de sorte que l'image de consigne, lors de l'observation avec une distance interpupillaire en direction x, est visible à une profondeur ou hauteur $z_1$, et lors de l'observation du système tourné de l'ordre de 90° avec une distance interpupillaire en direction y, est visible à une profondeur ou hauteur $z_2$, en particulier **en ce que**, dans la matrice d'agrandissement et de mouvement A,

$$a_{11} = z_1/e, \quad a_{21} = (z_1/e)\tan\varnothing_1$$

$$a_{22} = z_2/e, \quad a_{12} = (z_2/e)\cot\varnothing_2,$$

de sorte que

- lors de l'observation avec une distance interpupillaire en direction x, l'image de consigne est visible à une profondeur ou hauteur $z_1$, et lors d'un basculement horizontal du système ou d'une modification horizontale du sens d'observation, elle se déplace en direction $\varnothing_1$ par rapport à l'axe x, et

- lors de l'observation du système tourné de l'ordre de 90° avec une distance interpupillaire en direction y, l'image de consigne étant visible à une profondeur ou hauteur $z_2$, et lors du basculement vertical du système ou de la modification verticale du sens d'observation, elle se déplace en direction $\varnothing_2$ par rapport à l'axe x.

**10.** Système de représentation selon l'une au moins des revendications 1 à 9, **caractérisé en ce que** la matrice d'agrandissement et de mouvement A est indépendante de l'emplacement.

**11.** Système de représentation selon la revendication 9, **caractérisé en ce qu'**un ou plusieurs des agrandissements $z_1$, $z_2$ et des sens d'observation $\varnothing_1$, $\varnothing_2$ sont dépendants de l'emplacement.

**12.** Système de représentation selon la revendication 5, **caractérisé en ce que** la grille d'observation est une grille à espacements, une grille à lentilles cylindriques ou une grille à miroirs concaves cylindriques, dont la cellule unitaire est donnée par

$$W = \begin{pmatrix} \cos\gamma & -\sin\gamma \\ \sin\gamma & \cos\gamma \end{pmatrix} \cdot \begin{pmatrix} d & 0 \\ 0 & \infty \end{pmatrix}$$

avec l'entraxe des espacements ou cylindres d et une direction indiquée par l'angle y de l'axe des espacements ou cylindres, et **en ce que** la matrice d'agrandissement et de mouvement A est donnée par

$$A = \begin{pmatrix} \cos\gamma & -\sin\gamma \\ \sin\gamma & \cos\gamma \end{pmatrix} \cdot \begin{pmatrix} a_{11} & 0 \\ a_{21} & 1 \end{pmatrix} \cdot \begin{pmatrix} \cos\gamma & \sin\gamma \\ -\sin\gamma & \cos\gamma \end{pmatrix}$$

avec $\begin{pmatrix} a_{11} & 0 \\ a_{21} & 1 \end{pmatrix} = \begin{pmatrix} v_1 \cdot \cos\phi_1 & 0 \\ v_1 \cdot \sin\phi_1 & 1 \end{pmatrix} = \begin{pmatrix} \dfrac{z_1}{e} & 0 \\ \dfrac{z_1}{e} \cdot \tan\phi_1 & 1 \end{pmatrix}$, avec une direction de déplacement $\varnothing_1$ présélectionnée.

**13.** Système de représentation selon l'une au moins des revendications 1 à 12, **caractérisé en ce que** les limites de cellule dans l'image à motif ne sont pas décalées en fonction de l'emplacement, à savoir que le vecteur $(d_1(x, y), d_2(x, y))$ apparaissant dans la fonction d'image m $(x, y)$ est donc constant, ou bien en ce que les limites de cellule dans l'image à motif sont décalées en fonction de l'emplacement, de préférence **en ce que** l'image à motif présente deux ou davantage de zones partielles avec une grille de cellules différente respectivement constante.

**14.** Système de représentation selon l'une au moins des revendications 1 à 13, **caractérisé en ce que** la position relative du centre des éléments d'observation à l'intérieur des cellules de l'image à motif est indépendante de l'emplacement, à savoir que le vecteur $(c_1(x, y), c_2(x, y))$ est donc constant, ou bien **en ce que** la position relative du centre des éléments d'observation à l'intérieur des cellules de l'image à motif est dépendante de l'emplacement.

**15.** Système de représentation pour papiers de sécurité, documents de valeur, dispositifs électroniques d'affichage ou autres supports de données, avec un système d'image tramée pour la représentation d'une pluralité d'images de consigne planes, lesquelles sont données par des fonctions d'image $f_i(x, y)$, i = 1,2,... n avec n $\geq$ 1, lesquelles indiquent respectivement une propriété d'image pour l'image de consigne $f_i$, telle une répartition de la luminosité, une répartition des couleurs, une répartition binaire ou une autre propriété d'image telle une transparence, une réflectivité, une densité ou similaire, avec

- une image à motif, laquelle est subdivisée en une pluralité de cellules dans lesquelles sont disposées des zones respectivement représentées des images de consigne,
- une grille d'observation en une pluralité d'éléments d'observation pour la reconstruction des images de consigne lors de l'observation de l'image à motif à l'aide de la grille d'observation,
- dans lequel l'image à motif présente, avec sa subdivision en une pluralité de cellules, une fonction d'image m (x, y) qui est donnée par

$$m(x,y) = F(h_1, h_2, \ldots, h_n),$$

avec les fonctions descriptives

$$h_i(x,y) = f_i\left(\binom{x}{y} + (A_i(x,y) - I)\cdot\left(\left(\left(\binom{x}{y} + w_{di}(x,y)\right)\bmod W\right) - w_{di}(x,y) - w_{ci}(x,y)\right)\right)\cdot g_i(x,y)$$

avec $w_{di}(x,y) = W\cdot\begin{pmatrix} d_{i1}(x,y) \\ d_{i2}(x,y) \end{pmatrix}$ et $w_{ci}(x,y) = W\cdot\begin{pmatrix} c_{i1}(x,y) \\ c_{i2}(x,y) \end{pmatrix}$,

- dans lequel $F(h_1, h_2, \ldots h_n)$ est une fonction maître qui indique une combinaison des n fonctions descriptives $h_i(x, y)$,

- la cellule unitaire de la grille d'observation étant décrite par des vecteurs de cellules de grille $W1 = \begin{pmatrix} w_{11} \\ w_{21} \end{pmatrix}$

et $W2 = \begin{pmatrix} w_{12} \\ w_{22} \end{pmatrix}$ et étant résumée dans la matrice $W = \begin{pmatrix} w_{11} & w_{12} \\ w_{21} & w_{22} \end{pmatrix}$,

- les matrices $A_i(x,y) = \begin{pmatrix} a_{i11}(x,y) & a_{i12}(x,y) \\ a_{i21}(x,y) & a_{i22}(x,y) \end{pmatrix}$ décrivant respectivement un comportement souhaité d'agrandissement et de mouvement pour l'image de consigne $f_i$,

- les vecteurs $(c_{i1}(x, y), c_{i2}(x, y))$ avec $0 \le c_{i1}(x, y), c_{i2}(x, y) < 1$ pour l'image de consigne $f_i$ indiquant respectivement la position relative du centre des éléments d'observation à l'intérieur des cellules i de l'image à motif,

- les vecteurs $(d_{i1}(x, y), d_{i2}(x, y))$ avec $0 \le d_{i1}(x, y), d_{i2}(x, y) < 1$ représentant respectivement un décalage dépendant de l'emplacement des limites de cellule dans l'image à motif,

- $g_i(x, y)$ étant des fonctions de masque pour le réglage de la visibilité de l'image de consigne $f_i$, lesquelles sont identiques à 1 ou lesquelles subdivisent la surface se trouvant sous un élément d'observation en zones partielles et la prolongent périodiquement de sorte qu'un pavage est obtenu, et

- dans lequel au moins l'une des images de consigne représentées ne présente aucune périodicité, ou bien présente une périodicité qui est décrite par une matrice 2x2 P, dans lequel la cellule unitaire de périodicité est différente de (A-I) W.

16. Système de représentation selon la revendication 15, **caractérisé en ce qu'**au moins l'une des fonctions descriptives $h_i(x, y)$ est réalisée comme indiqué dans les revendications 1 à 14 pour la fonction d'image m (x, y).

17. Système de représentation selon la revendication 15 ou 16, **caractérisé en ce que** le système d'image tramée représente une image changeante, une image animée ou une image de morphing, et/ou **en ce que** les fonctions de masque $g_i$ fixent un changement à la manière de bandes ou à la manière d'un échiquier de la visibilité des images de consigne $f_i$.

18. Système de représentation selon l'une au moins des revendications 15 à 17, **caractérisé en ce que** la fonction maître F représente la fonction de somme.

19. Système de représentation selon l'une au moins des revendications 15 à 18, **caractérisé en ce que** deux ou davantage d'images de consigne $f_i$ sont visibles simultanément, en particulier **en ce que** la fonction maître F représente la fonction de somme, la fonction maximum ou une combinaison OU, une combinaison XOR ou une autre combinaison logique.

20. Système de représentation selon la revendication 19, **caractérisé en ce que** n objets de consigne $f_j(x, y)$, j = 1,... n sont prescrits, lesquels se situent respectivement à une profondeur apparente $z_j$ avec $z_j > z_{j-i}$, et **en ce que** l'on sélectionne, en guise de fonction maître F, une fonction minimum modifiée grâce à laquelle, dans le cas où les

fonctions descriptives $h_j$ sont différentes de zéro pour plusieurs j à un emplacement (x, y), le plus petit j est sélectionné.

21. Système de représentation selon l'une au moins des revendications 15 à 20, **caractérisé en ce que** la grille d'observation et l'image à motif sont reliées ensemble de manière serrée pour former un élément de sécurité avec une grille d'observation et une image à motif disposées à distance l'une au-dessus de l'autre, ou bien **en ce que** la grille d'observation et l'image à motif sont disposées à différents emplacements d'un support de données d'une manière telle, que la grille d'observation et l'image à motif peuvent être disposées l'une au-dessus de l'autre pour l'auto-authentification et forment un élément de sécurité à l'état de disposition l'une au-dessus de l'autre, en particulier **en ce que** la grille d'observation et l'image à motif peuvent être disposées l'une au-dessus de l'autre en courbant, pliant, recourbant ou rabattant le support de données, ou bien **en ce que** l'image à motif est affichée par un dispositif électronique d'affichage et **en ce que** la grille d'observation est reliée de manière serrée au dispositif électronique d'affichage pour l'observation de l'image à motif affichée, ou bien **en ce que** l'image à motif est affichée par un dispositif électronique d'affichage et **en ce que** la grille d'observation, en tant que grille d'observation séparée, peut être mise sur ou devant le dispositif électronique d'affichage pour l'observation de l'image à motif affichée.

22. Système de représentation selon l'une au moins des revendications 1 à 21, **caractérisé en ce que** les contenus d'image de cellules individuelles de l'image à motif sont permutés entre eux d'après la détermination de la fonction d'image m (x, y).

23. Procédé pour la fabrication d'un système de représentation selon l'une au moins des revendications 1 à 14 ou 22, dans lequel, à partir d'une image de consigne plane, laquelle est donnée par une fonction d'image f(x, y) qui indique une propriété de l'image de consigne telle une répartition de la luminosité, une répartition des couleurs, une répartition binaire ou une autre propriété d'image telle une transparence, une réflectivité, une densité ou similaire, on calcule une image à motif qui est subdivisée en une pluralité de cellules dans lesquelles sont disposées des zones respectivement représentées de l'image de consigne,

- dans lequel l'image à motif, avec sa subdivision en une pluralité de cellules, présente une fonction d'image m(x, y) qui est calculée par

$$m(x, y) = f\left(\begin{pmatrix} x \\ y \end{pmatrix} + (A(x, y) - I) \cdot \left(\left(\left(\begin{pmatrix} x \\ y \end{pmatrix} + w_d(x, y)\right) \bmod W\right) - w_d(x, y) - w_c(x, y)\right)\right) \cdot g(x, y)$$

avec $w_d(x, y) = W \cdot \begin{pmatrix} d_1(x, y) \\ d_2(x, y) \end{pmatrix}$ et $w_c(x, y) = W \cdot \begin{pmatrix} c_1(x, y) \\ c_2(x, y) \end{pmatrix}$ de sorte que l'image de consigne est reconstruite lors de l'observation de l'image à motif à l'aide de la grille d'observation,
- dans lequel la cellule unitaire de la grille d'observation est décrite par des vecteurs de cellules de grille

$w_1 = \begin{pmatrix} w_{11} \\ w_{21} \end{pmatrix}$ et $w_2 = \begin{pmatrix} w_{12} \\ w_{22} \end{pmatrix}$ et est résumée dans la matrice $W = \begin{pmatrix} w_{11} & w_{12} \\ w_{21} & w_{22} \end{pmatrix}$,

- la matrice $A(x, y) = \begin{pmatrix} a_{11}(x, y) & a_{12}(x, y) \\ a_{21}(x, y) & a_{22}(x, y) \end{pmatrix}$ décrivant un comportement souhaité d'agrandissement et de mouvement de l'image de consigne représentée lors du basculement de l'élément de sécurité,
- le vecteur $(c_1(x, y), c_2(x, y))$ avec $0 \leq c_1(x, y), c_2(x, y) < 1$ indiquant la position relative du centre des éléments d'observation à l'intérieur des cellules de l'image à motif,
- le vecteur $(d_1(x, y), d_2(x, y))$ avec $0 \leq d_1(x, y), d_2(x, y) < 1$ représentant un décalage dépendant de l'emplacement des limites de cellule dans l'image à motif,
- g(x, y) étant une fonction de masque pour le réglage de la visibilité de l'image de consigne, laquelle est identique à 1 ou est nulle dans des zones partielles, en particulier dans des zones du bord des cellules de l'image à motif, et décrit ainsi une limitation angulaire lors de l'observation de l'image de consigne, et
- dans lequel l'image de consigne ne présente pas de périodicité, ou bien présente une périodicité qui est décrite par une matrice 2x2 P, dans lequel la cellule unitaire de périodicité est différente de (A-I) W.

24. Procédé pour la fabrication d'un système de représentation selon l'une au moins des revendications 15 à 22, dans lequel, à partir d'une pluralité d'images de consigne planes, lesquelles sont données par des fonctions d'image $f_i(x, y)$, i = 1, 2,...n avec n ≥ 1 qui indiquent respectivement une propriété d'image pour l'image de consigne $f_i$ telle une répartition de la luminosité, une répartition des couleurs, une répartition binaire ou une autre propriété d'image telle une transparence, une réflectivité, une densité ou similaire, on calcule une image à motif qui est subdivisée en une pluralité de cellules dans lesquelles sont disposées des zones respectivement représentées de l'image de consigne,

- dans lequel l'image à motif, avec sa subdivision en une pluralité de cellules, présente une fonction d'image $m(x, y)$ qui est calculée par $m(x,y)=F(h_1,h_2,...h_n)$ avec les fonctions descriptives

$$h_i(x,y) = f_i\left[\begin{pmatrix} x \\ y \end{pmatrix} + (A_i(x,y)-I)\cdot\left(\left(\left(\begin{pmatrix} x \\ y \end{pmatrix} + w_{di}(x,y)\right)\bmod W\right) - w_{di}(x,y) - w_{ci}(x,y)\right)\right]\cdot g_i(x,y)$$

avec $w_{di}(x,y) = W\cdot\begin{pmatrix} d_{i1}(x,y) \\ d_{i2}(x,y) \end{pmatrix}$ et $w_{ci}(x,y) = W\cdot\begin{pmatrix} c_{i1}(x,y) \\ c_{i2}(x,y) \end{pmatrix}$, de sorte que l'image de consigne est reconstruite lors de l'observation de l'image à motif à l'aide de la grille d'observation,
- dans lequel $F(h_1,h_2,...h_n)$ est une fonction maître qui indique une combinaison des n fonctions descriptives $h_i(x, y)$,

- la cellule unitaire de la grille d'observation étant décrite par des vecteurs de cellules de grille $w_1 = \begin{pmatrix} w_{11} \\ w_{21} \end{pmatrix}$

et $w_2 = \begin{pmatrix} w_{12} \\ w_{22} \end{pmatrix}$ et étant résumée dans la matrice $W = \begin{pmatrix} w_{11} & w_{12} \\ w_{21} & w_{22} \end{pmatrix}$ ;

- les matrices $A_i(x,y) = \begin{pmatrix} a_{i11}(x,y) & a_{i12}(x,y) \\ a_{i21}(x,y) & a_{i22}(x,y) \end{pmatrix}$ décrivant respectivement un comportement souhaité d'agrandissement et de mouvement pour l'image de consigne $f_i$,
- les vecteurs $(c_{i1}(x, y), c_{i2}(x, y))$ avec $0 \le c_{i1}(x, y), c_{i2}(x, y) < 1$ pour l'image de consigne $f_i$ indiquant respectivement la position relative du centre des éléments d'observation à l'intérieur des cellules i de l'image à motif,
- les vecteurs $(d_{i1}(x, y), d_{i2}(x, y))$ avec $0 \le d_{i1}(x, y), d_{i2}(x, y) < 1$ représentant respectivement un décalage en fonction de l'emplacement des limites de cellule dans l'image à motif,
- $g_i(x, y)$ étant des fonctions de masque pour le réglage de la visibilité de l'image de consigne $f_i$, lesquelles sont identiques à 1 ou bien lesquelles subdivisent en zones partielles la surface se trouvant sous un élément d'observation et la prolongent périodiquement de sorte à obtenir un pavage,
- dans lequel au moins l'une des images de consigne ne présente aucune périodicité, ou bien présente une périodicité qui est décrite par une matrice 2x2 P, dans lequel la cellule unitaire de périodicité est différente de (A-I) W.

**25.** Papier de sécurité pour la fabrication de documents de sécurité ou de valeur tels des billets de banque, des chèques, des cartes d'identité, des actes ou similaires, avec un système de représentation selon l'une au moins des revendications 1 à 22.

**26.** Support de données, en particulier article de marque, document de valeur, article décoratif ou similaire, avec un système de représentation selon l'une au moins des revendications 1 à 22, dans lequel la grille d'observation et/ou l'image à motif du système de représentation est en particulier disposée dans une zone de fenêtre du support de données.

**27.** Système électronique d'affichage avec un dispositif électronique d'affichage, en particulier un écran d'ordinateur ou de poste de télévision, un dispositif de commande et un système de représentation selon l'une au moins des revendications 1 à 22, dans lequel le dispositif de commande est étudié et réalisé pour afficher l'image à motif du système de représentation sur le dispositif électronique d'affichage.

10

12

16

100

14

**Fig. 1**

16

22

20

26

24    28

**Fig. 2**

Fig. 3

Fig. 4a

Fig. 4b

Fig. 4c

Fig. 5a

Fig. 5b

Fig. 6a

Fig. 6b

71-A   72-A   73-A  74-A  75-A

LOUIS

70

Fig. 7a

75-B

73-B

71-B   76   74-B

72-B

Fig. 7b

~80

~82

Fig. 8a          Fig. 8b

~84

Fig. 8c

EP 2 164 712 B1

BANK
NOTE
BANK

—90

Fig. 9a

—92

Fig. 9b

55

Fig. 10a

Fig. 10b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0330733 A1
- EP 0064067 A1
- US 5712731 A
- WO 2007076952 A2
- WO 2005052650 A2
- DE 102005028162 A1
- WO 200800350 A1
- DE 102007062089

**In der Beschreibung aufgeführte Nicht-Patentliteratur**

- **M.C. HUTLEY ; R. HUNT ; R.F. STEVENS ; P. SA-VANDER.** The moiré magnifier. *Pure Appl. Opt.,* 1994, vol. 3, 133-142